# EUROPÄISCHE PATENTSCHRIFT

(11) **EP 4 201 617 B1**
(45) Veröffentlichungstag und Bekanntmachung des Hinweises auf die Patenterteilung: **22.04.2026**
(21) Anmeldenummer: 22209949.1
(22) Anmeldetag: 28.11.2022
(51) Int. Cl.: B26D 7/32, B65G 57/00, B65G 47/52, B65G 47/26, B26D 7/30, B26D 5/00, B65G 57/06, B65G 47/64

(54) **SYSTEM ZUM VERARBEITEN VON LEBENSMITTELPRODUKTEN**
FOOD PRODUCT PROCESSING SYSTEM
SYSTÈME DE TRAITEMENT DE PRODUITS ALIMENTAIRES

(30) Priorität: 21.12.2021 DE 102021134049
(43) Veröffentlichungstag der Anmeldung: 28.06.2023
(60) Teilanmeldung: 26152604.0
(73) Patentinhaber: Weber Food Technology SE & Co. KG, 35236 Breidenbach (DE)
(72) Erfinder: SCHÄFER, Marvin, Biedenkopf (DE); SCHNEIDER, Thorsten, Weimar (DE); KNAUF, Michael, Amöneburg (DE); NOLTE, Julian, Leun-Biskirchen (DE)
(74) Vertreter: Manitz Finsterwald Patent- und Rechtsanwaltspartnerschaft mbB

(56) Entgegenhaltungen:
- EP-A1- 3 770 566
- US-A- 3 824 885
- US-A- 4 405 186

## Beschreibung

Die Erfindung betrifft ein System zum Verarbeiten von Lebensmittelprodukten, insbesondere Fleischprodukten, Wurst, Käse, Schinken und/oder Bacon, welches eine Aufschneidevorrichtung umfasst, die insbesondere als Hochleistungsslicer ausgebildet sein kann. Die Aufschneidevorrichtung umfasst einen Portionierabschnitt und ein in einer Schneidebene bewegbares Messer, insbesondere ein in der Schneidebene umlaufendes Kreismesser oder ein in der Schneidebene umlaufendes Sichelmesser, und ist dazu ausgebildet, Scheiben von in die Schneidebene geführten riegelförmigen Lebensmittelprodukten abzutrennen und in dem Portionierabschnitt Teilportionen zu bilden, welche eine oder mehrere abgetrennte Scheiben umfassen. Ferner umfasst das System eine Stapelvorrichtung, welche zumindest eine zwischen einer Zuführstellung und einer Ablegestellung bewegbare Produktauflage sowie einen unterhalb der Produktauflage angeordneten Stapelabschnitt aufweist. Die Stapelvorrichtung ist dazu ausgebildet, auf die Produktauflage bewegte Teilportionen durch Bewegen der Produktauflage aus der Zuführstellung in die Ablegestellung auf dem Stapelabschnitt abzulegen und auf dem Stapelabschnitt eine mehrere Teilportionen umfassende Lebensmittelportion zu bilden, insbesondere durch Aufeinanderstapeln mehrerer, nacheinander auf die Produktauflage bewegter Teilportionen.

Beispielsweise ist eine Stapelvorrichtung zum Stapeln von Scheiben eines Lebensmittelprodukts aus US 4 405 186 A bekannt. Diese Stapelvorrichtung ist dazu vorgesehen, von einem Lebensmittelprodukt abgetrennte Scheiben unmittelbar auf einem Stack Support aufzunehmen und auf dem Stack Support eine Portion aus mehreren Scheiben zu bilden. Nach dem Vervollständigen einer Portion soll der Stack Support abgesenkt werden, um die Portion auf als Vanes bezeichneten Elementen einer Waage abzulegen. Die Elemente sind mit einer Load Cell verbunden, welche wiederum in einem Load Cell Housing angeordnet ist. Das Load Cell Housing ist ferner über ein Gewicht an einem Rahmen abgestützt, so dass nach dem Ablegen einer Portion auf den Elementen der Waage das Portionsgewicht bestimmt werden kann. Da die Portionen bei diesem Stand der Technik unmittelbar auf dem Stack Support der Stapelvorrichtung gebildet werden, ist kein gesondertes Bilden der Portionen an einem Portionierabschnitt einer Aufschneidevorrichtung vorgesehen und die Portionen werden nicht erst von einem solchen Portionierabschnitt auf eine Produktauflage der Stapelvorrichtung gebracht.

Bei der Verarbeitung von Lebensmittelprodukten ist es häufig vorgesehen, riegelförmige Lebensmittelprodukte in Scheiben zu schneiden und Portionen zu bilden, die eine oder mehrere der abgetrennten Scheiben umfassen, um die Lebensmittelprodukte derart portioniert zum Verkauf anzubieten. Ein hoher Produktdurchsatz kann dabei insbesondere durch die Verwendung von Hochleistungsslicern erreicht werden, die eine Schnittgeschwindigkeit von bis zu 2.000 Schnitten pro Minute erreichen können. Um die Portionen zu bilden, können solche Aufschneidevorrichtungen einen Portionierabschnitt aufweisen, auf welchen die abgetrennten Scheiben fallen und auf welchem die Scheiben gesammelt werden können, bis eine für eine Portionierung vorgesehene Anzahl von Scheiben zusammengestellt wurde. Dabei kann der Portionierabschnitt gegebenenfalls bewegbar sein, um die Scheiben einander überlappend und/oder geschindelt ablegen zu können, wobei auch ein direktes Aufeinanderstapeln der Scheiben vorgesehen sein kann. Die fertiggestellten, mehrere Scheiben umfassenden Portionen können von dem Portionierabschnitt weiteren Verarbeitungsschritten zugeführt und insbesondere verpackt werden, so dass das Lebensmittelprodukt letztlich portionsweise abgepackt verkauft werden kann. Während es insbesondere bei einem Verkauf der Produkte an den Endverbraucher vorgesehen sein kann, die von der Aufschneidevorrichtung portionierten Scheiben unmittelbar als eine Portion zu verpacken und derart zum Verkauf anzubieten, kann insbesondere bei Großabnehmern, etwa der Gastronomie oder der Hotellerie, ein Bedarf an größeren Lebensmittelportionen bestehen, die nicht mehr unmittelbar an dem Portionierabschnitt der Aufschneidevorrichtung gebildet werden können. Um solch große Lebensmittelportionen dennoch möglichst automatisiert mittels eines Systems zum Verarbeiten von Lebensmittelportionen bilden zu können, kann es vorgesehen sein, an dem Portionierabschnitt der Aufschneidevorrichtung lediglich Teilportionen zu bilden und mehrere dieser Teilportionen in folgenden Verarbeitungsschritten zu einer gemeinsamen Lebensmittelportion zusammenzufügen.

Hierzu kann bei einem System zum Verarbeiten von Lebensmittelprodukten eine Stapelvorrichtung vorgesehen sein, zu welcher die von der Aufschneidevorrichtung erzeugten Teilportionen geführt und mittels derer die empfangenen Teilportionen nacheinander auf einem Stapelabschnitt abgelegt werden können, um auf dem Stapelabschnitt eine mehrere von der Aufschneidevorrichtung erzeugte Teilportionen umfassende und letztlich für den Verkauf vorgesehene Lebensmittelportion zu bilden. Die Stapelvorrichtung kann dazu eine Produktauflage aufweisen, auf welche die Teilportionen geführt werden können, um die Teilportionen durch Bewegen der Produktauflage in eine Ablegestellung auf dem Stapelabschnitt abzulegen und insbesondere aufeinander zu stapeln. Nach dem Ablegen einer vorgesehenen Anzahl von Teilportionen kann die fertiggestellte Lebensmittelportion aus dem Stapelabschnitt abtransportiert und beispielsweise verpackt werden, so dass die Lebensmittelprodukte mittels eines solchen Systems auch zu großen, mehrere Teilportionen umfassenden Lebensmittelportionen verarbeitet werden können.

Um möglichst gleichmäßige Lebensmittelportionen zu erzeugen, kann für jede Teilportion eine vorbestimmte Anzahl von Scheiben vorgesehen sein und die Scheiben können mit einer vorgegebenen Dicke abgetrennt werden. Insbesondere bei der Verarbeitung von Naturprodukten kann es jedoch über die Länge eines Produkts zu Veränderungen der Zusammensetzung des Produktes kommen, indem beispielsweise ein Fettanteil oder die Maße eines zu verarbeitenden Fleischstücks über die Länge des Produkts variieren können. Dies kann jedoch dazu führen, dass auch das Gewicht der abgetrennten Scheiben variiert, obwohl diese mit gleichbleibender Dicke abgetrennt werden, so dass auch das Gewicht der Teilportionen und das Gewicht der aus den Teilportionen gebildeten Lebensmittelportionen ungewünschten Schwankungen unterliegen kann. Insbesondere, wenn bei der Verarbeitung Lebensmittelportionen eines klar vorgegebenen Gewichts erzeugt werden sollen, sind daher häufig nachträgliche Kontrollen und gegebenenfalls ein manuelles Hinzufügen oder ein Entnehmen von Scheiben erforderlich.

Dieses Problem besteht insbesondere bei der Verarbeitung der Produkte zu Lebensmittelportionen, die mehrere Teilportionen umfassen. Um beim Erstellen solcher Lebensmittelportionen trotz des im Vergleich zu dem unmittelbaren Erzeugen von verhältnismäßig kleinen Portionen an der Aufschneidevorrichtung zusätzlichen Schritts des Stapelns der Teilportionen einen angemessenen Portionsdurchsatz erreichen zu können, müssen die Teilportionen möglichst unmittelbar aufeinanderfolgend erzeugt werden. Dies führt jedoch dazu, dass aufeinanderfolgende Teilportionen einen sehr geringen Abstand zueinander aufweisen, so dass die fertiggestellten Teilportionen nicht mit einem ausreichenden Abstand zueinander über eine sogenannte Slicer-Kontrollwaage der Aufschneidevorrichtung gefahren werden können, um das Gewicht einzelner Teilportionen bestimmen zu können. Daher ist es erforderlich, das Gewicht der Lebensmittelportionen in einem gesonderten Schritt zu bestimmen und manuelle Korrekturen vorzunehmen, ohne dass beispielsweise dynamische Anpassungen des Aufschneidevorgangs möglich sind, um ein gleichmäßiges und automatisches Bilden der Teilportionen und der Lebensmittelportionen mit einem vorgegebenen Gewicht zu erreichen.

Es ist daher eine Aufgabe der Erfindung, bei einem System zum Verarbeiten von Lebensmittelprodukten, mittels dessen große, mehrere von einer Aufschneidevorrichtung gebildete Teilportionen umfassende Lebensmittelportionen erstellt werden können, eine Überprüfung des Gewichts der Teilportionen und/oder der Lebensmittelportionen und damit eine verbesserte Prozessteuerung zu ermöglichen.

Diese Aufgabe wird gelöst durch ein System mit den Merkmalen des unabhängigen Anspruchs 1.

Das System umfasst eine sich an dem Portionierabschnitt anschließende Transporteinrichtung und der Portionierabschnitt umfasst eine Fördereinrichtung, welche dazu ausgebildet ist, die Teilportionen an die Transporteinrichtung zu übergeben. Die Transporteinrichtung ist dazu ausgebildet, die von der Fördereinrichtung empfangenen Teilportionen auf die Produktauflage der Stapelvorrichtung zu transportieren. Ferner ist bei dem System vorgesehen, dass die Transporteinrichtung und/oder die Stapelvorrichtung eine Waage zum Messen des Gewichts der Teilportionen und/oder der Lebensmittelportion aufweisen bzw. aufweist.

Die Transporteinrichtung schließt sich somit bezüglich einer Förderrichtung, entlang welcher die Teilportionen von dem Portionierabschnitt zu der Stapelvorrichtung bewegt werden, an den Portionierabschnitt an. Die Transporteinrichtung und der Portionierabschnitt stellen somit im Sinne der vorliegenden Offenbarung insofern getrennte Einheiten dar, als der Portionierabschnitt, auf welchen die abgetrennten Scheiben fallen können, als Teil der Aufschneidevorrichtung verstanden wird, wohingegen Abschnitte, auf welchen die Teilportionen in der Folge zwischen dem Portionierabschnitt und der Stapelvorrichtung bewegt werden, als Teil der Transporteinrichtung verstanden werden. Der Portionierabschnitt kann eine Fördereinrichtung umfassen, um die gesammelten Scheiben an einen folgenden Abschnitt zu übergeben, welcher der Transporteinrichtung zugeordnet ist. Beispielsweise kann der Portionierabschnitt dazu ein endlos umlaufendes Förderband umfassen, auf welchem die Teilportionen gebildet und die von der Aufschneidevorrichtung abgetrennten Scheiben abgelegt werden können. Insbesondere kann ein solches Förderband auch während des Bildens der Teilportionen bewegbar sein, um die Scheiben beispielsweise geschindelt aufeinander abzulegen. Von diesem Förderband können die Teilportionen insbesondere an ein weiteres Förderband übergeben werden, welches der Transporteinrichtung zugeordnet ist, so dass der Übergang zwischen der Fördereinrichtung und der Transporteinrichtung insbesondere durch ein Bandübergang zwischen einem Förderband, auf welches die abgetrennten Scheiben fallen, und einem nachfolgenden Förderband gebildet sein kann.

Auch die Transporteinrichtung kann beispielsweise ein oder mehrere Förderbänder umfassen, um die von der Fördereinrichtung des Portionierabschnitts und/oder einem Förderband, auf welchem die abgetrennten Scheiben abgelegt werden, übernommenen Teilportionen an die Stapelvorrichtung zu transportieren und auf die Produktauflage der Stapelvorrichtung zu bewegen. Grundsätzlich ist es dabei möglich, dass die Fördereinrichtung des Portionierabschnitts und die Transporteinrichtung einen gemeinsamen Antrieb oder getrennte Antriebe aufweisen, so dass der Portionierabschnitt und dessen Fördereinrichtung einerseits und die Transporteinrichtung andererseits insbesondere dadurch unterschieden sind, dass die Scheiben auf dem Portionierabschnitt abgelegt und die Teilportionen gebildet werden, wohingegen die Transporteinrichtung die vollständigen Teilportionen übernimmt und zu der Stapelvorrichtung bewegt. Dies schließt jedoch nicht aus, dass insbesondere bei langen Teilportionen ein vorderer Abschnitt der Teilportion bereits auf einen ersten Abschnitt der Transporteinrichtung bewegt wird, während noch Scheiben zu der Teilportion hinzugefügt werden.

Indem die Waage an der Stapelvorrichtung und/oder der Transporteinrichtung angeordnet ist, ist die Waage dem Portionierabschnitt somit bezüglich der Förderrichtung nachgelagert angeordnet, so dass das Wiegen erst in einem Abschnitt erfolgt, in welchem die Teilportionen bereits vollständig vorliegen. Das Gewicht kann somit in einem Abschnitt bestimmt werden, in welchem insbesondere nicht mit hoher Geschwindigkeit Scheiben hinzugefügt werden, durch welche sich das aufliegende Gewicht ändert und durch welche mit hoher Frequenz Ausschläge bei einer Messung des Gewichts generiert werden, die eine präzise Messung erschweren. Insofern wäre ein Messen des Gewichts der Teilportionen an dem Portionierabschnitt allenfalls nach einer gewissen Wartezeit zum Ausschwingen des Systems möglich, die jedoch angesichts des erforderlichen Produktdurchsatzes nicht zur Verfügung steht. Durch das Bereitstellen einer nachgelagerten Waage können die Teilportionen hingegen unmittelbar und ohne Wartezeit mittels der Fördereinrichtung an die Transporteinrichtung übergeben werden, um das Gewicht erst nachgelagert und unter konstanteren Bedingungen zu bestimmen.

Zudem können die in geringem Abstand aufeinanderfolgend an der Aufschneidevorrichtung erzeugten Teilportionen mittels der Transporteinrichtung beispielsweise entzerrt und deren Abstand zueinander vergrößert werden, so dass nach diesem Entzerren die zum Messen des Gewichts der Teilportionen zur Verfügung stehende Zeit weiter und/oder auf ein ausreichendes Maß erhöht sein kann. Dies kann beispielsweise durch gezieltes abschnittsweises Beschleunigen und/oder Abbremsen der Teilportionen erfolgen oder die Transporteinrichtung kann dazu ausgebildet sein, Teilportionen über verschiedene Transportstrecken zu der Stapelvorrichtung zu führen, so dass der Abstand zwischen an den Transportstrecken aufeinanderfolgenden Teilportionen gegenüber dem Abstand der Teilportionen bei der Übergabe von dem Portionierabschnitt an die Transporteinrichtung vergrößert sein kann. Solche Transportstrecken können beispielsweise auch als Pufferstrecken vorgesehen sein, um die Teilportionen wiegen, danach jedoch wieder zusammenfügen und das Stapeln der Teilportionen mit dem durch die Aufschneidevorrichtung vorgegeben Takt und in geringem Abstand zueinander durchführen zu können. Um auch das Gewicht der Lebensmittelportion bestimmen zu können, können die unmittelbar gemessenen Gewichte der Teilportionen beispielsweise gespeichert und/oder addiert werden.

Es kann beispielsweise vorgesehen sein, dass die Transporteinrichtung eine Verteileinrichtung umfasst, um die Teilportionen auf verschiedene Transportstrecken zu verteilen. Die einzelnen Transportstrecken können zunächst auseinander und daraufhin zu der Stapelvorrichtung führen, so dass die von der Fördereinrichtung empfangenen Teilportionen mittels der Verteileinrichtung insbesondere auf mehrere Transportstrecken verteilt, jedoch letztlich sämtlich zu der Stapelvorrichtung geführt werden können. Durch ein solches Aufteilen kann der Abstand der Teilportionen zueinander auf den Transportstrecken im Vergleich zu dem Abstand der von der Fördereinrichtung übernommenen Teilportionen insbesondere vergrößert werden, so dass ein Wiegen der Teilportionen an den Transportstrecken ermöglicht werden kann. Dazu kann insbesondere eine jeweilige Waage an den Transportstrecken zwischen der Verteileinrichtung und der Stapelvorrichtung angeordnet sein. Beispielsweise kann es vorgesehen sein, die Teilportionen mittels einer Verteileinrichtung auf zwei, drei oder vier Transportstrecken zu verteilen, um die Teilportionen zu entzerren und ein Wiegen an den Transportstrecken zu ermöglichen. Die Verteileinrichtung kann beispielsweise als eine Wippe ausgebildet sein, so dass die Transportstrecken insbesondere übereinander verlaufen können. Die Verteileinrichtung kann dazu insbesondere um eine horizontale Achse schwenkbar sein. Alternativ dazu können die Transportstrecken beispielsweise seitlich zuein-ander versetzt verlaufen und die Verteileinrichtung kann dazu ausgebildet sein, die Teilportionen seitlich zu verteilen.

Ferner kann es vorgesehen sein, dass die Verteileinrichtung dazu ausgebildet ist, fehlerhafte Portionen auszusortieren. Beispielsweise können fehlerhafte Teilportionen durch eine optische Kontrolle identifizierbar sein und etwa fehlerhaft geschnittene Scheiben umfassen. Insbesondere eine als Wippe ausgebildete Verteileinrichtung kann dazu ausgebildet sein, eine fehlerhafte Teilportion durch Absenken in einen Ausschussbereich, beispielsweise einen unterhalb der Wippe angeordnete Ausschussbehälter, auszusortieren. Die Waage kann folglich insbesondere bezüglich einer Förderrichtung, entlang welcher die Teilportionen zu der Stapelvorrichtung transportiert werden, hinter einer solchen, zum Aussortieren fehlerhafter Teilportionen ausgebildeten Verteileinrichtung angeordnet sein.

Ferner kann es, alternativ oder zusätzlich zu einem Wiegen an der Transporteinrichtung, auch vorgesehen sein, das Gewicht der Teilportionen und/oder der Lebensmittelportion mittels der Waage an der Stapelvorrichtung zu messen, an welche die Teilportionen sukzessive übergeben werden. Beispielsweise werden die Teilportionen nacheinander auf die Produktauflage der Stapelvorrichtung bewegt und liegen dort kontrolliert und einzeln auf, bevor die Teilportionen abgelegt werden, so dass an der Produktauflage das Gewicht einer Teilportion bestimmt werden kann. Ferner liegen die Teilportionen nach dem Ablegen vollständig auf dem Stapelabschnitt auf, so dass auch dort eine Gewichtsbestimmung erfolgen kann. Insbesondere kann dazu das auf dem Stapelabschnitt aufliegende Gesamtgewicht bestimmt werden, so dass das Gewicht einer jeweiligen zuletzt abgelegten Teilportion als Änderung dieses Gesamtgewichts bestimmt werden kann. Auch hierbei kann zwar ein Ausschlagen der Waage nach dem Ablegen einer Teilportion erfolgen, jedoch ist die Zeit zwischen aufeinanderfolgend abgelegten Teilportionen größer als die Zeit zwischen aufeinanderfolgend an dem Portionierabschnitt abgelegter Scheiben, so dass ausreichend Zeit für die Messung zur Verfügung stehen kann. Zudem kann bei einem Wiegen an dem Stapelabschnitt auch das Gesamtgewicht der Lebensmittelportion direkt gemessen werden, wobei auch ausschließlich das auf dem Stapelabschnitt aufliegende Gesamtgewicht als das Gewicht der sich bildenden Lebensmittelportion bestimmt und/oder ausgewertet werden kann.

Grundsätzlich kann an der Stapelvorrichtung und/oder der Transporteinrichtung das Gewicht jeder Teilportion bestimmt werden, wobei das Gewicht der Lebensmittelportion durch Addieren des Gewichts der zugehörigen Teilportionen und/oder unmittelbares Messen an dem Stapelabschnitt ermittelt werden kann. Es kann jedoch auch vorgesehen sein, dass ausschließlich das Gewicht der vollständigen Lebensmittelportion an dem Stapelabschnitt mittels einer dort angeordneten Waage bestimmt und/oder für etwaige Prozessanpassungen berücksichtigt wird.

Indem es diese dem Portionierabschnitt nachgelagerte Anordnung der Waage ermöglicht, das Gewicht von Teilportionen und/oder Lebensmittelportionen auch bei der Erstellung großer Lebensmittelportionen zu bestimmen, kann dieses Gewicht insbesondere auch bei der Steuerung des Systems genutzt werden. Beispielsweise kann durch das Überprüfen des Gewichts der Teilportionen und/oder der Lebensmittelportion festgestellt werden, wenn aktuelle Einstellungen der Aufschneidevorrichtung ein zu geringes oder ein zu hohes Gewicht der Teilportionen zur Folge haben, so dass letztlich auch die gebildeten Lebensmittelportionen nicht das korrekte Gewicht aufweisen. Diese Information kann insbesondere dazu genutzt werden, eine momentan gebildete Lebensmittelportion und/oder das Bilden einer nachfolgenden Lebensmittelportion durch Anpassen der Einstellungen der Aufschneidevorrichtung, der Transporteinrichtung und/oder der Stapelvorrichtung korrigierend zu beeinflussen. Beispielsweise kann die Stapelvorrichtung dazu angesteuert werden, automatisch eine weitere Teilportion zu einer gemäß den eigentlichen Voreinstellungen bereits fertigen Lebensmittelportionen hinzuzufügen, wenn festgestellt wird, dass die Lebensmittelportion ein vorgegebenes Gewicht nicht erreicht hat. Korrekturen können insofern automatisch und zeitnah erfolgen, um noch eine aktuell gebildete Lebensmittelportion beeinflussen und das Erfordernis nachträglicher oder manueller Korrekturen reduzieren zu können. Ferner kann das gemessene Gewicht auch dazu genutzt werden, die Einstellungen der Aufschneidevorrichtung, insbesondere automatisch, anzupassen, um beispielsweise eine Scheibendicke zu verändern und bei nachfolgenden Teilportionen und/oder Lebensmittelportionen das korrekte Gewicht erreichen zu können. Alternativ zu einer automatischen Anpassung des Verarbeitungsprozesses kann auch eine Meldung an einen Benutzer erfolgen, wenn das Gewicht der Teilportionen und/oder der Lebensmittelportionen nicht einem vorgegebenen Sollgewicht entspricht, so dass der Benutzer selbst Anpassungen der Einstellungen vornehmen kann, ohne jedoch eine manuelle Kontrolle durchführen zu müssen.

Grundsätzlich kann es ferner vorgesehen sein, dass auch die Aufschneidevorrichtung eine Waage aufweist, welche insbesondere an dem Portionierabschnitt angeordnet sein kann. Jedoch ist bei dem hier beschriebenen System stets zumindest auch eine der Aufschneidevorrichtung und dem Portionierabschnitt nachgelagerte Waage, insbesondere eine einer Verteileinrichtung zum Verteilen der Teilportionen auf mehrere Transportstrecken nachgelagerte Waage oder eine Waage als Teil der Stapelvorrichtung, vorgesehen, um das Gewicht der Teilportionen und/oder der Lebensmittelportion bestimmen zu können. Das System kann dadurch beispielsweise flexibel dazu genutzt werden, wahlweise lediglich kleine Portionen zu erzeugen, die unmittelbar auf dem Portionierabschnitt gebildet und bei welchen auf die Stapelvorrichtung verzichtet werden kann, wobei in solchen Situationen eine an dem Portionierabschnitt angeordnete Waage zum Messen des Portionsgewicht verwendet werden kann. In Situationen, in welchen hingegen große Lebensmittelportionen mit mehreren Teilportionen produziert werden sollen, kann auf die nachgelagerte Waage zurückgegriffen werden.

Weitere Ausführungsformen sind den abhängigen Ansprüchen, der Beschreibung und den Zeichnungen zu entnehmen.

Die Aufschneidevorrichtung des Systems kann insbesondere eine Produktzufuhr aufweisen, mittels derer die riegelförmigen Lebensmittelprodukte in den Schneidbereich bewegt werden können. Eine solche Produktzufuhr kann beispielsweise ein oder mehrere Förderbänder oder Produktgreifer umfassen, welche in ein hinteres Ende des Lebensmittelprodukts eingreifen und das Lebensmittelprodukt in die Schneidebene vorschieben. Ferner kann die Aufschneidevorrichtung einspurig oder mehrspurig betreibbar sein, wobei bei einer mehrspurigen Aufschneidevorrichtung mehrere Lebensmittelprodukte gleichzeitig in die Schneidebene bewegt und Scheiben von den Lebensmittelprodukten abgetrennt werden können. Insbesondere kann die Aufschneidevorrichtung ein Messer oder mehrere Messer umfassen, insbesondere ein oder mehrere in der Schneidebene umlaufende Kreismesser oder Sichelmesser.

Die Aufschneidevorrichtung kann ferner dazu ausgebildet sein, zum Trennen der Teilportionen voneinander Leerschnitte auszuführen, während derer das Messer zwar einen Umlauf ausführt, jedoch keine Scheibe von dem Lebensmittelprodukt abgetrennt wird. Dazu kann beispielsweise eine Produktzufuhr unterbrochen und/oder das Messer kann kurzzeitig aus der Schneidebene herausbewegt werden. Zum Erreichen eines möglichst hohen Produktdurchsatzes kann jedoch vorgesehen sein, dass eine nachfolgende Teilportion bereits gebildet wird, während sich die zuvor fertiggestellte Teilportion zumindest teilweise noch auf dem Portionierabschnitt befindet.

Ferner kann es vorgesehen sein, dass die Fördereinrichtung des Portionierabschnitts dauerhaft antreibbar ist oder angetrieben wird, so dass die Scheiben einer Teilportion versetzt und einander überlappend auf dem Portionierabschnitt angeordnet sein können und die Teilportion bereits in Richtung der Transporteinrichtung und/oder der Stapelvorrichtung bewegt werden kann, während noch Scheiben zu der Teilportion hinzugefügt werden. Insbesondere bei solchen langen und während des Hinzufügens von Scheiben bewegten Teilportionen können die Teilportionen bereits abschnittsweise auf der Transporteinrichtung aufliegen, während noch Scheiben zu der Teilportion hinzugefügt werden. Zudem kann der Portionierabschnitt quer zu einer Förderrichtung, entlang welcher die Teilportionen zu der Stapelvorrichtung transportierbar sind, bewegbar sein, um die Scheiben geschindelt oder vollständig nebeneinander ohne Überlappung ablegen zu können.

Darüber hinaus kann die Aufschneidevorrichtung einen sogenannten Interleaver umfassen, mittels dessen unter den zu erzeugenden Teilportionen ein Blatt oder eine Folie eingebracht werden kann. Dies kann es insbesondere einem Kunden ermöglichen, die Teilportionen einer Lebensmittelportion auf einfache Weise wieder voneinander zu trennen. Mittels eines solchen Interleaver kann beispielsweise vor dem Abtrennen oder während des Abtrennens einer ersten Scheibe einer Teilportion eine Folienbahn in die Schneidebene eingebracht werden, so dass das Messer gleichzeitig mit der ersten Scheibe auch ein Blatt dieser Folienbahn abtrennen kann, welches dann gemeinsam mit der ersten Scheibe und unter der ersten Scheibe abgelegt wird. Alternativ oder zusätzlich kann an der Transporteinrichtung auch ein sogenannter Underleaver vorgesehen sein, um ein Blatt oder eine Folie unter eine transportierte Teilportion einbringen zu können.

Bei einigen Ausführungsformen kann die Waage in die Stapelvorrichtung integriert sein. Bei solchen Ausführungsformen kann die Stapelvorrichtung somit gewissermaßen als eine Einheit mit integrierter Waage ausgebildet sein, um wahlweise an eine Aufschneidevorrichtung und eine Transporteinrichtung angeschlossen werden zu können, wenn das System zum Erzeugen großer Lebensmittelportionen mit mehreren von der Aufschneidevorrichtung bereitgestellten Teilportionen genutzt werden soll. Die Waage der Stapelvorrichtung kann dabei insbesondere mit einer Steuereinrichtung des Systems und/oder der Aufschneidevorrichtung verbunden und/oder verbindbar sein, so dass die Messergebnisse der Waage bei der Prozessteuerung und insbesondere der Steuerung des Aufschneidevorgangs zum Erzeugen der Teilportionen berücksichtigt werden können.

Bei einigen Ausführungsformen kann der Stapelabschnitt die Waage aufweisen, wobei die Waage dazu ausgebildet sein kann, das Gewicht der auf dem Stapelabschnitt abgelegten Teilportionen zu bestimmen.

Insbesondere kann der Stapelabschnitt ein Förderband umfassen, auf welchem die Teilportionen nacheinander abgelegt werden, so dass die vollständig gebildete Lebensmittelportion von dem Stapelabschnitt wegbewegt und beispielsweise weiteren Verarbeitungsschritten, insbesondere einer Verpackungsmaschine, zugeführt werden kann. Insbesondere kann die Waage in ein solches Förderband oder ein Modul, welches das Förderband umfasst, integriert sein. Die Waage kann jedoch auch an einer Abstützung des Stapelabschnitts am Boden angeordnet sein, so dass mittels der Waage das sich infolge eines Ablegens einer Teilportion verändernde Gewicht des Stapelabschnitts bestimmbar sein kann. Die Waage kann dabei derart einstellbar sein, dass lediglich das Gewicht der abgelegten Teilportionen als Messwert ausgegeben wird.

Um das Gewicht der abgelegten Teilportionen zu bestimmen, kann die Waage beispielsweise dazu ausgebildet sein, eine Veränderung des gemessenen Gewichts als Messwert auszugeben, so dass das Gewicht einer zuletzt abgelegten Teilportion als die Differenz zwischen einem aktuellen Gewicht auf dem Stapelabschnitt und einem vor dem Ablegen dieser Teilportion gemessenen Gewicht bestimmt werden kann. Es kann jedoch auch vorgesehen sein, dass die Waage nach dem Ausgeben eines Messwerts stets genullt wird, um das Gewicht einer nachfolgenden Teilportion bestimmen zu können. Das Gewicht der Teilportionen kann ferner insbesondere gespeichert werden, so dass das Gewicht der die Teilportionen umfassenden Lebensmittelportion durch Addieren dieser Gewichte - gegebenenfalls auch während des Bildens der Lebensmittelportion - bestimmt werden kann. Die Waage kann jedoch auch dazu ausgebildet sein, ein Gesamtgewicht der auf dem Stapelabschnitt abgelegten Teilportionen zu bestimmen und/oder auszugeben, so dass mittels der Waage unmittelbar das Gewicht der auf dem Stapelabschnitt gebildeten Lebensmittelportion gemessen werden kann.

Die Produktauflage und/oder der Stapelabschnitt können bei einigen Ausführungsformen über ein Gestell am Boden abstützbar sein, wobei die Waage unterhalb der Produktauflage und/oder unterhalb des Stapelabschnitts an dem Gestell angeordnet sein kann. Insbesondere können die Produktauflage und der Stapelabschnitt über ein gemeinsames Gestell am Boden abgestützt sein.

Die Produktauflage und/oder der Stapelabschnitt können somit insbesondere über die Waage am Boden abgestützt sein. Grundsätzlich kann mittels einer derart angeordneten Waage das Gewicht der oberhalb der Waage angeordneten Komponenten der Stapelvorrichtung und des Gestells bestimmt werden, so dass registriert werden kann, wenn sich dieses Gewicht durch Aufnehmen einer Teilportion auf der Produktauflage und/oder dem Stapelabschnitt erhöht. So kann beispielsweise durch Anordnen der Waage an einem Gestell, über welches die Produktauflage am Boden abgestützt ist, das Gewicht einer Teilportion bestimmt werden, welche auf die Produktauflage bewegt wurde, wobei durch Addieren des Gewichts der nacheinander auf der Produktauflage bewegten Teilportionen zudem das Gewicht einer aus diesen Teilportionen gebildeten Lebensmittelportion ermittelt werden kann. Durch Anordnen der Waage an einem Gestell, welches den Stapelabschnitt abstützt, kann ebenfalls das Gewicht der nacheinander auf dem Stapelabschnitt abgelegten Teilportionen und/oder der Lebensmittelportion gemessen werden, wie vorstehend erläutert ist.

Das Gestell kann bei einigen Ausführungsformen zumindest drei, insbesondere vier, Stützabschnitte aufweisen, über welche die Produktauflage und/oder der Stapelabschnitt am Boden abstützbar sind, wobei die Waage an zumindest einem der Stützabschnitte angeordnet sein kann. Insbesondere kann die Waage mehrere Wägezellen umfassen, wobei an jedem der Stützabschnitte eine jeweilige Wägezelle angeordnet sein kann.

Die Waage kann somit bei solchen Ausführungsformen im Bereich eines oder mehrerer Beine bzw. Füße eines Gestells angeordnet oder in solche Beine und/oder Füße integriert sein, über welche die Produktauflage und/oder der Stapelabschnitt am Boden abgestützt sind. Wiederum kann dadurch das Gewicht der Produktauflage und/oder des Stapelabschnitts bestimmt und eine Änderung des Gewichts durch Aufnehmen einer Teilportion registriert werden. Durch das Anordnen mehrerer Wägezellen kann das Gewicht der Teilportionen und/oder der Lebensmittelportionen insbesondere über mehrere Messpunkte bestimmt werden, um beispielsweise etwaige Dreh- oder Kippmomente ermitteln und/oder ausgleichen zu können, wenn die Teilportionen nicht zentral auf die Produktauflage und/oder den Stapelabschnitt bewegt werden.

Bei einigen Ausführungsformen kann die Stapelvorrichtung einen Antrieb zum Bewegen der Produktauflage aufweisen, wobei der Antrieb über die Waage am Boden abstützbar sein kann. Die Waage kann insbesondere derart angeordnet sein, dass die Waage das Gewicht des Antriebs, der Produktauflage sowie der auf die Produktauflage bewegten Teilportionen messen kann, um dadurch letztlich das Gewicht der Teilportionen ermitteln zu können. Insbesondere kann die Waage dazu genullt sein, wenn lediglich der Antrieb und/oder die Produktauflage über die Waage abgestützt sind.

Ferner kann der Antrieb bei einigen Ausführungsformen einen Motor und eine Welle umfassen, über welche die Produktauflage mit dem Motor verbunden ist. Die Welle kann über zumindest ein Lager an der Stapelvorrichtung gelagert und die Waage kann an dem zumindest einen Lager angeordnet sein. Insbesondere kann die Welle über mehrere Lager an der Stapelvorrichtung gelagert sein, wobei an jedem der Lager eine jeweilige Wägezelle der Waage angeordnet sein kann.

Durch die Anordnung der Waage an dem Lager kann das Gewicht der Welle und der damit verbundenen Produktauflage gemessen werden, so dass auch eine Gewichtsänderung erfasst werden kann, wenn eine Teilportion auf die Produktauflage bewegt wird. Ferner kann bei einigen Ausführungsformen auch der Motor über die Lager und die Waage an der Stapelvorrichtung abgestützt sein, so dass das gesamte Gewicht des Antriebs auf die Waage wirken kann. Insbesondere können die Welle und/oder der Motor über die Waage an einem feststehenden Gestell der Stapelvorrichtung abgestützt sein, so dass der Motor und/oder die Welle letztlich über die Waage am Boden abgestützt sein können.

Bei solchen Ausführungsformen kann die Produktauflage insbesondere durch eine Drehung der Welle von der Zuführstellung in die Ablegestellung bewegbar sein, insbesondere durch eine Drehung der Welle um 90°. Die Teilportionen können dazu beispielsweise auf eine horizontal ausgerichtete Produktauflage bewegt werden, wobei die Produktauflage durch eine Drehung der Welle um 90° in eine vertikale Ausrichtung überführt werden kann, so dass die Teilportionen an der Produktauflage abrutschen und auf dem Stapelabschnitt abgelegt werden können. Hierzu kann die Produktauflage insbesondere an einer Außenseite an der Welle befestigt sein.

Bei einigen Ausführungsformen kann die Stapelvorrichtung ferner zwei Produktauflagen aufweisen, die an entgegengesetzten Außenseiten an einer jeweiligen Welle befestigt sind und gemeinsam eine Produktauflagefläche bilden. Bei solchen Ausführungsformen können die Produktauflagen durch gegensinniges Drehen der Wellen von einer horizontalen Ausrichtung in eine vertikale Ausrichtung und aus der Zuführstellung in die Ablegestellung bewegt werden, um eine Teilportion abzulegen. Insbesondere kann dabei jede der Wellen an der Stapelvorrichtung gelagert und über zumindest eine jeweilige Wägezelle der Waage an der Stapelvorrichtung abgestützt sein. Grundsätzlich können an jeder der Wellen zudem mehrere Produktauflagen, beispielsweise zwei, drei oder vier Produktauflagen, angeordnet sein, so dass durch Drehen der Wellen um 90°, 120° oder um 180° zum Ablegen einer Teilportion wiederum jeweilige Produktauflagen in eine horizontale Ausrichtung gebracht werden können, um eine Produktauflagefläche zu bilden und eine Teilportion aufnehmen zu können.

Bei einigen Ausführungsformen kann die Transporteinrichtung eine erste Transportstrecke und eine zweite Transportstrecke aufweisen und die Transporteinrichtung kann eine Verteileinrichtung umfassen, welche dazu ausgebildet ist, von der Fördereinrichtung empfangene Teilportionen wahlweise auf die erste Transportstrecke oder die zweite Transportstrecke zu verteilen. Wie bereits erläutert, können die nacheinander von der Fördereinrichtung des Portionierabschnitts empfangenen Teilportionen durch ein solches Verteilen auf zwei Transportstrecken insbesondere entzerrt und deren Abstand zueinander auf den Transportstrecken vergrößert werden, um ein Wiegen der Teilportionen zu ermöglichen. Beispielsweise kann es vorgesehen sein, die Teilportionen abwechselnd auf die erste Transportstrecke und die zweite Transportstrecke zu verteilen.

Die erste Transportstrecke und die zweite Transportstrecke können bei einigen Ausführungsformen als Pufferstrecken fungieren, wobei die Teilportionen mittels der Verteileinrichtung insbesondere separiert und auf die erste Transportstrecke und die zweite Transportstrecke verteilt werden können, um an oder vor der Stapelvorrichtung zum Bilden einer Lebensmittelportion wieder zusammengeführt werden zu können. Insbesondere kann das Wiegen der Teilportionen dabei an der ersten Transportstrecke und an der zweiten Transportstrecke erfolgen, an welchen die Teilportionen einen dazu ausreichenden Abstand zueinander aufweisen können. Alternativ dazu kann es jedoch auch vorgesehen sein, die Teilportionen über die erste Transportstrecke und die zweite Transportstrecke jeweiligen Stapelvorrichtungen zuzuführen, wie nachstehend noch erläutert ist.

Die beiden Transportstrecken können beispielsweise durch jeweilige Förderbänder gebildet sein, die seitlich versetzt zueinander und/oder übereinander verlaufen können. Um die Teilportionen wahlweise auf eine zumindest abschnittsweise oberhalb der zweiten Transportstrecke verlaufende erste Transportstrecke oder die zweite Transportstrecke verteilen zu können, kann die Verteileinrichtung insbesondere eine um eine horizontale Achse verschwenkbare Wippe, insbesondere ein verschwenkbares Förderband, oder ein anhebbares und absenkbares Förderband umfassen. Alternativ dazu kann die Verteileinrichtung dazu ausgebildet sein, die Teilportionen auf seitlich zueinander versetzte Transportstrecken zu verteilen, wozu die Verteileinrichtung oder ein Förderband der Transporteinrichtung beispielsweise um eine vertikale Achse verschwenkbar sein kann. Ferner kann die Verteileinrichtung und/oder ein Förderband der Transporteinrichtung seitlich verschiebbar sein, um etwa zentral übernommene Teilportionen seitlich zu verteilen. Die Verteileinrichtung kann zudem einen Plattenförderer umfassen, mittels dessen die Teilportionen horizontal verteilbar sein können.

Insbesondere kann es vorgesehen sein, die Teilportionen abwechselnd auf die erste Transportstrecke und die zweite Transportstrecke zu verteilen.

Zudem können an der ersten Transportstrecke und der zweiten Transportstrecke auch weitere Prozessschritte erfolgen, indem beispielsweise an den Transportstrecken unter den einzelnen Teilportionen eine jeweilige Unterlage durch einen sogenannten Underleaver hinzugefügt werden kann. Auch für solche Prozessschritte kann durch das Aufteilen der Teilportionen auf die Transportstrecken grundsätzlich mehr Zeit zur Verfügung stehen und auch ein Zugang zu den einzelnen Teilportionen zum Durchführen der Prozessschritte, insbesondere ein Zugang für die erforderlichen Maschinen, kann erleichtert werden.

Ferner kann die Verteileinrichtung grundsätzlich auch dazu ausgebildet sein, die Teilportionen auf mehr als zwei Transportstrecken zu verteilen, beispielsweise drei, vier, fünf oder sechs Transportstrecken, welche die Transporteinrichtung umfassen kann. Dabei können die Transportstrecken beispielsweise paarweise zusammengeführt und die jeweiligen Teilportionen einer gemeinsamen Stapelvorrichtung zugeführt werden oder es kann vorgesehen sein, dass sämtliche Transportstrecken zu einer separaten Stapelvorrichtung führen. Ebenfalls ist es möglich, dass sämtliche Transportstrecken zu derselben Stapelvorrichtung führen.

Das System kann bei einigen Ausführungsformen eine erste Waage und eine zweite Waage aufweisen, wobei die erste Waage an der ersten Transportstrecke und die zweite Waage an der zweiten Transportstrecke angeordnet sein kann. Insbesondere können die erste Waage und die zweite Waage dabei zwischen der Verteileinrichtung und der Stapelvorrichtung angeordnet sein.

Wie bereits erläutert, kann durch das Verteilen der Teilportionen auf die erste Transportstrecke und die zweite Transportstrecke der Abstand zwischen den Teilportionen zueinander vergrößert werden, so dass an den Transportstrecken ein Wiegen der Teilportionen ermöglicht werden kann. Bei solchen Ausführungsformen kann somit insbesondere der Umstand genutzt werden, dass der Abstand zwischen an den Transportstrecken aufeinanderfolgenden Teilportionen gegenüber einem Abstand der nacheinander von der Fördereinrichtung des Portionierabschnitts an die Transporteinrichtung übergebenen Teilportionen durch das Aufteilen auf zwei Transportstrecken vergrößert werden kann, so dass ein Bestimmen des Gewichts der Teilportionen an den Transportstrecken ermöglicht wird. Insbesondere können die erste Waage und die zweite Waage dabei einem jeweiligen Förderband zugeordnet sein, welches einen Teil der ersten Transportstrecke oder der zweiten Transportstrecke bildet. Dabei kann das Gewicht der Teilportionen bestimmt werden, während die Teilportionen über das Förderband bewegt werden, oder es kann vorgesehen sein, das Förderband zum Wiegen kurzzeitig anzuhalten. Auch ein solches Anhalten kann insbesondere dadurch ermöglicht werden, dass der Abstand zwischen den Teilportionen durch das Verteilen auf zwei Transportstrecken vergrößert und somit die zum Wiegen benötigte Zeit gewonnen werden kann. Ferner können auf komfortable Weise bereits bestehende Module von Förderbändern mit integrierten Waagen an den Transportstrecken eingesetzt werden, um das Gewicht der zu den jeweiligen Stapelvorrichtungen bewegten Teilportionen bestimmen zu können. Bei mehr als zwei Transportstrecken kann insbesondere jeder der Transportstrecken eine jeweilige Waage zugeordnet sein.

Bei einigen Ausführungsformen kann das System eine erste Stapelvorrichtung und eine zweite Stapelvorrichtung aufweisen, wobei die Transporteinrichtung dazu ausgebildet sein kann, die Teilportionen über die erste Transportstrecke auf die Produktauflage der ersten Stapelvorrichtung und über die zweite Transportstrecke auf die Produktauflage der zweiten Stapelvorrichtung zu bewegen.

Durch ein solches Verteilen der Teilportionen auf zwei getrennte Transportstrecken kann insbesondere der Abstand zwischen den auf den jeweiligen Transportstrecken transportierten Teilportionen gegenüber dem Abstand der aufeinanderfolgend von dem Portionierabschnitt an die Transporteinrichtung übergebenen Teilportionen vergrößert werden, so dass auch die an den Transportstrecken und/oder den Stapelvorrichtungen zum Wiegen der Teilportionen zur Verfügung stehende Zeit erhöht werden kann. Dabei kann insbesondere eine jeweilige Waage an der ersten Transportstrecke und der zweiten Transportstrecke und/oder eine jeweilige Waage an der ersten Stapelvorrichtung und der zweiten Stapelvorrichtung vorgesehen sein. Ferner kann durch das Verteilen der Lebensmittelportionen auf zwei Stapelvorrichtungen gegebenenfalls auch der Produktdurchsatz erhöht werden, indem beispielsweise der Aufschneidevorgang und das Erzeugen der Teilportionen nicht an einen möglicherweise langsameren Stapelvorgang an den Stapelvorrichtungen angepasst werden muss, sondern die Teilportionen mit maximaler Schneidgeschwindigkeit und geringem Abstand zueinander erzeugt werden können.

Bei einigen Ausführungsformen können die erste Stapelvorrichtung und die zweite Stapelvorrichtung eine jeweilige Waage aufweisen. Bei solchen Ausführungsformen kann das Messen des Gewichts der Teilportionen und/oder der Lebensmittelportionen somit, wie vorstehend erläutert, an den Stapelvorrichtungen erfolgen, wobei die jeweiligen Messergebnisse insbesondere einer Steuerung der Aufschneidevorrichtung und/oder des Systems zur Verfügung gestellt werden können.

Das System kann bei einigen Ausführungsformen eine erste Waage und eine zweite Waage aufweisen, wobei die erste Waage zwischen der Verteileinrichtung und der ersten Stapelvorrichtung angeordnet und die zweite Waage zwischen der Verteileinrichtung und der zweiten Stapelvorrichtung angeordnet sein kann. Insbesondere kann die erste Waage in die erste Transportstrecke und die zweite Waage in die zweite Transportstrecke integriert sein.

Bei einigen Ausführungsformen kann das System eine Steuereinrichtung aufweisen, welche dazu ausgebildet ist, den Betrieb des Systems, insbesondere Einstellungen der Aufschneidevorrichtung und/oder der Transporteinrichtung, in Abhängigkeit von einem Messergebnis der Waage anzupassen.

Beispielsweise kann die Steuereinrichtung dazu ausgebildet sein, die Transporteinrichtung zu beschleunigen, wenn einer Lebensmittelportion eine weitere Teilportion zugeführt werden muss, um ein vorgegebenes Lebensmittelportion-Sollgewicht zu erreichen, so dass die weitere Teilportion möglichst schnell bereitgestellt werden kann. Ferner kann die Steuereinrichtung dazu ausgebildet sein, die Anzahl der Scheiben, welche eine Teilportion bilden, in Abhängigkeit von dem Messergebnis der Waage anzupassen, um die Anzahl der Scheiben beispielsweise zu erhöhen, wenn festgestellt wird, dass das Gewicht der Teilportionen systematisch zu gering ist. Alternativ oder zusätzlich kann es vorgesehen sein, eine Dicke der von der Aufschneidevorrichtung abgetrennten Scheiben zu verändern, um dadurch auf das Gewicht der Teilportionen und/oder der Lebensmittelportionen einzuwirken. Dies kann insbesondere vorgesehen sein, wenn eine bestimmte Anzahl von Scheiben pro Teilportion und/oder eine bestimmte Anzahl von Scheiben pro Lebensmittelportion fest vorgegeben ist, so dass weder durch Anpassen der Scheibenanzahl pro Teilportion noch durch Hinzufügen einer weiteren Teilportion auf das Gewicht der Lebensmittelportion eingewirkt werden kann. Zum Anpassen der Dicke der Scheiben kann insbesondere eine Geschwindigkeit einer Produktzufuhr der Aufschneidevorrichtung, welche die Lebensmittelprodukte in die Schneidebene führt, und/oder eine Geschwindigkeit der Messerbewegung angepasst werden.

Die Steuereinrichtung kann bei einigen Ausführungsformen dazu ausgebildet sein, die Anzahl der Scheiben einer Teilportion und/oder eine Dicke der abgetrennten Scheiben in Abhängigkeit von dem Messergebnis der Waage anzupassen. Insbesondere kann durch solche Anpassungen, wie vorstehend erläutert, auf das Gewicht nachfolgend gebildeter Teilportionen eingewirkt werden, wenn bei einer oder mehreren vorhergehend erzeugten Teilportionen Abweichungen von einem Sollgewicht festgestellt werden.

Bei einigen Ausführungsformen kann die Steuereinrichtung dazu ausgebildet sein, eine Regelung durchzuführen, bei welcher die Anzahl der Scheiben einer Teilportion oder die Dicke der Scheiben die Stellgröße und das mittels der Waage gemessene Gewicht der Teilportionen und/oder der Lebensmittelportion die Regelgröße ist.

Bei einer solchen Regelung kann das Gewicht der Teilportionen und/oder der Lebensmittelportion mittels der Waage bestimmt werden und in einem Regelkreis zurückgeführt werden, wobei die Steuereinrichtung das gemessene Gewicht der Teilportionen und/oder der Lebensmittelportion mit einem jeweiligen Sollgewicht vergleichen kann. Sofern eine Abweichung zwischen dem Sollgewicht und dem gemessenen Gewicht besteht, kann die Steuereinrichtung eine Anpassung der Anzahl der Scheiben einer Teilportion oder der Dicke der abgetrennten Scheiben vornehmen, um dadurch auf das Gewicht der nachfolgend erzeugten Teilportionen einzuwirken. Nach dieser Anpassung kann wiederum mittels der Waage das Gewicht der Teilportion und/oder der nachfolgenden Lebensmittelportion bestimmt werden, um eine weitere Anpassung vornehmen zu können, falls das gewünschte Sollgewicht trotz der vorgenommenen Anpassung nicht erreicht wurde. Eine solche Regelung ermöglicht somit, Fehleinstellungen laufend und flexibel zu korrigieren und Einstellungen des Systems dynamisch anzupassen, um beispielsweise auf sich verändernde Produktzusammensetzungen, etwa einen über die Produktlänge variierenden Fettanteil des Lebensmittelprodukts, reagieren und über den gesamten Aufschneidevorgang hinweg Lebensmittelportionen eines vorgegebenen Lebensmittelportion-Sollgewichts erzeugen zu können.

Die Steuereinrichtung kann bei einigen Ausführungsformen dazu ausgebildet sein, eine Trendregelung auf Basis des Gewichts mehrerer aufeinanderfolgender Teilportionen und/oder Lebensmittelportionen durchzuführen.

Bei einer solchen Trendregelung können Anpassungen von Einstellungen des Systems insbesondere nicht nach jeder Messung des Gewichts erfolgen, bei welcher eine Abweichung von einem Sollgewicht festgestellt werden, sondern geringfügige und/oder statistisch verteilte Abweichungen können hingenommen werden. Im Rahmen einer Trendregelung kann vielmehr überprüft werden, ob das gemessene Gewicht aufeinanderfolgender Teilportionen und/oder aufeinanderfolgend erzeugter Lebensmittelportionen systematisch geringer oder höher als ein vorgegebenes Sollgewicht ist, um eine Anpassung erst bei Feststellen einer solchen systematischen Abweichung vorzunehmen. Dadurch kann insbesondere verhindert werden, auf lediglich statistisch bedingte Gewichtsabweichungen zu reagieren und dadurch grundsätzlich korrekte Einstellungen fälschlicherweise derart zu verändern, dass eine gegebenenfalls darauffolgende, wiederum statistisch bedingte Abweichung noch verstärkt wird.

Bei einigen Ausführungsformen kann die Aufschneidevorrichtung eine optische Waage umfassen, welche dazu ausgebildet ist, eine Oberflächenstruktur sowie eine Kontur eines der Schneidebene zugewandten vorderen Produktendes zu ermitteln. Die Steuereinrichtung kann bei solchen Ausführungsformen dazu ausgebildet sein, anhand der ermittelten Oberflächenstruktur und der Kontur eine Solldicke der abzutrennenden Scheibe zu bestimmen, bei welcher die abgetrennte Scheibe ein vorgegebenes Sollgewicht aufweist.

Insbesondere kann die Steuereinrichtung dazu ausgebildet sein, anhand der ermittelten Oberflächenstruktur eine Dichte einer von dem vorderen Produktende abzutrennenden Scheibe zu ermitteln, anhand der ermittelten Dichte sowie der ermittelten Kontur eine Solldicke der abzutrennenden Scheibe zu bestimmen, bei welcher die abgetrennte Scheibe ein vorgegebenes Sollgewicht aufweist, und die Aufschneidevorrichtung zum Abtrennen der Scheibe mit der Solldicke anzusteuern. Ferner kann die Steuereinrichtung dazu ausgebildet sein, die Ermittlung der Dichte und/oder der Solldicke bei einer Abweichung der Messung der Waage von einem durch die Anzahl der Scheiben bestimmten Teilportion-Sollgewicht und/oder von einem Lebensmittelportion-Sollgewicht anzupassen.

Beispielsweise kann die optische Waage eine Kamera umfassen, um eine Abbildung des vorderen Produktendes zu erzeugen. Diese Abbildung kann der Steuereinrichtung zur Verfügung gestellt werden und die Steuereinrichtung kann dazu ausgebildet sein, die Oberflächenstruktur des vorderen Produktendes anhand der Abbildung zu analysieren, um beispielsweise Fettanteile, Fleischanteile und/oder Knochenanteile an der Oberfläche des vorderen Produktendes identifizieren zu können. Hierzu kann die Steuereinrichtung beispielsweise dazu ausgebildet sein, ein Bildanalyseverfahren durchzuführen.

Ferner kann die Steuereinrichtung dazu ausgebildet sein, anhand der ermittelten Oberflächenstruktur, insbesondere der ermittelten Fettanteile, Fleischanteile und/oder Knochenanteile, eine Dichte an dem vorderen Produktende zu ermitteln. Dazu kann die Steuereinrichtung beispielsweise auf hinterlegte Dichtewerte für die jeweiligen Anteile zurückgreifen, um eine Durchschnittsdichte an dem vorderen Produktende unter Berücksichtigung der Flächen oder Flächenanteile zu bestimmen, die die jeweiligen Anteile einnehmen. Unter Berücksichtigung dieser Durchschnittsdichte und der ermittelten Kontur des vorderen Produktendes, die insbesondere einen äußeren Rand des Produktendes beschreiben kann, kann die Steuereinrichtung sodann die Dicke einer abzutrennenden Scheibe bestimmen, bei welcher die abgetrennte Scheibe ein vorgegebenes Sollgewicht aufweist. Dazu kann die Steuereinrichtung auch dazu ausgebildet sein, anhand der Kontur eine Fläche des vorderen Produktendes zu ermitteln.

Insbesondere ermöglicht es eine solche optische Waage, Abweichungen der Dichte des Produktes über dessen Länge bei der Scheibendicke berücksichtigen und dadurch auch bei einer sich etwa über die Länge des Produkts verändernden Produktzusammensetzung, insbesondere sich ändernder Fett-, Fleisch- und/oder Knochenanteile, Scheiben mit dem vorgegebenen Gewicht und entsprechend Teilportionen mit einem vorgegebenen Teilportion-Sollgewicht zu erzeugen. So kann die Dicke der Scheibe beispielsweise bei einem erhöhten Fettanteil vergrößert werden, um trotz der entsprechend verringerten Dichte eine Scheibe des vorgegebenen Sollgewichts abschneiden zu können.

Während mit einer solchen optischen Waage Abweichungen in der Struktur der verarbeiteten Produkte berücksichtigt werden können, kann die Ermittlung der Solldicke noch weiter verbessert werden, indem die Waage zum Messen des Gewichts der Teilportionen und/oder der Lebensmittelportion gewissermaßen als Kontrollwaage für die optische Waage genutzt wird und das mittels der optischen Waage durch die Steuereinrichtung vorhergesagte Gewicht der Teilportionen, welches insbesondere dem Teilportionen-Sollgewicht entsprechen kann, und/oder das vorhergesagte Lebensmittelportionen-Sollgewicht mit dem tatsächlichen Gewicht der Teilportionen und/oder der Lebensmittelportion verglichen wird. Eine solche Überprüfung kann es folglich ermöglichen, die optische Waage und/oder die Schritte zum Bestimmen der Solldicke anzupassen, wenn die Teilportionen und/oder die Lebensmittelportion nicht das erwartete Gewicht aufweisen.

Um eine solche Anpassung vorzunehmen, kann die Steuereinrichtung beispielsweise dazu ausgebildet sein, in Abhängigkeit von einer Messung der Waage in einem Speicher hinterlegte Dichtewerte anzupassen, anhand derer die Dichte des vorderen Produktendes und/oder die Solldicke der Scheibe ermittelt werden. Ferner kann es vorgesehen sein, eine Zuordnungsvorschrift zum Zuordnen von Scheibendicken zu ermittelten Dichten anzupassen, wenn die optische Waage systematisch ein zu kleines oder ein zu großes Gewicht der Teilportionen ermittelt und dementsprechend zu geringe oder zu große Scheibendicken festlegt. Ferner kann auch ein Korrekturfaktor bei der Ermittlung der Dichte eingeführt werden, so dass nicht direkt einzelne hinterlegte Dichtewerte angepasst, sondern eine ermittelte Durchschnittsdichte und/oder die hinterlegten Dichtewerte mit einem Korrekturfaktor multipliziert werden können. Ein solcher Korrekturfaktor kann insbesondere dem Verhältnis aus erwartetem und mittels der Waage gemessenem Gewicht der Teilportionen und/oder der Lebensmittelportion entsprechen.

Alternativ zu dem vorstehend erläuterten Ermitteln einer durchschnittlichen Dichte des vorderen Produktendes kann es auch vorgesehen sein, dass die Steuereinrichtung dazu ausgebildet ist, Abschnitte in der Oberflächenstruktur sowie deren Flächenanteil oder die Fläche zu bestimmen, die der jeweilige Anteil einnimmt. Beispielsweise kann die Steuereinrichtung dazu ausgebildet sein, einen Fettanteil, einen Fleischanteil und/oder einen Knochenanteil in der Oberflächenstruktur zu identifizieren und eine jeweilige zugehörige Fläche zu bestimmen, die von den Anteilen eingenommen wird. Um die Solldicke der abzutrennenden Scheibe zu ermitteln, kann die Steuereinrichtung dazu ausgebildet sein, für jeden der Abschnitte eine jeweilige Abschnittsdichte zu ermitteln und die Solldicke anhand der Flächenanteile der Abschnitte und der Abschnittsdichten als diejenige Dicke zu bestimmen, bei welcher eine durch die Abschnitte zusammengesetzte Scheibe ein vorgegebenes Sollgewicht aufweist. Auch hierbei können zum Anpassen des Ermittelns der Solldicke insbesondere die hinterlegten Abschnittsdichten, beispielsweise hinterlegte Dichten für Fett, Fleisch und/oder Knochen, verändert oder ein Korrekturfaktor eingeführt werden.

Die Steuereinrichtung kann bei einigen Ausführungsformen dazu ausgebildet sein, anhand der Oberflächenstruktur einen Fettanteil, einen Fleischanteil und/oder einen Knochenanteil innerhalb der Kontur des vorderen Produktendes zu bestimmen und die Dichte und/oder die Solldicke der von dem vorderen Produktende abzutrennenden Scheibe in Abhängigkeit von dem jeweiligen Anteil und/oder den jeweiligen Anteilen zu berechnen und/oder in einer Nachschlagetabelle nachzuschlagen.

Beispielsweise kann das System einen Speicher, insbesondere Halbleiterspeicher, mit einer Nachschlagetabelle umfassen, in welcher jeweiligen Anteilen oder Kombinationen von Anteilen eine jeweilige Dichte und/oder Solldicke der Scheibe zugeordnet ist. Es kann jedoch auch vorgesehen sein, dass jedem der Anteile eine jeweilige Dichte zugeordnet ist, so dass die Steuereinrichtung die durchschnittliche Dichte an dem Produktende und/oder die Solldicke der abzutrennenden Scheibe berechnen kann. Ferner kann die Steuereinrichtung dazu ausgebildet sein, anhand der Oberflächenstruktur eine jeweilige Fläche eines Fettanteils, eines Fleischanteils und/oder eines Knochenanteils zu bestimmen, um die Solldicke durch Multiplikation der jeweiligen Flächen mit für die Anteile hinterlegten Abschnittsdichten und Vergleich mit dem Sollgewicht für die Scheibe zu bestimmen.

Bei einigen Ausführungsformen kann die Steuereinrichtung dazu ausgebildet sein, Parameter zur Berechnung der Dichte und/oder die Nachschlagetabelle in Abhängigkeit von der Messung der Waage anzupassen. Beispielsweise können hinterlegte Dichtewerte für einzelne Abschnitte oder Anteile der Oberflächenstruktur, beispielsweise eines Fettanteils, eines Fleischanteils und/oder eines Knochenanteils, in Abhängigkeit von der Messung der Waage angepasst werden. Wenn beispielsweise festgestellt wird, dass die Dichte gerade bei einer Oberflächenstruktur mit einem hohen Fleischanteil systematisch zu groß und die Scheibendicke entsprechend zu gering ermittelt werden, so dass die Teilportionen ein zu geringes Gewicht aufweisen, kann der hinterlegte Dichtewert für einen Fleischanteil erhöht werden, um eine exaktere Ermittlung der erforderlichen Solldicke zu erreichen. Hierzu kann die Steuereinrichtung beispielsweise dazu ausgebildet sein, systematische Abweichungen von dem Teilportionen-Sollgewicht und/oder dem Lebensmittelportionen-Sollgewicht in Korrelation zu bestimmten Anteilen oder Anteilsverhältnissen zu setzen, um daraus Rückschlüsse auf den nicht korrekt ermittelten Dichtewert zu ziehen.

Die Steuereinrichtung kann bei einigen Ausführungsformen dazu ausgebildet sein, einen selbstlernenden Algorithmus zum Ermitteln der Dichte der von dem vorderen Produktende abzutrennenden Scheibe und/oder der Solldicke auszuführen und unter Berücksichtigung der Messung der Waage zu optimieren. Insbesondere kann die Steuereinrichtung anhand der Oberflächenstruktur, der ermittelten Dichte und der Solldicke ein Gewicht der Teilportionen und/oder der Lebensmittelportion vorhersagen, wobei dieses vorhergesagte Gewicht mit dem von der Waage tatsächlich gemessenen Gewicht verglichen werden kann, um den selbstlernenden Algorithmus dadurch zu trainieren und zu optimieren. Grundsätzlich kann ein solcher selbstlernender Algorithmus es auch ermöglichen, die Solldicke der von dem vorderen Produktende abzutrennenden Scheibe ohne Rückgriff auf hinterlegte Dichtewerte und ohne explizites Ermitteln einer Dichte zu bestimmen, indem beispielsweise durch ein von der optischen Waage bereitgestelltes Bild bestimmte Parameter ermittelt und von dem selbstlernenden Algorithmus, beispielsweise einem neuronalen Netz, eine Solldicke für ein gewünschtes Scheibengewicht ausgegeben werden kann. Anhand des Messergebnisses der Waage kann sodann überprüft werden, ob die Teilportionen der mit der Solldicke geschnittenen Scheiben auch das vorgegebene Teilportion-Sollgewicht aufweisen und Abweichungen können zurückgemeldet werden, um den Algorithmus beständig zu optimieren. Das Trainieren des Algorithmus kann dabei insbesondere bereits werksseitig erfolgen, so dass die Solldicke der aufzuschneidenden Produkte bei dem ausgelieferten System zuverlässig bestimmt werden kann, wobei jedoch Messerergebnisse der Waage weiterhin zum Optimieren des Algorithmus und/oder zur Prozessüberwachung genutzt werden können.

Die Steuereinrichtung kann bei einigen Ausführungsformen einen Mikroprozessor und/oder eine CPU (Central Processing Unit) umfassen. Ferner kann die Steuereinrichtung bei einigen Ausführungsformen modular aufgebaut sein, so dass verschiedene hierin beschriebene Aufgaben der Steuereinrichtung beispielsweise von verschiedenen Einheiten und/oder Mikroprozessoren durchgeführt werden können, die insbesondere auch räumlich getrennt angeordnet sein können. Die Steuereinrichtung kann jedoch auch als eine zentrale Einheit ausgebildet sein, so dass beispielsweise sämtliche Komponenten der Steuereinrichtung in einem gemeinsamen Gehäuse angeordnet sein können.

Bei einigen Ausführungsformen kann eine vorbestimmte Anzahl von Teilportionen für die Lebensmittelportionen vorgesehen sein, wobei die Steuereinrichtung dazu ausgebildet sein kann, die Stapelvorrichtung nach dem Ablegen der vorbestimmten Anzahl von Teilportionen zum Hinzufügen einer weiteren Teilportion anzusteuern, wenn das von der Waage gemessene Gewicht der vorbestimmten Anzahl von Teilportionen geringer ist als ein für die Lebensmittelportionen vorgesehenes Lebensmittelportionen-Sollgewicht. Alternativ oder zusätzlich kann das System bei einigen Ausführungsformen eine Kennzeichnungs- und/oder Signaleinrichtung aufweisen, wobei die Steuereinrichtung dazu ausgebildet sein kann, die Kennzeichnungs- und/oder Signaleinrichtung bei einem Abweichen des von der Waage gemessenen Gewichts der vorbestimmten Anzahl von Teilportionen von dem Lebensmittelportionen-Sollgewicht zu einem Kennzeichnen der Lebensmittelportionen und/oder zu einem Auslösen eines für einen Benutzer wahrnehmbaren Signals anzusteuern.

Insbesondere kann es vorgesehen sein, automatisch eine weitere Teilportion hinzuzufügen, wenn festgestellt wird, dass das Lebensmittelportion-Sollgewicht nach dem Ablegen der vorbestimmten Anzahl von Teilportionen auf dem Stapelabschnitt noch nicht erreicht ist. Das Gewicht der Lebensmittelportion kann somit gezielt erhöht werden, bevor die Lebensmittelportion aus dem Stapelabschnitt entfernt und weiteren Verarbeitungsschritten, insbesondere einer Verpackungsmaschine, zugeführt wird, so dass insbesondere ein nachfolgendes manuelles Hinzufügen von Scheiben verhindert und auch der Kontrollaufwand verringert werden kann. Alternativ dazu kann das System mittels der Kennzeichnungs- und/oder Signaleinrichtung eine untergewichtige Lebensmittelportion kennzeichnen oder ein für einen Benutzer wahrnehmbares Signal erzeugen, um den Benutzer darauf aufmerksam zu machen, dass zu der jeweiligen Lebensmittelportion noch Scheiben hinzugefügt werden müssen. Es kann auch eine Kennzeichnung oder eine Signalausgabe, beispielsweise eines akustisch und/oder optisch wahrnehmbaren Signals, erfolgen, wenn das Gewicht der vorbestimmten Anzahl von Teilportionen höher als das Lebensmittelportionen-Sollgewicht ist, so dass der Benutzer eine oder mehrere Scheiben entfernen kann.

Die Steuereinrichtung kann bei einigen Ausführungsformen dazu ausgebildet sein, wenn das mittels der Waage gemessene Gewicht der vorbestimmten Anzahl von Teilportionen geringer ist als ein für die Lebensmittelportionen vorgesehenes Lebensmittelportion-Sollgewicht, in Abhängigkeit von einer Differenz zwischen dem von der Waage gemessenen Gewicht und dem Lebensmittelportion-Sollgewicht entweder die Stapelvorrichtung zum Hinzufügen einer weiteren Teilportion oder die Kennzeichnungs- und/oder Signaleinrichtung zum Kennzeichnen der Lebensmittelportionen und/oder zum Auslösen des für einen Benutzer wahrnehmbaren Signals anzusteuern.

Beispielsweise kann es vorgesehen sein, automatisch eine weitere Teilportion zu der vorbestimmten Anzahl von Teilportionen hinzuzufügen, wenn das Gewicht der vorbestimmten Anzahl von Teilportionen deutlich geringer als das Lebensmittelportionen-Sollgewicht ist und beispielsweise annähernd dem Gewicht einer Teilportion entspricht, so dass durch das Hinzufügen einer vollständigen weiteren Teilportion das Lebensmittelportionen-Sollgewicht nicht oder zumindest nicht erheblich überschritten wird. Ist die Differenz zwischen dem Lebensmittelportionen-Sollgewicht und dem Gewicht der vorbestimmten Anzahl von Teilportionen hingegen gering, kann eine Kennzeichnung oder eine Signalauslösung erfolgen, so dass der Benutzer einzelne Scheiben hinzufügen oder entfernen kann. Hierdurch kann insbesondere das Erzeugen deutlich übergewichtiger Lebensmittelportionen verhindert und dennoch eine möglichst große Automation erreicht werden.

Bei einigen Ausführungsformen kann eine minimale Differenz, bei welcher die Steuereinrichtung die Stapelvorrichtung zum Hinzufügen einer weiteren Teilportion ansteuert, über eine Eingabeeinrichtung, insbesondere einen Touchscreen, der Steuereinrichtung einstellbar sein.

Beispielsweise kann über die Eingabeeinrichtung durch Einstellen der minimalen Differenz letztlich ein noch akzeptables Übergewicht einer Lebensmittelportion festlegbar sein, so dass eine weitere Teilportion automatisch hinzugefügt werden kann, wenn das Gewicht der Lebensmittelportion auch nach dem Hinzufügen der weiteren Teilportion das festgelegte akzeptable Übergewicht unterschreitet. Ferner können insbesondere das Gewicht der potentiell hinzuzufügenden weiteren Teilportion sowie das Gewicht der vorbestimmten Anzahl von Teilportionen mittels der Waage bestimmbar sein, so dass die Steuereinrichtung auch dazu ausgebildet sein kann, das Hinzufügen einer weiteren Teilportion zu verhindern, wenn diese ein zu großes Gewicht aufweist und das akzeptable Übergewicht überschritten würde, um stattdessen eine Kennzeichnung vorzunehmen oder ein Signal auszulösen. Insbesondere kann der Benutzer auch entscheiden, stets eine Teilportion hinzuzufügen, wenn das Gewicht der vorbestimmten Anzahl von Teilportionen geringer als das Lebensmittelportion-Sollgewicht ist, um eine vollständige Automation zu erreichen und sicherzustellen, dass keine untergewichtigen Lebensmittelportionen erzeugt werden. Dies kann insbesondere vorgesehen sein, wenn die Bepreisung der Lebensmittelportionen gewichtsabhängig erfolgt, jedoch ein minimales Gewicht, insbesondere das Lebensmittelportion-Sollgewicht, oder eine minimale Anzahl an Teilportionen oder Scheiben nicht unterschritten werden darf oder soll. Darüber hinaus kann durch Einstellen der minimalen Differenz auch eine Anpassung an verschiedene Produkte oder Anforderungen an die Genauigkeit des Gewichts der erzeugten Lebensmittelportionen erfolgen.

Die Stapelvorrichtung kann bei einigen Ausführungsformen eine Messeinrichtung zum Bestimmen einer Höhe von auf dem Stapelabschnitt abgelegten Teilportionen aufweisen und das System kann eine Aussortiereinrichtung umfassen. Die Steuereinrichtung kann bei solchen Ausführungsformen dazu ausgebildet sein, die Aussortiereinrichtung zum Aussortieren der abgelegten Teilportionen anzusteuern, wenn die bestimmte Höhe eine vorgegebene oder vorgebbare Maximalhöhe überschreitet und das gemessene Gewicht der abgelegten Teilportionen ein Lebensmittelportion-Sollgewicht unterschreitet.

Beispielsweise kann es vorgesehen sein, die Lebensmittelportionen in einem folgenden Verarbeitungsschritt zu verpacken, wobei durch die Verpackungen eine Maximalhöhe für Lebensmittelportionen vorgegeben sein kann, welche in der Verpackung aufgenommen werden können. Wenn diese Maximalhöhe auf dem Stapelabschnitt bereits erreicht ist, das Gewicht der abgelegten Teilportionen das Lebensmittelportion-Sollgewicht jedoch unterschreitet, kann das Lebensmittelportionen-Sollgewicht folglich nicht erreicht werden, ohne die Maximalhöhe zu überschreiten wird. Insofern können die auf dem Stapelabschnitt abgelegten Teilportionen als dazu ungeeignet klassifiziert werden, eine ordnungsgemäße Lebensmittelportion zu erzeugen. Die abgelegten Teilportionen können daher für die weiteren Verarbeitungsschritte nicht verwendet werden, so dass die Steuereinrichtung die Aussortiereinrichtung zum automatischen Aussortieren der abgelegten Teilportionen ansteuern kann, um insbesondere Störungen des Verpackungsvorgangs zu verhindern. Die Messeinrichtung kann beispielsweise einen Abstandssensor umfassen, um die Höhe der abgelegen Teilportionen durch den Abstand zwischen dem Abstandssensor und der obersten abgelegten Scheibe bestimmen zu können.

Zum Aussortieren kann es beispielsweise vorgesehen sein, dass der Stapelabschnitt ein antreibbares Förderband umfasst, wobei die auszusortierenden Teilportionen entgegen einer Förderrichtung bewegt werden können, entlang welcher vollständige Lebensmittelportionen weiteren Verarbeitungsschritten zugeführt werden, um die Teilportionen etwa in einen Ausschussbehälter zu bewegen. Es kann jedoch auch vorgesehen sein, dass das System eine sich an die Stapelvorrichtung anschließende Verteileinrichtung umfasst, um weiterzuverarbeitende Lebensmittelportionen einerseits und nicht zu verwendende Teilportionen andererseits auf verschiedene Spuren zu verteilen.

Die Steuereinrichtung kann bei einigen Ausführungsformen dazu ausgebildet sein, in Abhängigkeit von der Messung der Waage während des Bildens einer Lebensmittelportion eine Schneidgeschwindigkeit der Aufschneidevorrichtung und/oder eine Transportgeschwindigkeit der Transporteinrichtung anzupassen.

Insbesondere kann es vorgesehen sein, eine Schneidgeschwindigkeit der Aufschneidevorrichtung und/oder eine Transportgeschwindigkeit der Transporteinrichtung zu erhöhen, wenn während des Bildens einer Lebensmittelportion bereits erkannt wird, dass voraussichtlich eine weitere Teilportion hinzugefügt werden muss, um das Lebensmittelportion-Sollgewicht zu erreichen. Durch ein Beschleunigen der Aufschneidevorrichtung und/oder der Transporteinrichtung kann in solchen Fällen erreicht werden, dass die weitere Teilportion die Stapelvorrichtung früher erreicht und die insgesamt zum Bilden der Lebensmittelportion mit der weiteren Teilportion benötigte Zeit verringert werden kann, um beispielsweise einen Takt von sich an das Bilden der Lebensmittelportion anschließenden weiteren Verarbeitungsschritten nicht zu beeinträchtigen und die Lebensmittelportion möglichst in einer durch diesen Takt vorgegebenen Zeit vollständig bilden zu können. Nach dem Fertigstellen einer solchen Lebensmittelportion mit einer weiteren Teilportion können die Schneidgeschwindigkeit der Aufschneidevorrichtung und/oder die Transportgeschwindigkeit der Transporteinrichtung hingegen wieder auf eine vorgesehene Geschwindigkeit verlangsamt werden.

Das System kann bei einigen Ausführungsformen zumindest eine erste Stapelvorrichtung und eine zweite Stapelvorrichtung sowie eine erste Waage zum Bestimmen des Gewichts der zu der ersten Stapelvorrichtung bewegten Teilportionen und/oder der an der ersten Stapelvorrichtung gebildeten Lebensmittelportion und eine zweite Waage zum Bestimmen des Gewichts der zu der zweiten Stapelvorrichtung bewegten Teilportionen und/oder der an der zweiten Stapelvorrichtung gebildeten Lebensmittelportion aufweisen. Ferner kann die Transporteinrichtung eine Verteileinrichtung zum wahlweisen Verteilen von Teilportionen zu der ersten Stapelvorrichtung oder zu der zweiten Stapelvorrichtung aufweisen, wobei die Steuereinrichtung dazu ausgebildet sein kann, die Verteileinrichtung in Abhängigkeit von Messungen der ersten Waage und der zweiten Waage anzusteuern.

Insbesondere kann die Steuereinrichtung bei einigen Ausführungsformen dazu ausgebildet sein, die Verteileinrichtung und/oder die Aufschneidevorrichtung derart anzusteuern, dass Differenzen zwischen einem jeweiligen Gesamtgewicht der zu der ersten Stapelvorrichtung und zu der zweiten Stapelvorrichtung bewegten Teilportionen ausgleichbar sind.

Wie bereits erläutert, kann durch ein System mit zwei Stapelvorrichtungen beispielsweise der Produktdurchsatz erhöht werden, indem die Aufschneidegeschwindigkeit der Aufschneidevorrichtung und das Bilden der Teilportionen insbesondere nicht an gegebenenfalls langsamere Stapelvorgänge angepasst werden muss. Um jedoch eine gleichmäßige Verarbeitung an beiden Stapelvorrichtungen zu erreichen, kann das jeweilige an den Stapelvorrichtungen verarbeitete Gesamtgewicht der Teilportionen bestimmt werden. Dazu kann es beispielsweise vorgesehen sein, eine Scheibendicke von Scheiben, die zu einer der ersten oder der zweiten Stapelvorrichtung geführt werden, an welcher ein geringeres Gesamtgewicht verarbeitet wurde, gezielt zu erhöhen, um an dieser Stapelvorrichtung zeitweise gezielt, insbesondere geringfügig, übergewichtige Teilportionen zu verarbeiten. Insbesondere bei einem bekannten Verteilschema und beispielsweise einem abwechselnden Verteilen der Teilportionen zu den beiden Stapelvorrichtungen kann gezielt jede zweite Teilportion leicht übergewichtig geschnitten werden, um ein gleichmäßiges kumuliertes Gewicht pro Stapelvorrichtung zu erhalten. Grundsätzlich kann es jedoch auch vorgesehen sein, durch entsprechendes Ansteuern der Verteileinrichtung zeitweise mehr Teilportionen zu der ersten Stapelvorrichtung oder zu der zweiten Stapelvorrichtung zu bewegen, wenn an einer der Stapelvorrichtungen ein geringeres Gesamtgewicht von Teilportionen verarbeitet wurde.

Die Waage kann bei einigen Ausführungsformen eine Wägezelle oder mehrere Wägezellen aufweisen. Insbesondere kann das Gewicht der Teilportionen und/oder der Lebensmittelportion somit an einem Messpunkt oder an mehreren Messpunkten gemessen werden. Auch bei einem Bestimmen des Gewichts an der Transporteinrichtung und/oder dem Stapelabschnitt können an einem Förderband beispielsweise mehrere Wägezellen angeordnet sein, um das Gewicht einer über dieses Förderband bewegten oder auf diesem Förderband abgelegten Teilportion an mehreren Messpunkten bestimmen und etwaige Dreh- oder Kippmomente ausgleichen zu können.

Der Stapelabschnitt kann bei einigen Ausführungsformen ein endlos umlaufendes und mittels eines Antriebs antreibbares Förderband umfassen. Beispielsweise können die auf dem Stapelabschnitt gebildeten Lebensmittelportionen durch Antreiben des Förderbandes von dem Stapelabschnitt wegbewegbar sein, um nachfolgenden Verarbeitungsschritten und insbesondere einer Verpackungsmaschine zugeführt werden zu können.

Das System kann bei einigen Ausführungsformen eine weitere Transporteinrichtung und eine Verpackungsmaschine, insbesondere eine Tiefziehverpackungsmaschine, umfassen, wobei die Lebensmittelportion an die weitere Transporteinrichtung übergebbar und die weitere Transporteinrichtung dazu ausgebildet sein kann, die Lebensmittelportionen zu der Verpackungsmaschine zu transportieren. Insbesondere kann die weitere Transporteinrichtung dazu ausgebildet sein, die Lebensmittelportionen von der Verpackungsmaschine bewegbaren Packungen oder Packungsbestandteilen zuzuführen und insbesondere die Lebensmittelportionen in von der Verpackungsmaschine bewegbare Packungen oder Packungsbestandteile einzulegen oder auf solche aufzulegen.

Mittels eines solchen Systems kann somit eine vollständige Verarbeitung der Lebensmittelprodukte erfolgen, indem diese mittels der Aufschneidevorrichtung in Scheiben geschnitten und Teilportionen aus einer oder mehreren Scheiben erzeugt werden, die Teilportionen von der Fördereinrichtung an die Transporteinrichtung übergeben und von der Transporteinrichtung auf die Produktauflage der Stapelvorrichtung bewegt werden, um auf dem Stapelabschnitt abgelegt zu werden und eine Lebensmittelportion aus mehreren Teilportionen zu bilden. Die Lebensmittelportion kann sodann, insbesondere von einem endlos umlaufenden Förderband des Stapelabschnitts, an die weitere Transporteinrichtung übergeben und an die Verpackungsmaschine transportiert werden, um in Packungen oder Packungsbestandteile eingelegt zu werden, so dass letztlich eine vollständig verpackte Lebensmittelportion bereitgestellt werden kann.

Ferner kann eine Stapelvorrichtung, insbesondere eine Stapelvorrichtung zur Verwendung in einem System der hierin beschriebenen Art, zumindest eine zwischen einer Zuführstellung und einer Ablegestellung bewegbare Produktauflage sowie einen unterhalb der Produktauflage angeordneten Stapelabschnitt aufweisen und dazu ausgebildet sein, auf die Produktauflage bewegte Teilportionen, die zumindest eine mittels einer Aufschneidevorrichtung von einem Lebensmittelprodukt, insbesondere Fleischprodukt, Wurst, Käse, Schinken und/oder Bacon, abgetrennte Scheibe umfassen, durch Bewegen der Produktauflage aus der Zuführstellung in die Ablegestellung auf dem Stapelabschnitt abzulegen und auf dem Stapelabschnitt eine mehrere Teilportionen umfassende Lebensmittelportion zu bilden, insbesondere durch Aufeinanderstapeln der mehreren Teilportionen. Die Stapelvorrichtung weist dabei eine Waage zum Bestimmen des Gewichts der Teilportionen und/oder der Lebensmittelportion auf.

Wie bereits erläutert, ermöglicht es eine solche Stapelvorrichtung mit integrierter Waage insbesondere, das Gewicht der Teilportionen und/oder der Lebensmittelportion zu bestimmen, so dass dieses Gewicht bei einer Steuerung eines Systems zur Verarbeitung von Lebensmittelprodukten genutzt oder berücksichtigt werden kann. Eine Stapelvorrichtung mit integrierter Waage kann somit eine wahlweise und flexibel in ein solches System einsetzbare Einheit bilden, um eine erweiterte Prozesssteuerung und/oder -überwachung zu ermöglichen.

Bei einigen Ausführungsformen kann der Stapelabschnitt die Waage aufweisen, wobei die Waage dazu ausgebildet sein kann, das Gewicht der auf dem Stapelabschnitt abgelegten Teilportionen zu bestimmen. Insbesondere kann die Waage auch dazu ausgebildet sein, das Gewicht der auf dem Stapelabschnitt gebildeten Lebensmittelportion zu bestimmen. Wie bereits erläutert, kann grundsätzlich sowohl das Gewicht der einzelnen Teilportionen als auch der erzeugten Lebensmittelportion unmittelbar mittels der Waage bestimmbar sein.

Die Produktauflage und/oder der Stapelabschnitt können bei einigen Ausführungsformen über ein Gestell, insbesondere über ein gemeinsames Gestell, am Boden abstützbar sein, wobei die Waage unterhalb der Produktauflage und/oder unterhalb des Stapelabschnitts an dem Gestell angeordnet sein kann. Das Gestell kann somit teilweise über die Waage am Boden abgestützt sein, so dass die Waage das Gewicht dieses Teils des Gestells und der oberhalb der Waage angeordneten Komponenten messen und feststellen kann, wenn sich das Gewicht durch Aufnehmen einer Teilportion erhöht.

Das Gestell kann bei einigen Ausführungsformen zumindest drei, insbesondere vier, Stützabschnitte aufweisen, über welche die Produktauflage und/oder der Stapelabschnitt am Boden abstützbar sind, wobei die Waage an zumindest einem der Stützabschnitte angeordnet sein kann. Insbesondere kann die Waage mehrere Wägezellen umfassen, wobei an jedem der Stützabschnitte eine jeweilige Wägezelle angeordnet sein kann. Bei den Stützabschnitten kann es sich insbesondere um jeweilige Beine oder Füße des Gestells handeln, wobei jedem der Stützabschnitte eine jeweilige Wägezelle zugeordnet sein kann und das Gewicht der Teilportionen und/oder der Lebensmittelportion anhand der Messergebnisse der mehreren Wägezellen bestimmbar sein kann.

Die Stapelvorrichtung kann bei einigen Ausführungsformen einen Antrieb zum Bewegen der Produktauflage aufweisen, wobei der Antrieb einen Motor und eine Welle umfassen kann, an welcher die Produktauflage angeordnet ist. Die Produktauflage kann durch Drehen der Welle von der Zuführstellung in die Ablegestellung bewegbar sein. Insbesondere kann es vorgesehen sein, die Produktauflage durch Drehen der Welle um 90° von einer horizontalen Ausrichtung in eine vertikale Ausrichtung zu überführen, um eine in der horizontalen Ausrichtung aufgenommene Teilportion auf dem Stapelabschnitt abzulegen. Dazu kann die Produktauflage an einer Außenseite an der Welle befestigt sein.

Bei einigen Ausführungsformen kann die Welle über einer Reibkupplung mit einer Motorwelle des Motors verbunden sein.

Indem die Motorwelle des Motors über eine Reibkupplung mit der Welle verbunden sein kann, an welcher die Produktauflage angeordnet ist, kann eine Drehung der Motorwelle durch Reibung auf die Welle übertragen werden. Durch eine solche Reibkupplung kann somit insbesondere auch ein maximal mittels des Motors auf die Welle und die Produktauflage übertragbares Drehmoment festlegbar sein, indem die Welle gegenüber der Motorwelle gewissermaßen durchrutschen kann, wenn der Drehung der Welle ein Drehmoment entgegengesetzt wird, das das durch die Reibung von der Motorwelle auf die Welle übertragbare Drehmoment übersteigt. Die Welle kann somit blockieren und anhalten, obwohl die Motorwelle weiterdreht. Aufgrund dieses Durchrutschens der Welle kann eine solche Reibkupplung auch als Rutschkupplung bezeichnet werden.

Die Ausbildung der Stapelvorrichtung mit einer solchen über eine Reibkupplung mit der Motorwelle verbundene Welle kann insbesondere die Sicherheit der Stapelvorrichtung erhöhen, indem das auf die Produktauflage übertragbare Drehmoment eingestellt und beschränkt werden kann. Hierdurch kann beispielsweise verhindert werden, dass bei einem Eingreifen eines Benutzers in die Stapelvorrichtung große Kräfte über die Produktauflage übertragen werden und der Benutzer verletzt werden kann. Vielmehr kann ein Weiterdrehen im Fall eines solchen Eingriffs verhindert werden, indem der Benutzer die Produktauflage und die Drehung der Welle blockiert, so dass die Welle gegenüber der Motorwelle durchrutscht und trotz des Weiterdrehens der Motorwelle anhält.

Daher ermöglicht es eine solche Reibkupplung auch, auf andernfalls erforderliche Sicherheitsvorkehrungen zum Schutz eines möglicherweise während des Betriebs in die Stapelvorrichtung eingreifenden Benutzers zu verzichten. Insbesondere ist es bei herkömmlichen Stapelvorrichtungen erforderlich, eine verhältnismäßig große Einhausung vorzusehen, so dass ein Benutzer überhaupt nicht in den Bereich der Produktauflagen eingreifen kann, um vorgegebene Sicherheitsstandards zu erfüllen. Während auch dadurch Verletzungen des Benutzers zuverlässig verhindert werden können, müssen diese Einhausungen insbesondere auch zu Wartungs- und/oder Reinigungszwecken entfernt werden, so dass sich solche Vorgänge verhältnismäßig zeitaufwendig und umständlich gestalten. Durch das Vorsehen einer Reibkupplung zwischen der Welle und der Motorwelle können die Sicherheitsstandards hingegen erfüllt werden, ohne dass ein Eingriff während des Betriebs zwangsläufig und durch entsprechende Einhausungen verhindert werden muss, so dass auf die Einhausung verzichtet oder die Einhausung zumindest verkleinert werden kann. Dadurch kann insbesondere der Zugang zu den Produktauflagen erleichtert werden, so dass gerade die in der Lebensmittelverarbeitung häufig erforderlichen Reinigungsvorgänge beschleunigt durchgeführt und Betriebsunterbrechungen verringert werden können.

Angesichts der Möglichkeiten, durch das Vorsehen einer Reibkupplung die Sicherheit der Stapelvorrichtung zu erhöhen und/oder auf weitere Sicherheitsvorkehrungen zu verzichten und dadurch Wartungs- oder Reinigungsarbeiten zu erleichtern, bezieht sich die Erfindung auch - unabhängig von einer Stapelvorrichtung mit integrierter Waage - auf eine Stapelvorrichtung zum Erstellen von Lebensmittelportionen, welche zumindest eine zwischen einer Zuführstellung und einer Ablegestellung bewegbare Produktauflage sowie einen unterhalb der Produktauflage angeordneten Stapelabschnitt aufweist und welche dazu ausgebildet ist, auf die Produktauflage bewegte Teilportionen, die zumindest eine mittels einer Aufschneidevorrichtung von einem Lebensmittelprodukt, insbesondere Fleischprodukt, Wurst, Käse, Schinken und/oder Bacon, abgetrennte Scheiben umfassen, durch Bewegen der Produktauflage aus der Zuführstellung in die Ablegestellung auf dem Stapelabschnitt abzulegen und auf dem Stapelabschnitt eine mehrere Teilportionen umfassende Lebensmittelportion zu bilden, insbesondere durch Aufeinanderstapeln der mehreren Teilportionen, wobei die Stapelvorrichtung einen Antrieb zum Bewegen der Produktauflage aufweist, welcher einen Motor und eine Welle umfasst, wobei die Produktauflage an der Welle angeordnet und durch Drehen der Welle von der Zuführstellung in die Ablegestellung bewegbar ist und wobei die Welle über eine Reibkupplung mit einer Motorwelle des Motors verbunden ist.

Die Stapelvorrichtung kann bei einigen Ausführungsformen der Stapelvorrichtung, insbesondere mit integrierter Waage, zumindest eine erste Produktauflage und eine zweite Produktauflage umfassen, welche eine gemeinsame Produktauflagefläche für die Teilportionen bilden. Dabei können die erste Produktauflage und die zweite Produktauflage an einander entgegengesetzten Außenseiten mit einer jeweiligen Welle verbunden sein, wobei die erste Produktauflage und die zweite Produktauflage durch gegensinniges Drehen der Wellen aus der Zuführstellung in die Ablegestellung verschwenkbar sein können, und wobei der Antrieb einen gemeinsamen Motor zum Antreiben der Wellen aufweisen kann.

Insbesondere kann der Antrieb beide Wellen umfassen. Durch das Antreiben der beiden Wellen über einen gemeinsamen Motor kann eine Synchronisation der Wellen erreicht werden, wozu die beiden Wellen beispielsweise durch einen Riemen verbunden sein können, so dass ein auf eine der Wellen übertragener Antrieb über den Riemen auf die andere Welle übertragbar sein kann. Darüber hinaus ermöglicht es eine solche Verbindung der Wellen über einen Riemen auch, die Wellen synchron anzuhalten, wenn eine der Wellen über eine Reibkupplung mit einer Motorwelle des Motors verbunden ist und an einer der Wellen ein zu großes Drehmoment übertragen werden müsste, um die jeweilige Produktauflage weiterzubewegen. Insofern können bei einem Blockieren einer der Produktauflagen beide Wellen synchron angehalten werden, so dass nach Beheben der Blockade beide Wellen weiterhin synchronisiert bzw. mit in entsprechenden Drehstellungen angeordneten Produktauflagen weiterbewegt werden können.

Eine solche Ausbildung der Stapelvorrichtung mit einer ersten Produktauflage und einer zweiten Produktauflage und/oder mit einer Reibkupplung kann auch bei einer vorstehend im Zusammenhang mit einem System zum Verarbeiten von Lebensmitteln beschriebenen Stapelvorrichtung vorgesehen sein.

Bei einigen Ausführungsformen können der Antrieb und die Produktauflage über die Waage am Boden abgestützt sein. Die Waage kann somit das Gewicht des Antriebs, der Produktauflage sowie der auf die Produktauflage bewegten Teilportionen messen, um dadurch das Gewicht der Teilportionen und/oder der Lebensmittelportion zu bestimmen.

Ferner kann die Welle bei einigen Ausführungsformen über zumindest ein Lager an der Stapelvorrichtung gelagert sein, wobei die Waage an dem zumindest einen Lager angeordnet sein kann. Insbesondere kann die Welle oder können mehrere Wellen über mehrere jeweilige Lager an der Stapelvorrichtung abgestützt sein, wobei an zumindest einem, insbesondere jedem, der Lager eine Wägezelle angeordnet sein kann. Es kann auch vorgesehen sein, dass auch der Motor über das oder die Lager und somit die Waage an der Stapelvorrichtung abgestützt ist.

Die Erfindung betrifft ferner ein Verfahren zum Betreiben eines Systems zum Verarbeiten von Lebensmittelprodukten, insbesondere Fleischprodukten, Wurst, Käse, Schinken und/oder Bacon, insbesondere ein Verfahren zum Betreiben eines Systems der hierin offenbarten Art. Bei diesem Verfahren werden riegelförmige Lebensmittelprodukte in eine Schneidebene einer Aufschneidevorrichtung geführt und mittels eines in der Schneidebene bewegbaren Messers werden Scheiben von dem Lebensmittelprodukt abgetrennt. Ferner werden Teilportionen auf einem Portionierabschnitt der Aufschneidevorrichtung gebildet, die eine oder mehrere abgetrennte Scheiben umfassen. Die Teilportionen werden von einer Fördereinrichtung des Portionierabschnitts, insbesondere von einem Förderband, an eine Transporteinrichtung übergeben und mittels der Transporteinrichtung auf eine Produktauflage einer Stapelvorrichtung bewegt, wobei die nacheinander auf die Produktauflage transportierten Teilportionen auf einem Stapelabschnitt der Stapelvorrichtung abgelegt werden und eine Lebensmittelportion gebildet wird, die mehrere Teilportionen umfasst. Zudem wird das Gewicht der Teilportionen und/oder der Lebensmittelportion an der Transporteinrichtung und/oder der Stapelvorrichtung gemessen.

Wie bereits erläutert, ermöglicht ein solches dem Portionierabschnitt und der Aufschneidevorrichtung nachgelagertes Wiegen der Teilportionen und/oder der Lebensmittelportion auch bei einem solchen Zusammenstellen von großen Lebensmittelportionen aus mehreren Teilportionen das Gewicht der Teilportionen und/oder der Lebensmittelportion bei der Steuerung des Systems und insbesondere der Aufschneidevorrichtung zu berücksichtigen, wohingegen ein Messen unmittelbar an dem Portionierabschnitt in der Regel nicht möglich ist. Die Waage kann dazu insbesondere an der dem Portionierabschnitt nachgelagerten Transporteinrichtung und/oder der Stapelvorrichtung angeordnet sein, wie vorstehend erläutert ist.

Bei einigen Ausführungsformen kann eine Dicke der abgetrennten Scheiben und/oder eine Anzahl der Scheiben einer Teilportion in Abhängigkeit von dem gemessenen Gewicht der Teilportionen und/oder der Lebensmittelportion angepasst werden. Insbesondere kann die Dicke der abgetrennten Scheiben erhöht werden, wenn das gemessene Gewicht der Teilportionen geringer als ein Teilportion-Sollgewicht ist, und die Dicke kann verringert werden, wenn das Gewicht größer als das Teilportion-Sollgewicht ist.

Ferner kann bei einigen Ausführungsformen eine Regelung durchgeführt werden, bei welcher das Gewicht der Teilportionen und/oder der Lebensmittelportion die Regelgröße und die Dicke der Scheiben und/oder die Anzahl der Scheiben einer Teilportion die Stellgröße ist. Das Gewicht der Teilportionen und/oder der Lebensmittelportion kann somit wiederholt gemessen und in einem Regelkreis mit einem Sollgewicht verglichen werden, um den Verarbeitungsprozess und insbesondere das Aufschneiden der Lebensmittelprodukte laufend anpassen und optimieren zu können.

Bei einigen Ausführungsformen kann eine vorbestimmte Anzahl von Teilportionen für die Lebensmittelportion vorgesehen sein, wobei automatisch eine weitere Teilportion zu der auf den Stapelabschnitt abgelegten vorbestimmten Anzahl von Teilportionen hinzugefügt werden kann, wenn das gemessene Gewicht der vorbestimmten Anzahl von Teilportionen ein Lebensmittelportion-Sollgewicht unterschreitet. Alternativ oder zusätzlich kann die Lebensmittelportion gekennzeichnet werden, wenn das gemessene Gewicht der vorbestimmten Anzahl von Teilportionen das Lebensmittelportion-Sollgewicht unterschreitet. Wie bereits erläutert, kann durch ein automatisches Hinzufügen einer weiteren Teilportion verhindert werden, dass manuelle Überprüfungen der Lebensmittelportionen und gegebenenfalls ein manuelles Hinzufügen von Scheiben oder Teilportionen erforderlich sind. Durch Kennzeichnen einer Lebensmittelportion kann ferner einem Benutzer unmittelbar angezeigt werden, wenn noch Scheiben oder Lebensmittelportionen hinzugefügt werden müssen oder Scheiben entnommen werden sollten. Es kann auch vorgesehen sein, dass der Benutzer durch ein optisch und/oder akustisch wahrnehmbares Signal darauf hingewiesen wird, dass das Lebensmittelportion-Sollgewicht nicht erreicht wurde.

Insbesondere kann dabei vorgesehen sein, dass in Abhängigkeit von einer Differenz zwischen dem Gewicht der vorbestimmten Anzahl von Teilportionen und dem Lebensmittelportionen-Sollgewicht eine weitere Teilportion hinzugefügt wird und/oder eine Kennzeichnung der Lebensmittelportion erfolgt. Beispielsweise kann lediglich dann eine vollständige weitere Teilportion hinzugefügt werden, wenn die Differenz groß ist, um das Erzeugen stark übergewichtiger Lebensmittelportionen zu verhindern. Eine minimale Differenz, bei welcher noch eine weitere Teilportion hinzugefügt wird, kann ferner von einem Benutzer einstellbar sein.

Bei einigen Ausführungsformen kann eine Höhe der auf dem Stapelabschnitt abgelegten Teilportionen bestimmt werden, wobei die durch die abgelegten Teilportionen gebildete Lebensmittelportion aussortiert werden kann, wenn die bestimmte Höhe eine vorgegebene Maximalhöhe überschreitet und das gemessene Gewicht der Lebensmittelportion ein Lebensmittelportion-Sollgewicht unterschreitet. Insbesondere können dadurch Lebensmittelportionen, die bereits eine zu große Höhe zum Einlegen in eine Verpackung, jedoch ein zu geringes Gewicht aufweisen, aussortiert werden.

Auch die weiteren Maßnahmen, die vorstehend im Zusammenhang mit der Steuereinrichtung des Systems zum Verarbeiten von Lebensmittelprodukten beschrieben wurden, können als Verfahrensschritte bei diesem Verfahren durchgeführt werden. Insbesondere kann auch bei dem Verfahren vorgesehen sein, eine optische Waage der Aufschneidevorrichtung durch das gemessene Gewicht der Teilportionen und/oder der Lebensmittelportionen zu kontrollieren und/oder einzustellen.

Die Erfindung wird im Folgenden rein beispielhaft anhand von Ausführungsbeispielen unter Bezugnahme auf die Zeichnungen erläutert. Es zeigen:
- Fig. 1A und 1B: eine jeweilige perspektivische Darstellung eines Systems zur Verarbeitung von Lebensmittelprodukten, welches eine Aufschneidevorrichtung zum Erzeugen von Teilportionen, die eine oder mehrere von einem Lebensmittelprodukt abgetrennte Scheiben umfassen, eine Transporteinrichtung sowie eine Stapelvorrichtung umfasst, welche dazu ausgebildet ist, die Teilportionen auf einem Stapelabschnitt zu stapeln und eine mehrere Teilportionen umfassende Lebensmittelportion zu bilden,
- Fig. 2: eine schematische Darstellung der Aufschneidevorrichtung,
- Fig. 3: eine Darstellung einer von dem Lebensmittelprodukt abgetrennten Scheibe,
- Fig. 4A und 4B: eine perspektivische Ansicht und eine Vorderansicht der Stapelvorrichtung mit sich in einer Zuführstellung befindenden Produktauflagen, in welcher Teilportionen auf die Produktauflagen bewegbar sind,
- Fig. 5A und 5B: eine perspektivische Ansicht und eine Vorderansicht der Stapelvorrichtung bei in eine Ablegestellung bewegten Produktauflagen, in welcher die auf die Produktauflagen bewegten Teilportionen auf dem Stapelabschnitt abgelegt werden können,
- Fig. 6: eine Vorderansicht einer weiteren Ausführungsform der Stapelvorrichtung,
- Fig. 7: eine Vorderansicht einer weiteren Ausführungsform der Stapelvorrichtung,
- Fig. 8A und 8B: eine perspektivische Rückansicht einer Ausführungsform der Stapelvorrichtung sowie eine perspektivische Ansicht eines Antriebs der Stapelvorrichtung zum Bewegen der Produktauflagen,
- Fig. 9A und 9B: eine perspektivische Ansicht sowie eine Seitenansicht einer weiteren Ausführungsform eines Systems zum Verarbeiten von Lebensmitteln und
- Fig. 10: eine schematische Ansicht einer weiteren Ausführungsform eines Systems zum Verarbeiten von Lebensmitteln.

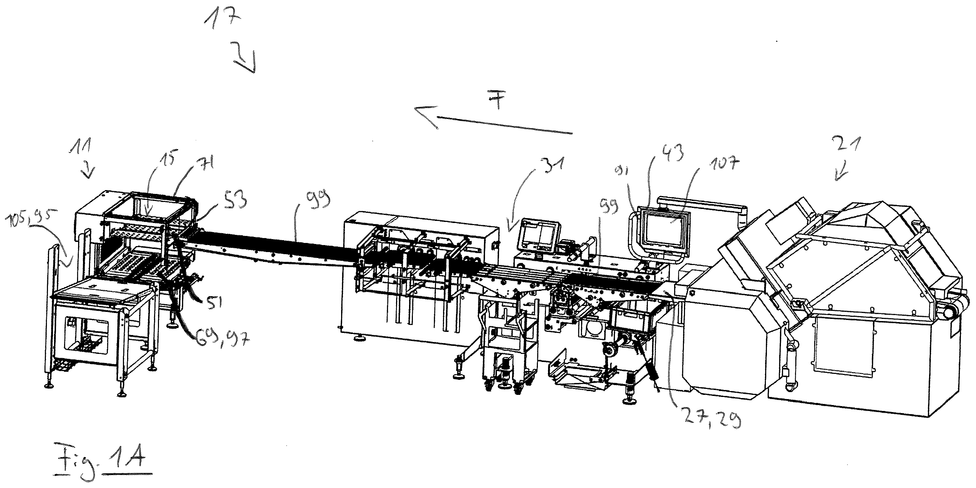

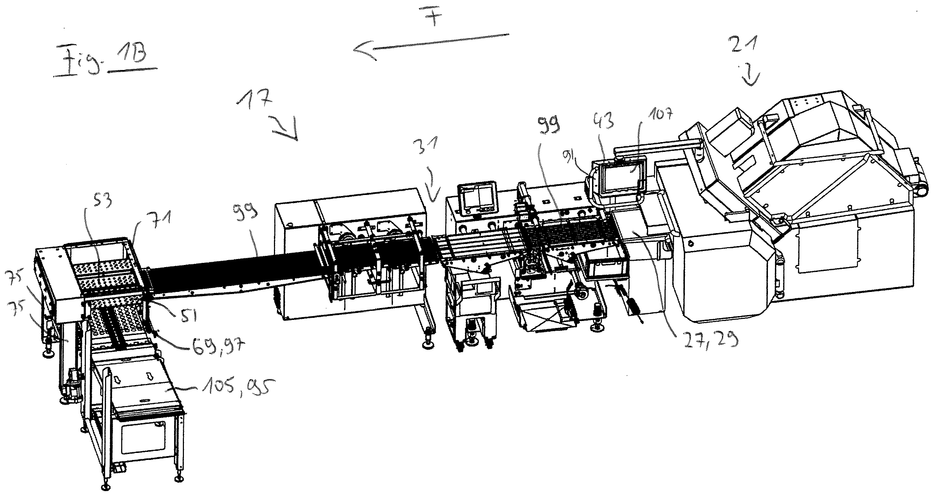

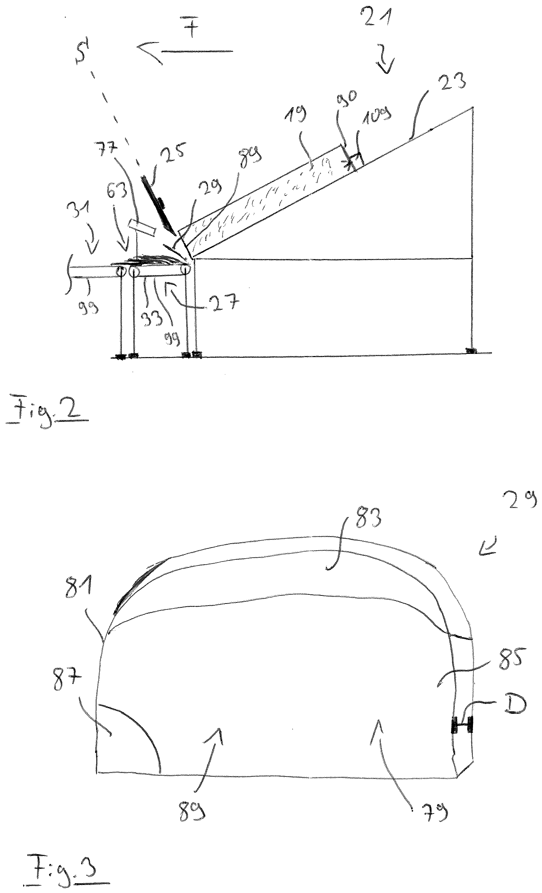

Die Fig. 1A und 1B zeigen ein System 17 zum Verarbeiten von Lebensmittelprodukten 19, bei welchen es sich insbesondere um Fleischprodukte, Wurst, Käse, Schinken und/oder Bacon handeln kann (vgl. auch Fig. 2 und 3). Das System 17 umfasst eine Aufschneidevorrichtung 21, welche schematisch in Fig. 2 veranschaulicht ist.

Die Aufschneidevorrichtung 21 weist eine Produktzufuhr 23 auf, mittels derer das riegelförmige Lebensmittelprodukt 19 in eine Schneidebene S führbar ist, in welcher ein Messer 25, welches insbesondere als Kreismesser oder Sichelmesser ausgebildet sein kann, umläuft und Scheiben 29 von dem vorderen Produktende 89 abtrennt. Dazu umfasst die Produktzufuhr 23 insbesondere einen Produktgreifer 103, welcher an einem hinteren Produktende 90 in das Lebensmittelprodukt 19 eingreift und das Lebensmittelprodukt 19 in Richtung der Schneidebene S vorschiebt.

Die von dem Messer 25 abgetrennten Scheiben 29 fallen auf einen Portionierabschnitt 27 und die Aufschneidevorrichtung 21 ist dazu ausgebildet, auf dem Portionierabschnitt 27 eine Teilportion 63 zu bilden, die mehrere von dem Lebensmittelprodukt 19 abgetrennte Scheiben 29 umfasst. Der Portionierabschnitt 27 umfasst dabei eine Fördereinrichtung 33 mit einem endlos umlaufenden Förderband 99, so dass die auf dem Portionierabschnitt 27 gesammelten Scheiben 29 entlang einer Förderrichtung F bewegt werden können, während weitere Scheiben 29 von dem Produkt 19 abgetrennt werden, um die Scheiben 29 der Teilportion 63 einander überlappend anzuordnen. Die Teilportion 63 kann dadurch bereits teilweise auf einem Förderband 99 einer dem Portionierabschnitt 27 nachgelagerten Transporteinrichtung 31 aufliegen, während noch Scheiben 29 zu der Teilportion 63 hinzugefügt werden, wobei die fertiggestellte Teilportion 63 letztlich mittels der Fördereinrichtung 33 an die Transporteinrichtung 31 übergeben werden können. Zum Trennen aufeinanderfolgender Teilportionen 63 kann die Aufschneidevorrichtung 21 dazu ausgebildet sein, einen oder mehrere Leerschnitte auszuführen, während derer das Messer 25 zwar eine Umdrehung ausführt, jedoch keine Scheibe 29 abgetrennt wird. Dazu kann der Produktgreifer 109 das Lebensmittelprodukt 19 beispielsweise kurzzeitig zurückziehen und/oder das Messer 25 kann aus der Schneidebene S herausbewegt und von dem Lebensmittelprodukt 19 entfernt werden.

Die in Fig. 2 veranschaulichte Aufschneidevorrichtung 21 weist zudem eine optische Waage 77 auf, mittels derer eine Solldicke D einer abzutrennenden Scheibe 29 ermittelt werden kann, bei welcher die Scheibe 29 ein vorgegebenes Sollgewicht aufweist (vgl. auch Fig. 3). Die optische Waage 77 ist dazu ausgebildet, eine Oberflächenstruktur 79 sowie eine Kontur 81 eines vorderen Produktendes 89 des Lebensmittelprodukts 19 zu ermitteln, wobei eine in den Fig. 1A und 1B gezeigte Steuereinrichtung 43 des Systems 17 und insbesondere der Aufschneidevorrichtung 21 dazu ausgebildet sein kann, anhand der von der optischen Waage 77 ermittelten Oberflächenstruktur 79 sowie der Kontur 81 des vorderen Produktendes 89 die Solldicke D für die abzutrennende Scheibe 29 zu ermitteln. Die Steuereinrichtung 43 kann ferner dazu ausgebildet sein, die Aufschneidevorrichtung 21 zu einem Abtrennen der Scheibe 29 mit der ermittelten Solldicke D anzusteuern, was insbesondere durch entsprechendes Einstellen einer Geschwindigkeit der Produktzufuhr 23 und/oder einer Schneidgeschwindigkeit des Messers 25 erfolgen kann.

Um die Oberflächenstruktur 79 und die Kontur 81 des vorderen Produktendes 89 bestimmen zu können, kann die optische Waage 77 eine Kamera umfassen und/oder als eine Kamera ausgebildet sein, mittels derer eine Abbildung des vorderen Produktendes 89 erzeugt werden kann. Die Steuereinrichtung 43 kann insbesondere dazu ausgebildet sein, durch eine Bildanalyse eine Dichte an dem vorderen Produktende 89 zu ermitteln und anhand der ermittelten Dichte sowie der Kontur 81 die Solldicke D zu bestimmen. Ferner kann die Steuereinrichtung 43 auch dazu ausgebildet sein, anhand der Kontur 81 eine Fläche des vorderen Produktendes 89 zu ermitteln. Die Auswertung der Oberflächenstruktur 79 und/oder der Kontur 81 kann zentral an der in Fig. 1A und 1B gezeigten Steuereinrichtung 43 erfolgen oder Komponenten der Steuereinrichtung 43 zum Auswerten einer von der optischen Waage 77 erzeugten Abbildung können direkt an der optische Waage 77 angeordnet und/oder in die optische Waage 77 integriert sein.

Wie in Fig. 3 veranschaulicht ist, kann die Oberflächenstruktur 79 der abzutrennenden Scheibe 29 bzw. des vorderen Produktendes 89 des Lebensmittelprodukts 19 durch einen Fettanteil 83, einen Fleischanteil 85 und einen Knochenanteil 87 bestimmt sein. Die Steuereinrichtung 43 kann dazu ausgebildet sein, den Fettanteil 83, den Fleischanteil 85 und den Knochenanteil 87 in einer von der optischen Waage 77 bereitgestellten Abbildung zu identifizieren und eine Dichte des vorderen Produktendes 89 zu ermitteln. Hierzu können beispielsweise in einem Speicher 91 jeweilige Dichtewerte für den Fettanteil 83, den Fleischanteil 85 und den Knochenanteil 87 hinterlegt sein, so dass die Steuereinrichtung 43 unter Berücksichtigung der jeweiligen Größe bzw. Fläche der Anteile 83, 85 und 87 eine durchschnittliche Dichte an dem vorderen Produktende 89 ermitteln kann. Die Solldicke D kann sodann anhand dieser Dichte und der durch die Kontur 81 vorgegebenen Fläche des vorderen Produktendes 89 derart bestimmt werden, dass die abzutrennende Scheibe 29 das vorgegebene Sollgewicht für eine Scheibe 29 aufweist. Alternativ zu der Berechnung einer durchschnittlichen Dichte kann die Ermittlung der Solldicke D auch derart erfolgen, dass jeweilige Flächenanteile oder von dem Fettanteil 83, dem Fleischanteil 85 und dem Knochenanteil 87 eingenommene Flächen bestimmt und mit jeweiligen hinterlegten Dichtewerten multipliziert werden, um die Solldicke D durch einen Vergleich mit dem Sollgewicht zu bestimmen. Die Dichtewerte und die weiteren zur Ermittlung der Solldicke D erforderlichen Parameter können insbesondere in einem Speicher 91 der Steuereinrichtung 43, insbesondere einem Halbleiterspeicher, hinterlegt sein. Ferner können in dem Speicher auch Zuordnungstabellen gespeichert sein, anhand derer eine Dichte und/oder unmittelbar die Solldicke D in Abhängigkeit von der ermittelten Oberflächenstruktur 79 und der Kontur 81 ermittelbar sind.

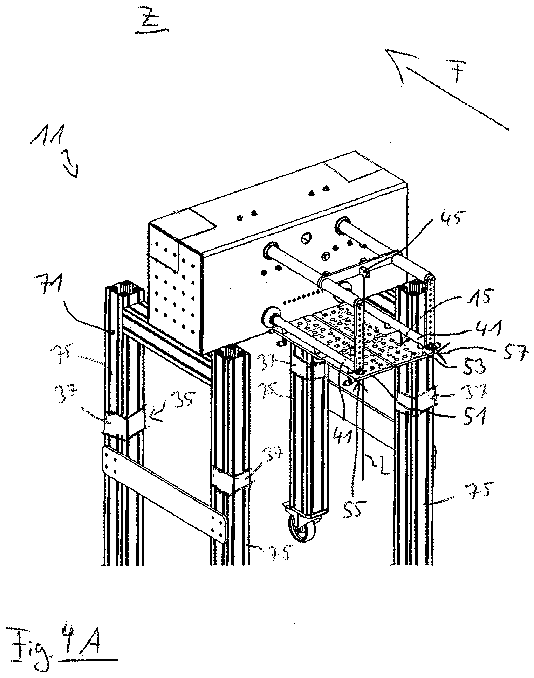

Wie bereits erwähnt, ist die Fördereinrichtung 33 des Portionierabschnitts 27 dazu ausgebildet, die Teilportion 63 entlang der Förderrichtung F an eine dem Portionierabschnitt 27 nachgelagerte Transporteinrichtung 31 des Systems 17 zu übergeben, welche wiederum mehrere Förderbänder 99 umfasst. Die Transporteinrichtung 31 ist dazu ausgebildet, die von der Fördereinrichtung 33 empfangenen Teilportionen 63 an eine Stapelvorrichtung 11 zu übergeben und insbesondere auf Produktauflagen 51 und 53 der Stapelvorrichtung 11 zu bewegen, welche in einer Zuführstellung Z gemeinsam eine Produktauflagefläche 15 für die Teilportionen 63 bilden (vgl. auch Fig. 4A bis 8B).

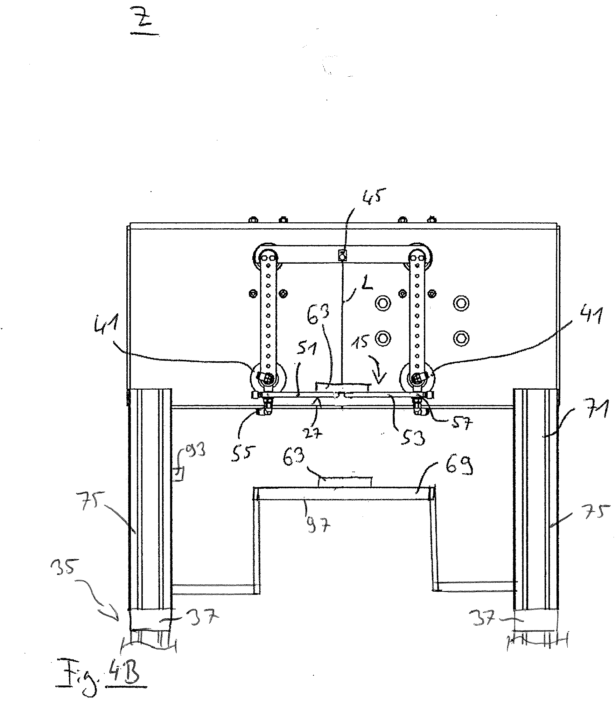

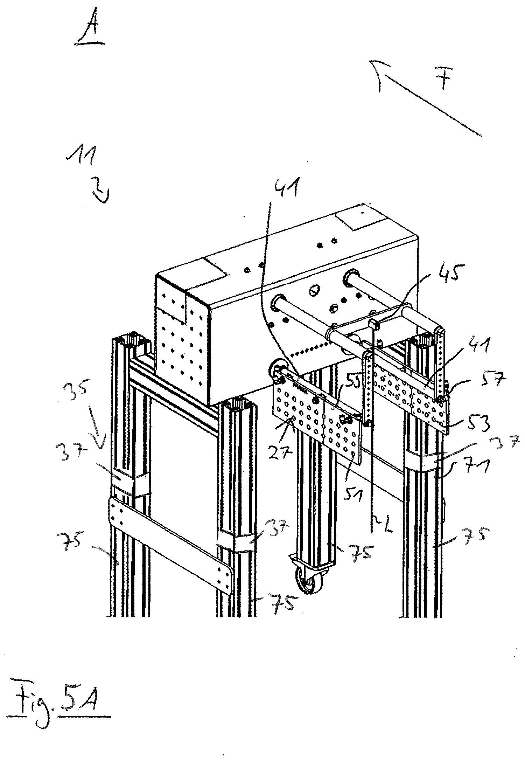

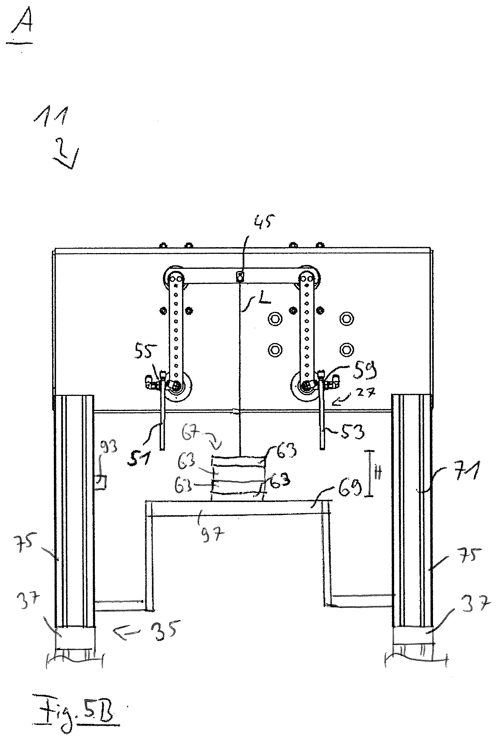

Die Stapelvorrichtung 11 ist anhand der Fig. 4A bis 8B näher veranschaulicht. Die Produktauflagen 51 und 53 sind in der Zuführstellung Z, in welcher Teilportionen 63 auf die Produktauflagen 51 und 53 auflegbar sind, horizontal ausgerichtet (vgl. Fig. 4A und 4B). Ferner sind die Produktauflagen 51 und 53 an jeweiligen Außenseiten 55 und 57 mit Wellen 41 verbunden, wobei die Produktauflagen 51 und 53 durch gegensinniges Drehen der Wellen 41 in eine Ablegestellung A bewegt werden können, in welcher die auf die Produktauflagen 51 und 53 bewegten Teilportionen 63 unterhalb der Produktauflagen 51 und 53 auf einem Stapelabschnitt 69 der Stapelvorrichtung 11 abgelegt werden können (vgl. Fig. 5A und 5B). Insbesondere können die Produktauflagen 51 und 53 bei der gezeigten Ausführungsform durch Drehen der Wellen 41 um 90° von der Zuführstellung Z in die Ablegestellung A und eine vertikale Ausrichtung bewegt werden, so dass auf den Produktauflagen 51 und 53 positionierte Teilportionen 63 entlang der Produktauflagen 51 und 53 abrutschen und auf den Stapelabschnitt 69 fallen.

Wie die Fig. 5B bis 7 veranschaulichen, können mittels der Stapelvorrichtung 11 mehrere von der Aufschneidevorrichtung 21 erzeugte Teilportionen 63 nacheinander auf dem Stapelabschnitt 69 abgelegt und insbesondere aufeinander gestapelt werden, so dass auf dem Stapelabschnitt 69 eine mehrere Teilportionen 63 umfassende Lebensmittelportion 67 gebildet werden kann. Die fertiggestellte Lebensmittelportion 67, welche hier beispielhaft vier Teilportionen 63 umfasst, kann von dem Stapelabschnitt 69, welcher dazu ein antreibbares Förderband 97 umfasst, an eine in den Fig. 1A und 1B gezeigte weitere Transporteinrichtung 105 übergeben werden, welche die Lebensmittelportion 67 beispielsweise an eine nicht gezeigte Verpackungsmaschine überführen kann, so dass die Lebensmittelportionen 67 in jeweilige Packungen oder Packungsteile eingelegt und verpackt werden können, um derart zum Verkauf angeboten werden.

Das System 17 kann somit eine vollständige Verarbeitung der Lebensmittelprodukte 19 ermöglichen, indem diese zunächst in Scheiben 29 geschnitten, aus mehreren Scheiben 29 Teilportionen 63 gebildet und mehrere Teilportionen 63 sodann mittels der Stapelvorrichtung 11 zu einer gemeinsamen Lebensmittelportion 67 zusammengefügt werden können, die verpackt und verkauft werden kann. Während es bei einer Verarbeitung von Lebensmittelprodukten 19 zum Verkauf für Endverbrauch vorgesehen sein kann, von der Aufschneidevorrichtung 21 unmittelbar zusammengestellte Scheiben 29 direkt als Portionen zu verpacken und zum Verkauf anzubieten, kann ein solches Erstellen von Lebensmittelportionen 67 mit mehreren Teilportionen 63 insbesondere bei einem Verkauf an Großabnehmer, beispielsweise die Gastronomie oder die Hotellerie, vorgesehen sein. Dabei können an der Aufschneidevorrichtung 21 insbesondere mittels eines nicht gezeigten Underleaver Folien oder Papierblätter unterhalb der Teilportionen 63 eingebracht werden, um ein einfaches Trennen der Teilportionen 63 einer Lebensmittelportion 67 bei einem Entnehmen aus der Verpackung zu ermöglichen.

Bei einem solchen System ist es jedoch erforderlich, einerseits einen hohen Produkt- und Portionsdurchsatz zu erreichen, andererseits den Prozess jedoch kontrolliert durchzuführen, wobei insbesondere ein vorgegebenes Lebensmittelportion-Sollgewicht für die Lebensmittelportionen 67 zu erreichen sein kann. Während es bei Aufschneidevorrichtungen 21 zum Bilden kleinerer Portionen meist vorgesehen ist, das Gewicht der abgetrennten Scheiben 29 unmittelbar an dem Portionierabschnitt 27 zu bestimmen und dadurch zu überprüfen, ob die dort gebildeten Portionen ein vorgegebenes Gewicht aufweisen, ist eine solche Überprüfung bei einer Verarbeitung der Lebensmittelprodukte 19 zu großen, mehrere Teilportionen 63 umfassenden Lebensmittelportionen 67 meist nicht möglich.

Insbesondere müssen die Teilportionen 63, um den gewünschten hohen Durchsatz erreichen zu können, möglichst unmittelbar aufeinanderfolgend von der Aufschneidevorrichtung 21 erzeugt und in geringem Abstand an die Transporteinrichtung 31 übergeben werden, so dass beispielsweise ein hinteres Ende einer ersten Teilportion 63 noch auf dem Portionierabschnitt 33 aufliegen kann, während eine nachfolgende Teilportion 63 bereits gebildet wird. Zudem ist in Fig. 2 veranschaulicht, dass die Teilportionen 63 häufig auch eine Länge aufweisen können, bei welcher ein Teil der Scheiben 29 bereits auf der Transporteinrichtung 31 aufliegt, während die Teilportion 63 noch durch weitere Scheiben 29 gebildet wird. Daher liegen die Teilportionen 63 häufig nicht vollständig oder jedenfalls nicht lange genug vollständig auf dem Portionierabschnitt 27 auf, um deren Gewicht messen zu können. Das Gewicht der Lebensmittelportionen 67 kann daher häufig erst nachträglich überprüft werden, so dass gegebenenfalls Scheiben 29 manuell hinzugefügt oder entfernt werden müssen, um das Lebensmittelportion-Sollgewicht zu erreichen. Auch etwaige Fehleinstellung der optischen Waage 77 oder Fehlauswertungen der Steuereinrichtung 43 können entsprechend meist nicht korrigiert werden.

Um diesem Problem zu begegnen und eine Überprüfung des Gewichts des Teilportionen 63 und/oder der Lebensmittelportion 67 dennoch zu ermöglichen, ist in die anhand der Fig. 4A bis 5B veranschaulichte Stapelvorrichtung 11 eine Waage 35 integriert, welche dazu ausgebildet ist, das Gewicht der Teilportionen 63 und/oder der aus den Teilportionen 63 gebildeten Lebensmittelportion 67 zu messen. Die Waage 35 umfasst dabei vier Wägezellen 37, welche an jeweiligen Stützabschnitten 75 eines Gestells 71 der Stapelvorrichtung 11 und unterhalb der Produktauflagen 51 und 53 sowie des Stapelabschnitts 69 angeordnet sind, so dass die Produktauflagen 51 und 53 sowie der Stapelabschnitt 69 über die Wägezellen 37 und somit die Waage 35 am Boden abgestützt sind. Durch die Waage 35 kann daher das Gewicht der Produktauflagen 51 und 53 und des Stapelabschnitts 69 ermittelt werden, so dass eine Gewichtsveränderung infolge einer auf die Produktauflagen 51 und 53 und/oder den Stapelabschnitt 69 geführten Teilportion 63 mittels der Waage 35 erfasst werden kann. Insbesondere weist die Stapelvorrichtung 11 bei der anhand der Fig. 4A bis 5B veranschaulichten Ausführungsform ein gemeinsames Gestell 71 für Produktauflagen 51 und 53 und den Stapelabschnitt 69 auf.

Beispielsweise kann die in die Stapelvorrichtung 11 integrierte Waage 35 dazu genutzt werden, das Gewicht jeder der zu der Stapelvorrichtung 11 bewegten Teilportionen 63 zu ermitteln, da sich das von der Waage 35 gemessene Gewicht ändert, sobald eine Teilportion 63 auf die Produktauflagen 51 und 53 bewegt wird. Das Gewicht der Teilportion 63 ist somit durch den Unterschied des von der Waage 35 registrierten Gewichts vor und nach dem Bewegen der Teilportion 63 auf die Produktauflagen 51 und 53 bestimmt. Die an der Stapelvorrichtung 11 angeordnete Waage 35 ermöglicht es jedoch auch, das Gewicht der Teilportionen 63 insgesamt zu ermitteln, die bereits auf dem Stapelabschnitt 69 gestapelt sind, so dass auch das Gesamtgewicht der letztlich gebildeten Lebensmittelportion 67 direkt gemessen werden kann. Alternativ dazu kann das Gesamtgewicht der abgelegten Teilportionen 63 und/oder der Lebensmittelportion auch durch Addieren der zuvor gemessenen Gewichte der einzelnen Teilportionen 63 bestimmt werden.

Durch das Bereitstellen einer Waage 35 an der Stapelvorrichtung 11 ist es somit nicht erforderlich, bereits unmittelbar an dem Portionierabschnitt 33 das Gewicht der Teilportionen 63 zu bestimmen, sondern das Gewicht der Teilportionen 63 kann an der dem Portionierabschnitt 27 nachgelagerten Stapelvorrichtung 11 bestimmt werden, an welcher die Teilportionen 63 nacheinander empfangen werden. An der Stapelvorrichtung 11 liegen die Teilportionen 63 somit kontrolliert und vollständig auf den Produktauflagen 51 und 53 sowie dem Stapelabschnitt 69 auf, so dass dort ausreichend Zeit für ein Wiegen zur Verfügung steht, wohingegen an dem Portionierabschnitt 27 Scheiben 29 mit hoher Geschwindigkeit hinzugefügt werden und sich das aufliegende Gewicht mit entsprechend hoher Geschwindigkeit verändert. Zudem kann die Transporteinrichtung 31 beispielsweise dazu ausgebildet sein, während des Transports der Teilportionen 63 von dem Portionierabschnitt 33 zu den Produktauflagen 51 und 53 die Teilportionen 63 zu entzerren und deren Abstand zueinander zu vergrößern, um die für das Messen des Gewichts zur Verfügung stehende Zeit an der Stapelvorrichtung 11 weiter zu vergrößern.

Durch das Messen des Gewichts der Teilportionen 63 und/oder der Lebensmittelportion 67 kann insbesondere die Prozessüberwachung und/oder -steuerung verbessert werden, indem das an der Stapelvorrichtung 11 gemessene Gewicht beispielsweise von der Steuerung 43 dazu genutzt werden kann, Einstellungen der Aufschneidevorrichtung 21 und/oder der Transporteinrichtung 31 anzupassen.

Beispielsweise kann es vorgesehen sein, dass die Steuereinrichtung 43 dazu ausgebildet ist, eine Regelung durchzuführen, bei welcher das an der Stapelvorrichtung 11 gemessene Gewicht der Teilportionen 63 und/oder der Lebensmittelportion 67 die Regelgröße ist, wobei eine Dicke der Scheiben 29 und/oder eine Anzahl der Scheiben 29 pro Teilportion 63 die Stellgröße bildet. Insbesondere kann während des Prozesses dauerhaft überprüft werden, ob die Teilportionen 63 ein Teilportion-Sollgewicht und/oder ob die Lebensmittelportionen 67 ein Lebensmittelportion-Sollgewicht erreichen, um gegebenenfalls die Scheibendicke und/oder die Scheibenanzahl pro Teilportion 63 zu verändern und eine Abweichung auszugleichen. Insbesondere kann die Steuereinrichtung 43 dabei jedoch eine Trendregelung ausführen, um beispielsweise lediglich dann eine Anpassung vorzunehmen, wenn bei einer vorgegebenen Anzahl von Teilportionen 63 und/oder Lebensmittelportionen 67 systematisch ein zu geringes oder ein zu hohes Gewicht festgestellt wird.

Die Steuereinrichtung 43 kann insbesondere grundsätzlich, unabhängig von dem Durchführen einer Regelung, dazu ausgebildet sein, eine Dicke der Scheiben 29 und/oder eine Anzahl der Scheiben 29 pro Teilportion 63 in Abhängigkeit von dem gemessenen Gewicht der Teilportionen 63 und/oder der Lebensmittelportion 67 anzupassen.

Darüber hinaus kann bei dem System 17 gemäß einer Grundeinstellung beispielsweise eine vorgegebene Anzahl von Teilportionen 63 für eine Lebensmittelportion 67 vorgesehen sein. Die Steuereinrichtung 43 kann jedoch dazu ausgebildet sein, die Stapelvorrichtung 11 zum Hinzufügen einer weiteren Teilportion 63 zu der bereits auf dem Stapelabschnitt 69 abgelegten vorgegebenen Anzahl von Teilportionen anzusteuern, wenn das Gewicht der vorgegebenen Anzahl von Teilportionen 63 geringer ist als ein vorgegebenes Lebensmittelportion-Sollgewicht und insofern die Anzahl der Teilportionen 63 für diese Lebensmittelportion 67 gegenüber der vorgegebenen Anzahl erhöhen. Dies kann insbesondere erfolgen, indem die Steuereinrichtung 43 die Stapelvorrichtung 11 dazu ansteuert, einen Abtransport der vorgegebenen Anzahl von Teilportionen 63 zu verzögern und stattdessen eine nachfolgend empfangene Teilportion 63 noch auf den bereits auf dem Stapelabschnitt 69 gestapelten Teilportionen 63 abzulegen. Das Erzeugen von Lebensmittelportionen 67 mit zu geringem Gewicht kann dadurch zuverlässig und automatisch verhindert werden.

Darüber hinaus kann die Stapelvorrichtung 11, wie in Fig. 4B und 5B schematisch veranschaulicht ist, eine Kennzeichnungs- und/oder Signaleinrichtung 93 aufweisen, wobei die Steuereinrichtung 43 dazu ausgebildet sein kann, die Kennzeichnungs- und/oder Signaleinrichtung 93 zu einem Kennzeichnen einer Lebensmittelportion 67 mit zu geringem Gewicht und/oder zum Auslösen eines für einen Benutzer wahrnehmbaren Signals, insbesondere eines akustisch und/oder optisch wahrnehmbaren Signals, anzusteuern, wenn das Gewicht der vorgegebenen Anzahl von Teilportionen 63 von dem Lebensmittel-Sollgewicht abweicht, so dass der Benutzer manuell Scheiben 29 hinzufügen oder Scheiben 29 entnehmen kann.

Ferner kann es insbesondere vorgesehen sein, bei einem zu geringen Gewicht der vorgegebenen Anzahl von Teilportionen 63 in Abhängigkeit von einer Differenz zu dem Lebensmittelportion-Sollgewicht entweder automatisch eine Teilportion 63 hinzuzufügen oder die Lebensmittelportion 67 zu kennzeichnen, so dass ein Benutzer manuell Scheiben 29 hinzufügen kann. Dabei kann beispielsweise bei einer verhältnismäßig großen Differenz eine Teilportion 63 hinzugefügt werden, wohingegen bei lediglich kleinen Differenzen einem Benutzer angezeigt werden kann, dass noch eine oder mehrere Scheiben 29 manuell hinzugefügt werden sollten. Insbesondere kann durch das Berücksichtigen einer solchen Differenz das Erzeugen von deutlich übergewichtigen Lebensmittelportionen 67, wenn etwa bei einer lediglich geringen Differenz eine vollständige weitere Teilportion 63 hinzugefügt wird, verhindert werden.

Dabei kann es auch vorgesehen sein, dass eine minimale Differenz, bei welcher eine weitere Teilportion 63 zu der vorbestimmten Anzahl von Teilportionen 63 hinzugefügt wird, über eine Eingabeeinrichtung 107, insbesondere einen Touchscreen, der Steuereinrichtung 43 von einem Benutzer vorgebbar ist. Insbesondere kann ein Benutzer dadurch auch einstellen, dass immer eine Teilportion 63 hinzugefügt werden soll, wenn das Gewicht der vorbestimmten Anzahl von Teilportionen 63 unter dem Lebensmittelportion-Sollgewicht liegt. Dies kann beispielsweise vorgesehen sein, wenn für die Lebensmittelportionen 67 ein gewichtsabhängiger Verkaufspreis festgelegt wird, jedoch ein vorgegebenes Minimalgewicht bzw. das Lebensmittelportion-Sollgewicht nicht unterschritten werden darf.

Durch das Messen des Gewichts an der Stapelvorrichtung 11 kann zudem nicht lediglich das Gewicht der fertiggestellten Lebensmittelportion 67 gemessen werden, sondern es kann auch ermittelt werden, wie sich das Gewicht der auf dem Stapelabschnitt 69 gestapelten Teilportionen 63 während des Bildens der Lebensmittelportion ändert. Dadurch kann beispielsweise bereits während des Bildens der Lebensmittelportion 67 prognostiziert werden, ob die vorgegebene Anzahl von Teilportionen 63 das Lebensmittelportion-Sollgewicht erreichen wird oder ob voraussichtlich eine weitere Teilportion 63 hinzugefügt werden muss. Diese Prognose kann insbesondere von der Steuereinrichtung 43 erstellt und dazu genutzt werden, die Aufschneidevorrichtung 21 und/oder die Transporteinrichtung 31 zu beschleunigen, wenn ersichtlich wird, dass voraussichtlich noch eine weitere Teilportion 63 zu der ursprünglich vorgegebenen Anzahl von Teilportionen 63 hinzugefügt werden muss, um das Lebensmittelportion-Sollgewicht zu erreichen. Die Zeit zum Erzeugen dieser Lebensmittelportion 67 kann durch ein solches Beschleunigen verringert werden, um die Lebensmittelportion 67 trotz des Hinzufügens der weiteren Teilportion 63 beispielsweise dennoch in einem gewissen Takt oder in einer vorgegebenen Zeit fertigstellen zu können.

Die Waage 35 kann darüber hinaus auch als eine Kontrollwaage für die optische Waage 77 fungieren, indem beispielsweise ein erwartetes Gewicht der Teilportionen 63 und/oder der Lebensmittelportion 67, welches durch die Anzahl der Scheiben 29 und deren Sollgewicht bestimmt ist, mit dem tatsächlich von der Waage 35 gemessenen Gewicht verglichen wird. Sofern Abweichungen zwischen dem tatsächlichen Gewicht der Teilportionen 63 oder der Lebensmittelportion 67 und dem erwarteten Gewicht festgestellt werden, kann dies dazu benutzt werden, die Ermittlung der Dichte des vorderen Produktendes 89 und/oder der Solldicke D der abzutrennenden Scheibe durch die Steuereinrichtung 43 anhand der von der optischen Waage 77 festgestellten Oberflächenstruktur 79 und Kontur 81 des vorderen Produktendes 89 zu korrigieren und beispielsweise in dem Speicher 91 hinterlegte Dichtewerte anzupassen. Ferner kann die Steuereinrichtung 43 auch dazu ausgebildet sein, einen selbstlernenden Algorithmus zum Ermitteln der Solldicke D auszuführen, welcher durch einen Vergleich des erwarteten Gewichts mit dem von der Waage 35 tatsächlich bestimmten Gewicht beständig und für verschiedenste Lebensmittelprodukte 19, beispielsweise verschiedene Wurst- und Käseprodukte, optimiert werden kann.

Wie die Fig. 4A bis 5B ferner zeigen, weist die Stapelvorrichtung 11 eine Messeinrichtung 45, beispielsweise einen Abstandssensor, auf, welche dazu ausgebildet ist, durch eine Messung L eine Höhe H der auf dem Stapelabschnitt 69 gestapelten Teilportionen 63 und auch der vollständigen Lebensmittelportion 67 zu bestimmen. Insbesondere kann für die Lebensmittelportion 67 eine maximale Höhe vorgegeben sein, die beispielsweise durch eine Packung bestimmt sein kann, in welche die Lebensmittelportion 67 verpackt werden soll. Durch zusätzliches Bestimmen des Gewichts der auf dem Stapelabschnitt 69 gestapelten Teilportionen 63 kann die Steuereinrichtung 43 dazu ausgebildet sein, auf dem Stapelabschnitt 69 gestapelte Teilportionen 63 auszusortieren, deren durch die Messeinrichtung 45 bestimmte Höhe H die maximale Höhe bereits überschreitet, während deren Gesamtgewicht ein Lebensmittelportion-Sollgewicht noch unterschreitet. In diesem Fall kann das Lebensmittelportion-Sollgewicht nicht mehr erreicht werden, ohne dass die vorgegebene maximale Höhe der Lebensmittelportion 67 überschritten wird, so dass sich die Teilportionen 63 nicht für eine Weiterverarbeitung eignen und daher aussortiert werden können. Dazu umfasst das System 17 eine Aussortiereinrichtung 95, welche durch die weitere Transporteinrichtung 105 gebildet sein kann, so dass die Steuereinrichtung 43 die weitere Transporteinrichtung 105 beispielsweise dazu ansteuern kann, eine nicht zu verwendende, auf dem Stapelabschnitt 69 gestapelte Anzahl von Teilportionen 63 auszusortieren. Alternativ dazu kann es auch vorgesehen sein, dass nicht zu verwendende Teilportionen 63 von dem Stapelabschnitt 69 nicht an die weitere Transporteinrichtung 105 übergeben, sondern durch Antreiben des Förderbandes 97 in entgegengesetzter Richtung in einen nicht gezeigten Ausschussbehälter geführt werden.

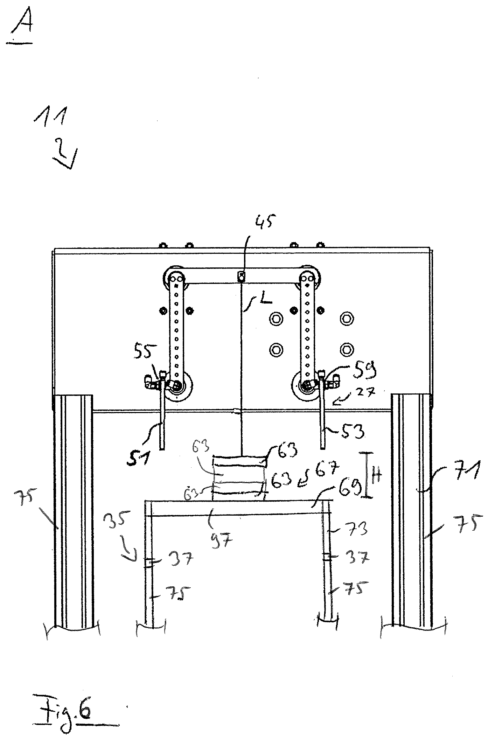

Fig. 6 zeigt eine weitere Ausführungsform der Stapelvorrichtung 11, bei welcher die Produktauflagen 51 und 53 über ein Gestell 71 abgestützt sind, wohingegen der Stapelabschnitt 69 über ein eigenes Gestell 73 abgestützt ist. Bei dieser Ausführungsform sind in jeweiligen Stützabschnitten 75 des Gestells 73 Wägezellen 37 einer Waage 35 angeordnet, so dass bei dieser Ausführungsform der Stapelabschnitt 69 die Waage 35 umfasst und das Gewicht der Teilportionen 63 und/oder der Lebensmittelportion 67 auf dem Stapelabschnitt 69 gemessen werden kann.

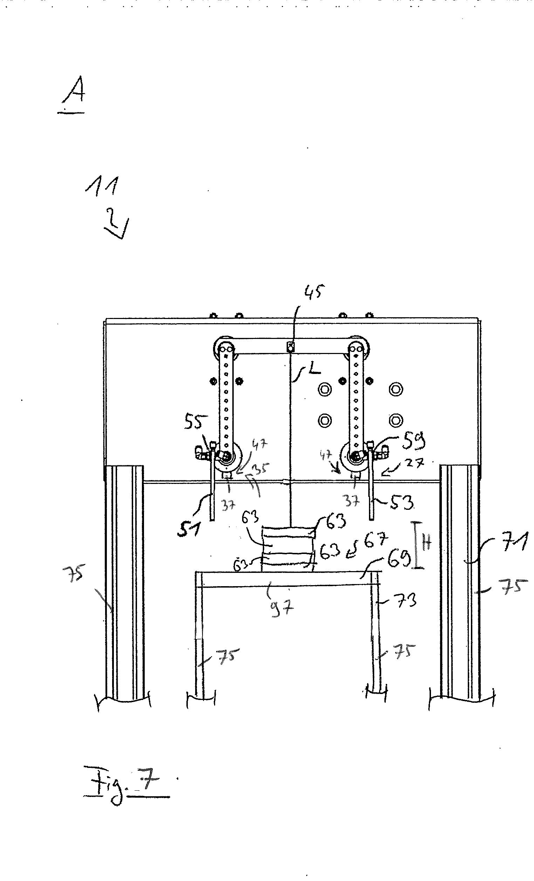

Bei der in Fig. 7 veranschaulichten Ausführungsform der Stapelvorrichtung 11 sind die Wellen 41, an welchen die Produktauflagen 51 und 53 befestigt sind, über jeweilige Wägezellen 37 an dem Gestell 71 abgestützt, wobei die Wägezellen 37 insbesondere im Bereich jeweiliger Lager 47 der Wellen 41 oder an den Lagern 47 angeordnet sind. Über die Wägezellen 37, welche gemeinsam die Waage 35 bilden, kann somit das Gewicht der Wellen 41 und der Produktauflagen 51 und 53 bestimmt werden, so dass das Gewicht der Teilportionen 63 gemessen werden kann, wenn sich die Teilportionen 63 auf den Produktauflagen 51 und 53 befinden. Durch Addieren des Gewichts der einzelnen Teilportionen 63 kann auch bei dieser Ausführungsform das Gewicht der vollständigen Lebensmittelportion 67 bestimmt werden.

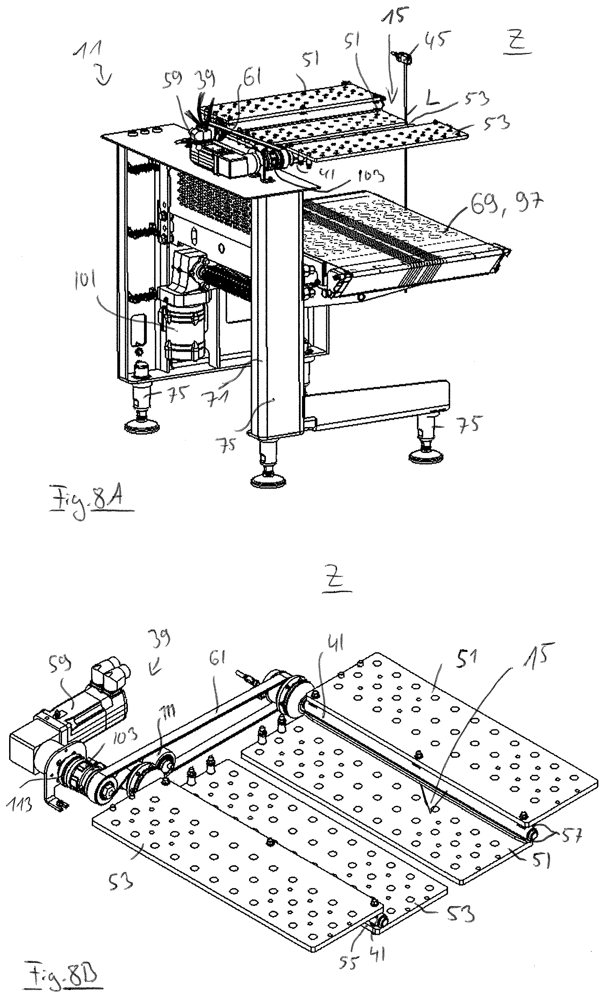

Die Fig. 8A und 8B veranschaulichen ferner einen Antrieb 39, mittels derer die Produktauflagen 51 und 53 durch Drehen der Wellen 41 zwischen der Zuführstellung Z und der Ablegestellung A bewegt werden können. Im Unterschied zu den anhand der Fig. 4A bis 7 veranschaulichten Ausführungsform sind bei der in den Fig. 8A und 8B gezeigten Ausführungsform an jeder der Wellen 41 zwei Produktauflagen 51 bzw. 53 angeordnet, so dass ausgehend von der Zuführstellung Z durch Drehen der Wellen 41 um 180° wiederum zwei Produktauflagen 51 und 53 aufeinander zu weisend in der Zuführstellung Z angeordnet werden können, um eine Produktauflagefläche 15 zu bilden und nachfolgende Teilportion 63 aufzunehmen. Ein entsprechender Antrieb 39 kann jedoch auch bei den anhand der Fig. 4A bis 7 gezeigten Stapelvorrichtungen 11 vorgesehen sein, wobei bei diesen Ausführungsformen Drehungen der Wellen 41 um 360° erforderlich sind, um die Produktauflagen 51 und 53 wieder in die Zuführstellung Z zu bewegen. Alternativ dazu können die Wellen 41 aus der Ablegestellung A um 90° zurückgedreht werden, um die Produktauflagen 51 und 53 wieder in die Zuführstellung Z zu bewegen. In Fig. 8A ist zudem ein Antrieb 101 für das Förderband 97 des Stapelabschnitts 69 ersichtlich.

Wie insbesondere Fig. 8B zeigt, ist zum Antreiben der Wellen 41 ein Motor 59 vorgesehen, so dass die Wellen 41 gemeinsam über einen einzigen Motor 59 antreibbar sind. Dazu sind die Wellen 41 über einen Riemen 61 miteinander verbunden, wobei der Riemen 61 über eine Umlenkrolle 111 derart geführt ist, dass die Wellen 41 durch den Motor 59 zu einer gegensinnigen Drehung antreibbar sind. Um eine Drehung auf die Wellen 41 zu übertragen, ist eine Motorwelle 113 des Motors 59 mit einer der Wellen 41 verbunden, wobei die Übertragung des Drehmoments von der Motorwelle 113 auf die Welle 41 über eine Reibkupplung 103 erfolgt. Über diese Reibkupplung 103 ist ein maximal auf die Welle 41 übertragbares Drehmoment festlegbar und es kann insbesondere erreicht werden, dass die Welle 41 gegenüber der Motorwelle 113 durchrutscht, wenn die Welle 41 oder die Produktauflage 53 blockiert wird. Die Welle 41 kann somit angehalten werden, obwohl die Motorwelle 113 weiterdreht. Durch die Synchronisation der Wellen 41 erfolgt das Durchrutschen der Reibkupplung 103, die auch als Rutschkupplung bezeichnet werden kann, ferner auch dann, wenn die an der anderen Welle 41 angeordneten Produktauflagen 51 blockiert werden, so dass beide Wellen 41 synchron und mit in gleicher Drehstellung orientierten Produktauflagen 51 bzw. 53 angehalten werden können.

Insbesondere kann dadurch die Sicherheit der Stapelvorrichtung 11 erhöht werden, da die Wellen 41 beispielsweise bei einem Eingriff eines Benutzers während des Betriebs angehalten werden können, wenn der Benutzer die Produktauflagen 51 und 53 blockiert. Eine Verletzung des Benutzers durch das Übertragen starker Kräfte kann dadurch verhindert werden. Durch diese Sicherheitsvorkehrung kann insbesondere, wie die Fig. 1A und 1B zeigen, auf Einhausungen der Stapelvorrichtung 11 verzichtet werden, die andernfalls angebracht werden müssten, um einen Eingriff in den Bereich der Produktauflagen 51 und 53 zu verhindern. Dies ermöglicht insbesondere einen direkten Zugang zu den Produktauflagen 51 und 53, so dass diese beispielsweise zu Wartungs- und/oder Reinigungszwecken auf einfache Weise erreichbar sind und sich solche Arbeiten einfach und weniger zeitaufwendig durchführen lassen.

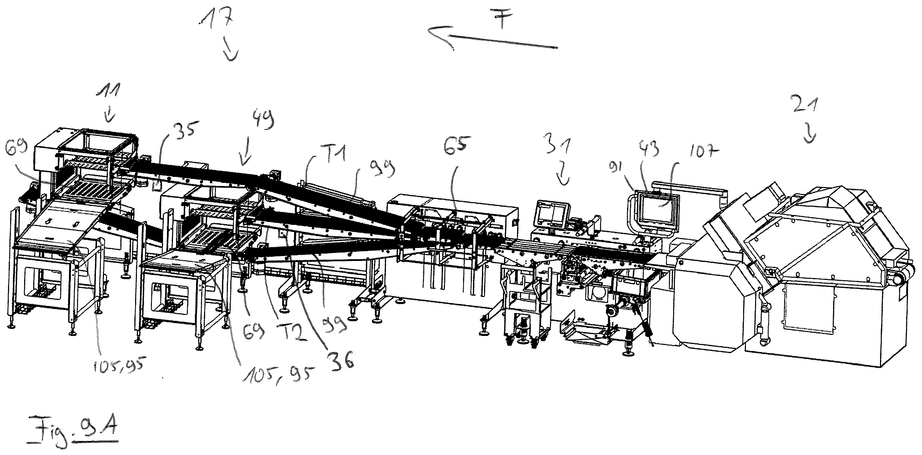

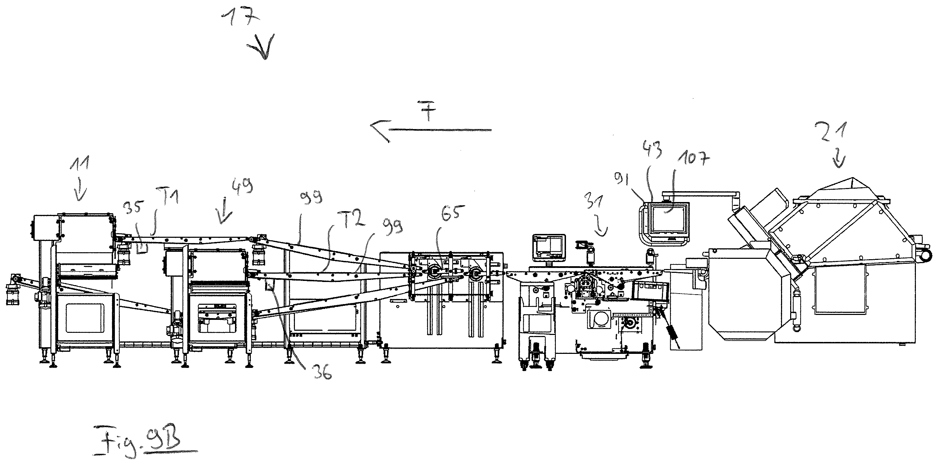

Die Fig. 9A und 9B zeigen eine weitere Ausführungsform des Systems 17 zum Verarbeiten von Lebensmittelprodukten 19, bei welcher eine erste Stapelvorrichtung 11 und eine zweite Stapelvorrichtung 49 vorgesehen ist. Zudem umfasst die Transporteinrichtung 31 eine Verteileinrichtung 65, welche dazu ausgebildet ist, Teilportionen 63 wahlweise zu der ersten Stapelvorrichtung 11 oder zu der zweiten Stapelvorrichtung 49 zu bewegen, so dass die Teilportionen 63 wahlweise auf die Produktauflagen 51 und 53 der ersten Stapelvorrichtung 11 oder der zweiten Stapelvorrichtung 49 bewegt werden können. Dabei können die Teilportionen 63 durch die Verteileinrichtung 65 auf eine erste Transportstreckte T1 oder eine zweite Transportstrecke T2 verteilt werden, wobei die erste Transportstrecke T1 zu der ersten Stapelvorrichtung 11 und die zweite Transportstrecke T2 zu der zweiten Stapelvorrichtung 49 führt.

Durch eine solche Verteileinrichtung 65, welche hier als eine um eine horizontale Achse verschwenkbare Wippe bzw. ein um eine horizontale Achse verschwenkbares Förderband 99 ausgebildet ist, können die Teilportionen 63 somit auf die übereinander verlaufenden Transportstrecken T1 und T2 verteilt werden und der Abstand zwischen aufeinanderfolgenden Teilportionen 63 an den Transportstrecken T1 und T2 kann beispielsweise durch abwechselndes Verteilen von Teilportionen 63 auf die Transportstrecken T1 und T2 gegenüber dem Abstand der Teilportionen 63 bei der Übergabe von dem Portionierabschnitt 27 an die Transporteinrichtung 31 vergrößert werden. Aufgrund dieses vergrößerten Abstands kann das Gewicht der Teilportionen 63 insbesondere an den Transportstrecken T1 und T2 und somit zwischen der Verteilrichtung 65 und der ersten Stapelvorrichtung 11 bzw. der zweiten Stapelvorrichtung 49 bestimmt werden, da nunmehr ausreichend Zeit für eine präzise Messung zur Verfügung steht.

Dazu umfasst das System 17 zwei Waagen 35 und 36, wobei die Waage 35 zwischen der Verteileinrichtung 65 und der ersten Stapelvorrichtung 11 angeordnet ist, um das Gewicht von zu dieser Stapelvorrichtung 11 bewegten Teilportionen 63 bestimmen zu können. Die zweite Waage 36 ist zwischen der Verteilrichtung 65 und der zweiten Stapelvorrichtung 49 an der zweiten Transportstrecke T2 angeordnet, um entsprechend das Gewicht der zu der zweiten Stapelvorrichtung 49 bewegten Teilportionen 63 bestimmen zu können. Dabei können die Waagen 35 und 36 insbesondere in jeweilige Förderbänder 99 integriert sein und eine Messung kann erfolgen, während die Teilportionen 63 auf dem jeweiligen Förderband 99 bewegt werden. Alternativ dazu kann das jeweilige Förderband 99 kurzzeitig angehalten werden, um das Gewicht der Teilportion 63 zu bestimmen.

Bei dieser Ausführungsform können die Teilportionen 63 somit durch das Verteilen der Transportstrecken T1 und T2 gewissermaßen entzerrt werden, um ein Bestimmen des Gewichts der Teilportionen 63 und auch der an den jeweiligen Stapelvorrichtungen 11 und 49 gebildeten Lebensmittelportionen 67 zu ermöglichen. Dieses Gewicht kann, wie vorstehend erläutert, insbesondere bei der Steuerung der Aufschneidevorrichtung 21 und/oder der Transporteinrichtung 31 berücksichtigt werden. Zudem kann es vorgesehen sein, dass die Steuereinrichtung 43 dazu ausgebildet ist, Teilportionen 63 derart auf die erste Transportstrecke T1 und die hilfsweise Transportstrecke T2 zu verteilen, dass an den beiden Stapelvorrichtungen 11 und 49 ein zumindest annähernd gleiches Gesamtgewicht von Lebensmittelprodukten 19 verarbeitet wird. Hierzu kann beispielsweise gezielt eine übergewichtige Teilportion 63 erzeugt und zu der jeweiligen Stapelvorrichtung 11 oder 49 geführt werden, wenn an einer der Transportstrecken T1 oder T2 ein im Vergleich zu der anderen Transportstrecke T2 oder T1 geringeres Gewicht verarbeitet wurde.

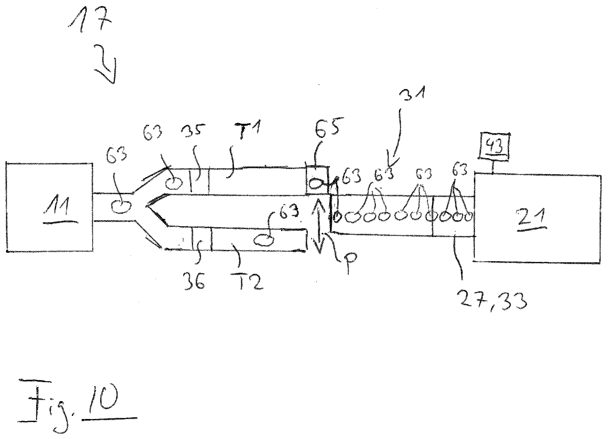

Fig. 10 zeigt schematisch eine weitere Ausführungsform eines Systems 17 zum Verarbeiten von Lebensmittelportionen 19, wobei die einzelnen Komponenten grundsätzlich wie in den weiteren Figuren gezeigt ausgebildet sein können. Bei dieser Ausführungsform ist, wie auch bei der anhand der Fig. 9A und 9B veranschaulichten Ausführungsform, eine Transporteinrichtung 31 mit einer Verteileinrichtung 65 vorgesehen, um von einer Aufschneidevorrichtung 21 erzeugte Teilportionen 63 auf eine erste Transportstrecke T1 und eine zweite Transportstrecke T2 zu verteilen. Die Verteileinrichtung 65 ist dabei schematisch entlang eines Doppelpfeils P bewegbar dargestellt, um die Teilportionen 63 auf die seitlich zueinander versetzt verlaufenden Transportstrecken T1 und T2 verteilen zu können, wobei jedoch auch eine Ausbildung wie bei dem in den Fig. 9A und 9B gezeigten System 17 als Wippe möglich ist. Auch bei dieser Ausführungsform werden die Teilportionen 63 auf einem Portionierabschnitt 27 der Aufschneidevorrichtung 21 gebildet und von einer Fördereinrichtung 33 des Portionierabschnitts 27 an die Transporteinrichtung 31 übergeben.

Im Unterschied zu der Ausführungsform der Fig. 9A und 9B ist bei dem in Fig. 10 gezeigten System lediglich eine Stapelvorrichtung 11 vorgesehen, zu welcher die Transportstrecken T1 und T2 die jeweiligen von der Verteileinrichtung 65 erhaltenen Teilportionen 63 führen. Auch hierbei ist jedoch der Abstand zwischen den Teilportionen 63 auf den Transportstrecken T1 und T2 im Vergleich zu dem Abstand zwischen den Teilportionen 63 am Übergang zwischen der Fördereinrichtung 33 des Portionierabschnitts 27 und der Transporteinrichtung 31 vergrößert, so dass die Teilportionen 63 mittels jeweiliger, an den Transportstrecken T1 und T2 angeordneter Waagen 35 und 36 gewogen werden können und das Gewicht der Teilportionen 63 von einer Steuereinrichtung 43 wie vorstehend erläutert berücksichtigt werden kann.

### Bezugszeichenliste

- 11: Stapelvorrichtung
- 15: Produktauflagefläche
- 17: System
- 19: Lebensmittelprodukt
- 21: Aufschneidevorrichtung
- 23: Produktzufuhr
- 25: Messer
- 27: Portionierabschnitt
- 29: Scheibe
- 31: Transporteinrichtung
- 33: Fördereinrichtung
- 35: Waage
- 36: Waage
- 37: Wägezelle
- 39: Antrieb
- 41: Welle
- 43: Steuereinrichtung
- 45: Messeinrichtung
- 47: Lager
- 49: zweite Stapelvorrichtung
- 51: erste Produktauflage
- 53: zweite Produktauflage
- 55: Außenseite
- 57: Außenseite
- 59: Motor
- 61: Riemen
- 63: Teilportion
- 65: Verteileinrichtung
- 67: Lebensmittelportion
- 69: Stapelabschnitt
- 71: Gestell
- 73: Gestell
- 75: Stützabschnitt
- 77: optische Waage
- 79: Oberflächenstruktur
- 81: Kontur
- 83: Fettanteil
- 85: Fleischanteil
- 87: Knochenanteil
- 89: vorderes Produktende
- 90: hinteres Produktende
- 91: Speicher
- 93: Kennzeichnungs- und/oder Signaleinrichtung
- 95: Aussortiereinrichtung
- 97: Förderband
- 99: Förderband
- 101: Antrieb
- 103: Reibkupplung
- 105: weitere Transporteinrichtung
- 107: Eingabeeinrichtung
- 109: Produktgreifer
- 111: Umlenkrolle
- 113: Motorwelle
- A: Ablegestellung
- D: Solldicke
- F: Förderrichtung
- H: Höhe
- L: Messung
- P: Doppelpfeil
- S: Schneidebene
- T1: erste Transportstrecke
- T2: zweite Transportstrecke
- Z: Zuführstellung

## Patentansprüche

1. System (17) zum Verarbeiten von Lebensmittelprodukten (19), insbesondere Fleischprodukten, Wurst, Käse, Schinken und/oder Bacon,
umfassend
- eine Aufschneidevorrichtung (21), insbesondere einen Hochleistungsslicer, welche einen Portionierabschnitt (27) und ein in einer Schneidebene (S) bewegbares Messer (25), insbesondere ein in der Schneidebene (S) umlaufendes Kreismesser oder Sichelmesser, aufweist und welche dazu ausgebildet ist, Scheiben (29) von in die Schneidebene (S) geführten riegelförmigen Lebensmittelprodukten (19) abzutrennen und in dem Portionierabschnitt (27) Teilportionen (63) zu bilden, welche eine oder mehrere abgetrennte Scheiben (29) umfassen,
- eine sich an den Portionierabschnitt (27) anschließende Transporteinrichtung (31), wobei der Portionierabschnitt (27) eine Fördereinrichtung (33) umfasst, welche dazu ausgebildet ist, die Teilportionen (63) an die Transporteinrichtung (31) zu übergeben, und
- eine Stapelvorrichtung (11), welche zumindest eine zwischen einer Zuführstellung (Z) und einer Ablegestellung (A) bewegbare Produktauflage (51, 53) sowie einen unterhalb der Produktauflage (51, 53) angeordneten Stapelabschnitt (69) aufweist,
wobei die Stapelvorrichtung (11) dazu ausgebildet ist, auf die Produktauflage (51, 53) bewegte Teilportionen (63) durch Bewegen der Produktauflage (51, 53) aus der Zuführstellung (Z) in die Ablegestellung (A) auf dem Stapelabschnitt (69) abzulegen und auf dem Stapelabschnitt (69) eine mehrere Teilportionen (63) umfassende Lebensmittelportion (67) zu bilden, insbesondere durch Aufeinanderstapeln mehrerer, nacheinander auf die Produktauflage (51, 53) bewegter Teilportionen (63), wobei die Transporteinrichtung (31) dazu ausgebildet ist, die von der Fördereinrichtung (33) empfangenen Teilportionen (63) auf die Produktauflage (51, 53) der Stapelvorrichtung (11) zu transportieren, und
wobei die Transporteinrichtung (31) und/oder die Stapelvorrichtung (11) eine Waage (35) zum Messen des Gewichts der Teilportionen (63) und/oder der Lebensmittelportion (67) aufweisen/aufweist.

2. System (17) nach Anspruch 1,
wobei die Waage (35) in die Stapelvorrichtung (11) integriert ist; und/oder
wobei der Stapelabschnitt (69) die Waage (35) aufweist, wobei die Waage (35) dazu ausgebildet ist, das Gewicht der auf dem Stapelabschnitt (69) abgelegten Teilportionen (63) zu messen; und/oder wobei die Produktauflage (51, 53) und/oder der Stapelabschnitt (69) über ein Gestell (71, 73), insbesondere über ein gemeinsames Gestell (71), am Boden abstützbar sind, wobei die Waage (35) unterhalb der Produktauflage (51, 53) und/oder unterhalb des Stapelabschnitts (69) an dem Gestell (71, 73) angeordnet ist, wobei das Gestell (71, 73) insbesondere zumindest drei, insbesondere vier, Stützabschnitte (75) aufweist, über welche die Produktauflage (51, 53) und/oder der Stapelabschnitt (69) am Boden abstützbar ist, wobei die Waage (35) an zumindest einem der Stützabschnitte (75) angeordnet ist, insbesondere wobei die Waage (35) mehrere Wägezellen (37) umfasst, wobei an jedem der Stützabschnitte (75) eine jeweilige Wägezelle (37) angeordnet ist.

3. System (17) nach Anspruch 1 oder 2,
wobei die Stapelvorrichtung (11) einen Antrieb (39) zum Bewegen der Produktauflage (51, 53) aufweist, wobei der Antrieb (39) und/oder die Produktauflage (51, 53) über die Waage (35) am Boden abstützbar sind;
insbesondere wobei der Antrieb (39) einen Motor (59) und eine Welle (41) umfasst, über welche die Produktauflage (51, 53) mit dem Motor (59) verbunden ist, wobei die Welle (41) über zumindest ein Lager (47) an der Stapelvorrichtung (11) gelagert ist, und wobei die Waage (35) an dem zumindest einen Lager (47) angeordnet ist.

4. System (17) nach einem der vorhergehenden Ansprüche,
wobei die Transporteinrichtung (31) eine erste Transportstrecke (T1) und eine zweite Transportstrecke (T2) aufweist und wobei die Transporteinrichtung (31) eine Verteileinrichtung (65) umfasst, welche dazu ausgebildet ist, von der Fördereinrichtung (33) empfangene Teilportionen (63) wahlweise auf die erste Transportstrecke (T1) oder die zweite Transportstrecke (T2) zu verteilen;
insbesondere wobei das System (17) eine erste Waage (35) und eine zweite Waage (36) aufweist, wobei die erste Waage (35) an der ersten Transportstrecke (T1) und die zweite Waage (36) an der zweiten Transportstrecke (T2) angeordnet ist.

5. System (17) nach Anspruch 4,
wobei das System (17) eine erste Stapelvorrichtung (11) und eine zweite Stapelvorrichtung (49) aufweist,
wobei die Transporteinrichtung (31) dazu ausgebildet ist, die Teilportionen (63) über die erste Transportstrecke (T1) auf die Produktauflage (51, 53) der ersten Stapelvorrichtung (11) und über die zweite Transportstrecke (T2) auf die Produktauflage (51, 53) der zweiten Stapelvorrichtung (49) zu bewegen, wobei die erste Stapelvorrichtung (11) und die zweite Stapelvorrichtung (49) insbesondere eine jeweilige Waage (35) aufweisen.

6. System (17) nach einem der vorhergehenden Ansprüche,
wobei das System (17) eine Steuereinrichtung (43) aufweist, welche dazu ausgebildet ist, den Betrieb des Systems (17), insbesondere Einstellungen der Aufschneidevorrichtung (21) und/oder der Transporteinrichtung (31), in Abhängigkeit von einem Messergebnis der Waage (35) anzupassen; wobei die Steuereinrichtung (43) insbesondere dazu ausgebildet ist, eine Anzahl der Scheiben (29) einer Teilportion (63) und/oder eine Dicke der abgetrennten Scheiben (29) in Abhängigkeit von dem Messergebnis der Waage (35) anzupassen; und/oder
wobei die Steuereinrichtung (43) insbesondere dazu ausgebildet ist, eine Regelung durchzuführen, bei welcher die Anzahl der Scheiben (29) einer Teilportion (63) oder die Dicke der Scheiben (29) die Stellgröße und das mittels der Waage (35) gemessene Gewicht der Teilportionen (63) und/oder der Lebensmittelportion (67) die Regelgröße ist; und oder
wobei die Steuereinrichtung (43) insbesondere dazu ausgebildet ist, eine Trendregelung auf Basis des Gewichts mehrerer aufeinanderfolgender Teilportionen (63) und/oder Lebensmittelportionen (67) durchzuführen; und/oder
wobei die Steuereinrichtung (43) insbesondere dazu ausgebildet ist, in Abhängigkeit von der Messung der Waage (35) während des Bildens einer Lebensmittelportion (67) eine Schneidgeschwindigkeit der Aufschneidevorrichtung (21) und/oder eine Transportgeschwindigkeit der Transporteinrichtung (31) anzupassen.

7. System (17) nach Anspruch 6,
wobei die Aufschneidevorrichtung (21) eine optische Waage (77) umfasst, welche dazu ausgebildet ist, eine Oberflächenstruktur (79) sowie eine Kontur (81) eines der Schneidebene (S) zugewandten vorderen Produktendes (89) des Lebensmittelprodukts (19) zu ermitteln, wobei die Steuereinrichtung (43) dazu ausgebildet ist,
- anhand der ermittelten Oberflächenstruktur (79) eine Dichte der von dem vorderen Produktende (89) abzutrennenden Scheibe (29) zu ermitteln,
- anhand der ermittelten Dichte sowie der ermittelten Kontur (81) eine Solldicke (D) der abzutrennenden Scheibe (29) zu bestimmen, bei welcher die abgetrennte Scheibe (29) ein vorgegebenes Sollgewicht aufweist, und
- die Aufschneidevorrichtung (21) zum Abtrennen der Scheibe (29) mit der Solldicke (D) anzusteuern,
wobei die Steuereinrichtung (43) ferner dazu ausgebildet ist, die Ermittlung der Dichte und/oder der Solldicke (D) bei einer Abweichung der Messung der Waage (35) von einem durch die Anzahl der Scheiben (29) bestimmten Teilportion-Sollgewicht und/oder von einem Lebensmittelportion-Sollgewicht anzupassen,
wobei die Steuereinrichtung (43) insbesondere dazu ausgebildet ist, einen selbstlernenden Algorithmus zum Ermitteln der Dichte und/oder der Solldicke (D) der von dem vorderen Produktende (89) abzutrennenden Scheibe (29) auszuführen und unter Berücksichtigung der Messung der Waage (35) zu optimieren.

8. System (17) nach Anspruch 7,
wobei die Steuereinrichtung (43) dazu ausgebildet ist, anhand der Oberflächenstruktur (79) einen Fettanteil (83), einen Fleischanteil (85) und/oder einen Knochenanteil (87) innerhalb der Kontur (81) des vorderen Produktendes (89) zu bestimmen und die Dichte und/oder die Solldicke (D) der von dem vorderen Produktende (89) abzutrennenden Scheibe (29) in Abhängigkeit von dem jeweiligen Anteil und/oder den jeweiligen Anteilen zu berechnen und/oder in einer Nachschlagetabelle nachzuschlagen, wobei die Steuereinrichtung (43) insbesondere dazu ausgebildet ist, Parameter zur Berechnung der Dichte und/oder die Nachschlagetabelle in Abhängigkeit von der Messung der Waage (35) anzupassen.

9. System (17) nach einem der Ansprüche 6 bis 8,
wobei eine vorbestimmte Anzahl von Teilportionen (63) für die Lebensmittelportionen (67) vorgesehen ist, wobei die Steuereinrichtung (43) dazu ausgebildet ist, die Stapelvorrichtung (11) nach dem Ablegen der vorbestimmten Anzahl von Teilportionen (63) zum Hinzufügen einer weiteren Teilportion (63) anzusteuern, wenn das von der Waage (35) gemessene Gewicht der vorbestimmten Anzahl von Teilportionen (63) geringer ist als ein für die Lebensmittelportionen (67) vorgesehenes Lebensmittelportion-Sollgewicht;
und/oder wobei das System (17) eine Kennzeichnungs- und/oder Signaleinrichtung (93) aufweist, wobei die Steuereinrichtung (43) dazu ausgebildet ist, die Kennzeichnungs- und/oder Signaleinrichtung (93) bei einem Abweichen des von der Waage (35) gemessenen Gewichts der vorbestimmten Anzahl von Teilportionen (63) von dem Lebensmittelportion-Sollgewicht zu einem Kennzeichnen der Lebensmittelportion (67) und/oder zu einem Auslösen eines für einen Benutzer wahrnehmbaren Signals anzusteuern;
insbesondere wobei die Steuereinrichtung (43) dazu ausgebildet ist, wenn das mittels der Waage (35) gemessene Gewicht der vorbestimmten Anzahl von Teilportionen (63) geringer ist als ein für die Lebensmittelportionen (67) vorgesehenes Lebensmittelportion-Sollgewicht, in Abhängigkeit von einer Differenz zwischen dem von der Waage (35) gemessenen Gewicht und dem Lebensmittelportion-Sollgewicht entweder die Stapelvorrichtung (11) zum Hinzufügen einer weiteren Teilportion (63) oder die Kennzeichnungs- und/oder Signaleinrichtung (93) zum Kennzeichnen der Lebensmittelportion (67) und/oder Auslösen des für einen Benutzer wahrnehmbaren Signals anzusteuern; und/oder insbesondere wobei eine minimale Differenz, bei welcher die Steuereinrichtung (43) die Stapelvorrichtung (11) zum Hinzufügen einer weiteren Teilportion (63) ansteuert, über eine Eingabeeinrichtung (107), insbesondere einen Touchscreen, der Steuereinrichtung (43) einstellbar ist.

10. System (17) nach einem der Ansprüche 6 bis 9,
wobei die Stapelvorrichtung (11) eine Messeinrichtung (45) zum Bestimmen einer Höhe (H) von auf dem Stapelabschnitt (69) abgelegten Teilportionen (63) aufweist und wobei das System (17) eine Aussortiereinrichtung (95) umfasst,
wobei die Steuereinrichtung (43) dazu ausgebildet ist, die Aussortiereinrichtung (95) zum Aussortieren der abgelegten Teilportionen (63) anzusteuern, wenn die bestimmte Höhe (H) eine vorgegebene oder vorgebbare Maximalhöhe überschreitet und das gemessene Gewicht der abgelegten Teilportionen (63) ein Lebensmittelportion-Sollgewicht unterschreitet.

11. System (17) nach einem der Ansprüche 6 bis 10,
wobei das System (17) zumindest eine erste Stapelvorrichtung (11) und eine zweite Stapelvorrichtung (49) sowie eine erste Waage (35) zum Bestimmen des Gewichts der zu der ersten Stapelvorrichtung (11) bewegten Teilportionen (63) und/oder der an der ersten Stapelvorrichtung (11) gebildeten Lebensmittelportion (67) und eine zweite Waage (36) zum Bestimmen des Gewichts der zu der zweiten Stapelvorrichtung (49) bewegten Teilportionen (63) und/oder der an der zweiten Stapelvorrichtung (49) gebildeten Lebensmittelportion (67) aufweist,
wobei die Transporteinrichtung (31) eine Verteileinrichtung (65) zum wahlweisen Verteilen der Teilportionen (63) zu der ersten Stapelvorrichtung (11) oder zu der zweiten Stapelvorrichtung (49) aufweist, wobei die Steuereinrichtung (43) dazu ausgebildet ist, die Verteileinrichtung (65) in Abhängigkeit von Messungen der ersten Waage (35) und der zweiten Waage (36) anzusteuern,
wobei die Steuereinrichtung (43) insbesondere dazu ausgebildet ist, die Verteileinrichtung (65) und/oder die Aufschneidevorrichtung (21) derart anzusteuern, dass Differenzen zwischen einem jeweiligen Gesamtgewicht der zu der ersten Stapelvorrichtung (11) und zu der zweiten Stapelvorrichtung (49) bewegten Teilportionen (63) ausgleichbar sind.

12. Verfahren zum Betreiben eines Systems (17) zum Verarbeiten von Lebensmittelprodukten (19), insbesondere Fleischprodukten, Wurst, Käse, Schinken und/oder Bacon, insbesondere zum Betreiben eines Systems (17) nach einem der Ansprüche 1 bis 11,
bei welchem
- riegelförmige Lebensmittelprodukte (19) in eine Schneidebene (S) einer Aufschneidevorrichtung (21) geführt werden und mittels eines in der Schneidebene (S) bewegbaren Messers (25) Scheiben (29) von dem Lebensmittelprodukt (19) abgetrennt werden,
- Teilportionen (63) auf einem Portionierabschnitt (27) der Aufschneidevorrichtung (21) gebildet werden, die eine oder mehrere abgetrennte Scheiben (29) umfassen,
- die Teilportionen (63) von einer Fördereinrichtung (33) des Portionierabschnitts (27), insbesondere einem Förderband (99), an eine Transporteinrichtung (31) übergeben und mittels der Transporteinrichtung (31) auf eine Produktauflage (51, 53) einer Stapelvorrichtung (11) bewegt werden,
- die nacheinander auf die Produktauflage (51, 53) transportierten Teilportionen (63) auf einem Stapelabschnitt (69) der Stapelvorrichtung (11) abgelegt werden und eine Lebensmittelportion (67) gebildet wird, die mehrere Teilportionen (63) umfasst, und
- das Gewicht der Teilportionen (63) und/oder der Lebensmittelportion (67) an der Transporteinrichtung (31) und/oder der Stapelvorrichtung (11) gemessen wird.

13. Verfahren nach Anspruch 12,
wobei eine Dicke der abgetrennten Scheiben (29) und/oder eine Anzahl der Scheiben (29) einer Teilportion (63) in Abhängigkeit von dem gemessenen Gewicht der Teilportionen (63) und/oder der Lebensmittelportion (67) angepasst wird; und/oder
wobei eine Regelung durchgeführt wird, bei welcher das Gewicht der Teilportionen (63) und/oder der Lebensmittelportion (67) die Regelgröße und die Dicke der Scheiben (29) und/oder die Anzahl der Scheiben (29) einer Teilportion (63) die Stellgröße ist; und/oder
wobei eine vorbestimmte Anzahl von Teilportionen (63) für die Lebensmittelportion (67) vorgesehen ist, wobei automatisch eine weitere Teilportion (63) zu der auf dem Stapelabschnitt (69) abgelegten vorbestimmten Anzahl von Teilportionen (63) hinzugefügt wird oder wobei die Lebensmittelportion (67) gekennzeichnet wird, wenn das gemessene Gewicht der vorbestimmten Anzahl von Teilportionen (63) das Lebensmittelportion-Sollgewicht unterschreitet; und/oder
wobei eine Höhe (H) der auf dem Stapelabschnitt (69) abgelegten Teilportionen (63) bestimmt wird, und wobei die durch die abgelegten Teilportionen (63) gebildete Lebensmittelportion (67) aussortiert wird, wenn die bestimmte Höhe (H) eine vorgegebene Maximalhöhe überschreitet und das gemessene Gewicht der Lebensmittelportion (67) ein Lebensmittelportion-Sollgewicht unterschreitet.

## Claims

1. System (17) for processing food products (19), in particular meat products, sausage, cheese, ham, and/or bacon,
comprising
- a slicing apparatus (21), in particular a high-performance slicer, which has a portioning section (27) and a blade (25) movable in a cutting plane (S), in particular a circular blade or scythe-like blade revolving in the cutting plane (S), and which is configured to cut-off slices (29) from bar-shaped food products (19) guided into the cutting plane (S) and to form part portions (63) in the portioning section (27), which comprise one or more cut-off slices (29),
- a transport device (31) adjoining the portioning section (27), wherein the portioning section (27) comprises a conveying device (33) which is configured to transfer the part portions (63) to the transport device (31), and
- a stacking apparatus (11) which has at least one product support (51, 53) movable between a feed position (Z) and a placement position (A) and a stacking section (69) arranged below the product support (51, 53),
wherein the stacking apparatus (11) is configured to place part portions (63) moved onto the product support (51, 53) onto the stacking section (69) by moving the product support (51, 53) from the feed position (Z) to the placement position (A) and to form a food portion (67) comprising a plurality of part portions (63) on the stacking section (69), in particular by stacking a plurality of part portions (63) moved one after the other onto the product support (51, 53) on top of one another,
wherein the transport device (31) is configured to transport the part portions (63) received from the conveying device (33) onto the product support (51, 53) of the stacking apparatus (11), and wherein the transport device (31) and/or the stacking apparatus (11) has/have a scale (35) for measuring the weight of the part portions (63) and/or the food portion (67).

2. System (17) according to claim 1,
wherein the scale (35) is integrated into the stacking apparatus (11); and/or
wherein the stacking section (69) comprises the scale (35), wherein the scale (35) is configured to measure the weight of the part portions (63) placed on the stacking section (69); and/or
wherein the product support (51, 53) and/or the stacking section (69) may be supportable on the ground via a frame (71, 73), in particular via a common frame (71), wherein the scale (35) is arranged beneath the product support (51, 53) and/or beneath the stacking section (69) at the frame (71, 73), wherein the frame (71, 73) has in particular at least three, in particular four, support sections (75) via which the product support (51, 53) and/or the stacking section (69) may be supportable on the ground, wherein the scale (35) is arranged at at least one of the support sections (75), in particular wherein the scale (35) comprises a plurality of load cells (37), wherein a respective load cell (37) is arranged at each of the support sections (75).

3. System (17) according to claim 1 or 2,
wherein the stacking apparatus (11) has a drive (39) for moving the product support (51, 53), wherein the drive (39) and/or the product support (51, 53) may be supportable on the ground via the scale (35);
in particular wherein the drive (39) comprises a motor (59) and a shaft (41) via which the product support (51, 53) is connected to the motor (59), wherein the shaft (41) is supported at the stacking apparatus (11) via at least one bearing (47), and wherein the scale (35) is arranged at the at least one bearing (47).

4. System (17) according to one of the preceding claims,
wherein the transport device (31) has a first transport path (T1) and a second transport path (T2), and wherein the transport device (31) comprises a distribution device (65) which is configured to selectively distribute part portions (63) received from the conveying device (33) to the first transport path (T1) or the second transport path (T2);
in particular, wherein the system (17) has a first scale (35) and a second scale (36),
wherein the first scale (35) is arranged at the first transport path (T1) and the second scale (36) is arranged at the second transport path (T2).

5. System (17) according to claim 4,
wherein the system (17) comprises a first stacking apparatus (11) and a second stacking apparatus (49),
wherein the transport device (31) is configured to move the part portions (63) via the first transport path (T1) onto the product support (51, 53) of the first stacking apparatus (11) and via the second transport path (T2) onto the product support (51, 53) of the second stacking apparatus (49), wherein the first stacking apparatus (11) and the second stacking apparatus (49) each have a respective scale (35).

6. System (17) according to one of the preceding claims,
wherein the system (17) comprises a control device (43) which is configured to adjust the operation of the system (17), in particular settings of the slicing apparatus (21) and/or the transport device (31), in dependence on a measurement result of the scale (35);
wherein the control device (43) is configured in particular to adjust a number of slices (29) of a part portion (63) and/or a thickness of the cut-off slices (29) in dependence on the measurement result of the scale (35); and/or
wherein the control device (43) is in particular configured to perform a regulation in which the number of slices (29) of a part portion (63) or the thickness of the slices (29) is the control variable and the weight of the part portions (63) and/or the food portion (67) measured by the scale (35) is the regulation variable; and/or
wherein the control device (43) is configured in particular to perform trend regulation based on the weight of a plurality of consecutive part portions (63) and/or food portions (67); and/or wherein the control device (43) is in particular configured to adjust a cutting speed of the slicing apparatus (21) and/or a transport speed of the transport device (31) during the formation of a food portion (67) depending on the measurement of the scale (35).

7. System (17) according to claim 6,
wherein the slicing apparatus (21) comprises an optical scale (77) that is configured to determine a surface structure (79) and a contour (81) of a front product end (89) of the food product (19) facing the cutting plane (S), wherein the control device (43) is configured
- to determine a density of the slice (29) to be cut off from the front product end (89) based on the determined surface structure (79),
- to determine a desired thickness (D) of the slice (29) to be cut off based on the determined density and the determined contour (81), at which desired thickness (D) the cut-off slice (29) has a predefined desired weight, and
- to control the slicing apparatus (21) to cut off the slice (29) with the desired thickness (D),
wherein the control device (43) is further configured to adapt the determination of the density and/or of the desired thickness (D) in the event of a deviation of the measurement of the scale (35) from a desired part portion weight determined by the number of slices (29) and/or from a desired food portion weight,
wherein the control device (43) is configured in particular to execute a self-learning algorithm for determining the density and/or the desired thickness (D) of the slice (29) to be cut-off from the front product end (89) and to optimize it taking into account the measurement of the scale (35).

8. System (17) according to claim 7,
wherein the control device (43) is configured to determine a fat proportion (83), a meat proportion (85), and/or a bone proportion (87) within the contour (81) of the front product end (89) based on the surface structure (79) and to calculate the density and/or the desired thickness (D) of the slice (29) to be cut off from the front product end (89) in dependence on the respective proportion and/or the respective proportions and/or to look up the density and/or the desired thickness (D) of the slice (29) to be cut off from the front product end (89) in a look-up table, wherein the control device (43) is configured in particular to adapt parameters for calculating the density and/or the look-up table depending on the measurement of the scale (35).

9. System (17) according to one of claims 6 to 8,
wherein a predetermined number of part portions (63) is provided for the food portions (67), wherein the control device (43) is configured to control the stacking apparatus (11) to add a further part portion (63) after the predetermined number of part portions (63) has been placed, if the weight of the predetermined number of part portions (63) measured by the scale (35) is less than a desired food portion weight provided for the food portions (67);
and/or wherein the system (17) has a marking and/or signaling device (93), wherein the control device (43) is configured to control the marking and/or signaling device (93) to mark the food portion (67) and/or to trigger a signal perceptible to a user if the weight of the predetermined number of part portions (63) measured by the scale (35) deviates from the desired food portion weight;
in particular wherein the control device (43) is configured to, if the weight of the predetermined number of part portions (63) measured by the scale (35) is less than a desired food portion weight specified for the food portions (67), in dependence on a difference between the weight measured by the scale (35) and the desired food portion weight, either control the stacking apparatus (11) to add a further part portion (63) or to control the marking and/or signaling device (93) to mark the food portion (67) and/or trigger the signal perceptible to a user; and/or
in particular, wherein a minimum difference at which the control device (43) controls the stacking apparatus (11) to add a further part portion (63) can be set via an input device (107), in particular a touch screen, of the control device (43).

10. System (17) according to any one of claims 6 to 9,
wherein the stacking apparatus (11) has a measuring device (45) for determining a height (H) of part portions (63) placed on the stacking section (69), and wherein the system (17) comprises a sorting-out device (95),
wherein the control device (43) is configured to control the sorting-out device (95) for sorting out the placed part portions (63) when the determined height (H) exceeds a predetermined or predeterminable maximum height and the measured weight of the placed part portions (63) falls below a desired weight for a food portion.

11. System (17) according to any one of claims 6 to 10,
wherein the system (17) comprises at least a first stacking apparatus (11) and a second stacking apparatus (49) as well as a first scale (35) for determining the weight of the part portions (63) moved to the first stacking apparatus (11) and/or the food portion (67) formed at the first stacking apparatus (11), and a second scale (36) for determining the weight of the part portions (63) moved to the second stacking apparatus (49) and/or the food portion (67) formed at the second stacking apparatus (49), wherein the transport device (31) has a distribution device (65) for selectively distributing the part portions (63) to the first stacking apparatus (11) or to the second stacking apparatus (49),
wherein the control device (43) is configured to control the distribution device (65) in dependence on measurements of the first scale (35) and the second scale (36),
wherein the control device (43) is configured in particular to control the distribution device (65) and/or the slicing apparatus (21) such that differences between a respective total weight of the part portions (63) moved to the first stacking apparatus (11) and to the second stacking apparatus (49) can be compensated.

12. Method for operating a system (17) for processing food products (19), in particular meat products, sausage, cheese, ham, and/or bacon, in particular for operating a system (17) according to one of claims 1 to 11,
in which
- bar-shaped food products (19) are guided into a cutting plane (S) of a slicing apparatus (21) and slices (29) are cut off from the food product (19) by means of a blade (25) movable in the cutting plane (S),
- part portions (63) that comprise one or more cut-off slices (29) are formed on a portioning section (27) of the slicing apparatus (21),
- the part portions (63) are transferred from a conveying device (33) of the portioning section (27), in particular a conveyor belt (99), to a transport device (31) and are moved by means of the transport device (31) onto a product support (51, 53) of a stacking apparatus (11),
- the part portions (63) successively transported onto the product support (51, 53) are placed on a stacking section (69) of the stacking apparatus (11) and a food portion (67) is formed that comprises a plurality of part portions (63), and
- the weight of the part portions (63) and/or of the food portion (67) is measured at the transport device (31) and/or the stacking apparatus (11).

13. Method according to claim 12,
wherein a thickness of the cut-off slices (29) and/or a number of slices (29) of a part portion (63) is adapted in dependence on the measured weight of the part portions (63) and/or the food portion (67); and/or
wherein a regulation is performed in which the weight of the part portions (63) and/or the food portion (67) is the regulation variable and the thickness of the slices (29) and/or the number of slices (29) of a part portion (63) is the control variable; and/or
wherein a predetermined number of part portions (63) is provided for the food portion (67), wherein a further part portion (63) is automatically added to the predetermined number of part portions (63) placed on the stacking section (69) or wherein the food portion (67) is marked when the measured weight of the predetermined number of part portions (63) falls below the desired weight of the food portion; and/or
wherein a height (H) of the part portions (63) placed on the stacking section (69) is determined, and wherein the food portion (67) formed by the placed part portions (63) is sorted out if the determined height (H) exceeds a predetermined maximum height and the measured weight of the food portion (67) falls below a desired food portion weight.

## Revendications

1. Système (17) pour traiter des produits alimentaires (19), en particulier des produits à base de viande, des saucisses, du fromage, du jambon et/ou du bacon,
comprenant
- un dispositif de découpe (21), en particulier une trancheuse à haute performance, qui présente une section de portionnement (27) et un couteau (25) mobile dans un plan de coupe (S), en particulier un couteau circulaire ou un couteau en forme de faucille tournant dans le plan de coupe (S), et qui est conçu pour séparer des tranches (29) de produits alimentaires (19) en forme de barres guidés dans le plan de coupe (S) et former dans la section de portionnement (27) des portions partielles (63) qui comprennent une ou plusieurs tranches séparées (29),
- un dispositif de transport (31) raccordé à la section de portionnement (27), la section de portionnement (27) comprenant un dispositif de convoyage (33) qui est conçu pour transférer les portions partielles (63) au dispositif de transport (31), et
- un dispositif d'empilage (11) qui présente au moins un support de produit (51, 53) mobile entre une position d'alimentation (Z) et une position de dépose (A) ainsi qu'une section d'empilage (69) disposée en dessous du support de produit (51, 53),
le dispositif d'empilage (11) étant conçu pour déposer les portions partielles (63) déplacées sur le support de produit (51, 53) en déplaçant le support de produit (51, 53) de la position d'alimentation (Z) à la position de dépose (A) sur la section d'empilage (69) et à former sur la section d'empilage (69) une portion alimentaire (67) comprenant plusieurs portions partielles (63), en particulier en empilant les unes sur les autres plusieurs portions partielles (63) déplacées les unes après les autres sur le support de produit (51, 53),
le dispositif de transport (31) étant conçu pour transporter les portions partielles (63) reçues par le dispositif de convoyage (33) sur le support de produit (51, 53) du dispositif d'empilage (11), et
le dispositif de transport (31) et/ou le dispositif d'empilage (11) comportant une balance (35) pour mesurer le poids des portions partielles (63) et/ou de la portion alimentaire (67).

2. Système (17) selon la revendication 1,
la balance (35) étant intégrée dans le dispositif d'empilage (11) ; et/ou
la section d'empilage (69) comportant la balance (35), la balance (35) étant conçue pour mesurer le poids des portions partielles (63) déposées sur la section d'empilage (69) ; et/ou
le support de produit (51, 53) et/ou la section d'empilage (69) pouvant être soutenus au sol par un châssis (71, 73), en particulier par un châssis commun (71), la balance (35) étant disposée sous le support de produit (51, 53) et/ou en dessous de la section d'empilage (69) sur le châssis (71, 73), le châssis (71, 73) comportant en particulier au moins trois, en particulier quatre sections de support (75) sur lesquelles le support de produit (51, 53) et/ou la section d'empilage (69) peuvent être soutenues au sol, la balance (35) étant disposée sur au moins l'une des sections de support (75), la balance (35) comprenant en particulier plusieurs cellules de pesée (37), une cellule de pesée (37) respective étant disposée sur chacune des sections de support (75).

3. Système (17) selon la revendication 1 ou 2,
dans lequel le dispositif d'empilage (11) comprend un entraînement (39) pour déplacer le support de produit (51, 53), l'entraînement (39) et/ou le support de produit (51, 53) pouvant être soutenus au sol par la balance (35) ;
en particulier l'entraînement (39) comprenant un moteur (59) et un arbre (41) par l'intermédiaire duquel le support de produit (51, 53) est relié au moteur (59), l'arbre (41) étant monté sur le dispositif d'empilage (11) par l'intermédiaire d'au moins un palier (47), et la balance (35) étant disposée sur le au moins un palier (47).

4. Système (17) selon l'une des revendications précédentes,
le dispositif de transport (31) comportant un premier trajet de transport (T1) et un deuxième trajet de transport (T2), et le dispositif de transport (31) comprenant un dispositif de distribution (65) qui est conçu pour répartir les portions partielles (63) reçues du dispositif de convoyage (33) au choix sur le premier trajet de transport (T1) ou sur le deuxième trajet de transport (T2) ;
en particulier, le système (17) comportant une première balance (35) et une deuxième balance (36), la première balance (35) étant disposée sur le premier trajet de transport (T1) et la deuxième balance (36) étant disposée sur le deuxième trajet de transport (T2).

5. Système (17) selon la revendication 4,
le système (17) comportant un premier dispositif d'empilage (11) et un deuxième dispositif d'empilage (49),
le dispositif de transport (31) étant conçu pour acheminer les portions partielles (63) via le premier trajet de transport (T1) vers le support de produit (51, 53) du premier dispositif d'empilage (11) et, via le deuxième trajet de transport (T2), sur le support de produit (51, 53) du deuxième dispositif d'empilage (49),
le premier dispositif d'empilage (11) et le deuxième dispositif d'empilage (49) comportant notamment chacun une balance (35).

6. Système (17) selon l'une des revendications précédentes,
le système (17) comportant un dispositif de commande (43) qui est conçu pour adapter le fonctionnement du système (17), en particulier les réglages du dispositif de découpe (21) et/ou du dispositif de transport (31), en fonction d'un résultat de mesure de la balance (35) ;
le dispositif de commande (43) étant notamment conçu pour adapter le nombre de tranches (29) d'une portion partielle (63) et/ou l'épaisseur des tranches coupées (29) en fonction du résultat de mesure de la balance (35) ; et/ou
le dispositif de commande (43) étant notamment conçu pour effectuer une régulation dans laquelle le nombre de tranches (29) d'une portion partielle (63) ou l'épaisseur des tranches (29) constitue la grandeur de réglage et le poids des portions partielles (63) et/ou de la portion alimentaire (67) mesuré à l'aide de la balance (35) constitue la grandeur réglée ; et/ou
le dispositif de commande (43) étant en particulier conçu pour effectuer une régulation de tendance sur la base du poids de plusieurs portions partielles successives (63) et/ou portions alimentaires (67) ; et/ou
le dispositif de commande (43) étant notamment conçu pour adapter, en fonction de la mesure effectuée par la balance (35) pendant la formation d'une portion alimentaire (67), une vitesse de coupe du dispositif de découpe (21) et/ou une vitesse de transport du dispositif de transport (31).

7. Système (17) selon la revendication 6,
dans lequel le dispositif de découpe (21) comprend une balance optique (77) qui est conçue pour déterminer une structure de surface (79) ainsi qu'un contour (81) d'une extrémité avant (89) du produit alimentaire (19) tournée vers le plan de coupe (S), le dispositif de commande (43) étant conçu pour
- déterminer, à partir de la structure de surface (79) déterminée, une densité de la tranche (29) à séparer de l'extrémité avant (89) du produit,
- déterminer, à l'aide de la densité déterminée et du contour déterminé (81), une épaisseur de consigne (D) de la tranche à séparer (29), pour laquelle la tranche séparée (29) présente un poids de consigne prédéfini, et
- commander le dispositif de découpe (21) pour séparer la tranche (29) avec l'épaisseur de consigne (D),
le dispositif de commande (43) étant en outre conçu pour adapter la détermination de la densité et/ou de l'épaisseur de consigne (D) en cas d'écart entre la mesure de la balance (35) et un poids de portion partielle de consigne déterminé par le nombre de tranches (29) et/ou un poids de portion alimentaire de consigne,
le dispositif de commande (43) étant notamment conçu pour exécuter un algorithme d'auto-apprentissage afin de déterminer la densité et/ou l'épaisseur de consigne (D) de la tranche (29) à séparer de l'extrémité avant du produit (89) et pour l'optimiser en tenant compte de la mesure de la balance (35).

8. Système (17) selon la revendication 7,
le dispositif de commande (43) étant conçu pour déterminer, à partir de la structure de surface (79), une teneur en graisse (83), une teneur en viande (85) et/ou une teneur en os (87) à l'intérieur du contour (81) de l'extrémité avant (89) du produit et à calculer la densité et/ou l'épaisseur de consigne (D) de la tranche (29) à séparer de l'extrémité avant (89) du produit en fonction de la ou des proportions respectives et/ou à les rechercher dans un tableau de référence,
le dispositif de commande (43) étant notamment conçu pour adapter les paramètres de calcul de la densité et/ou la table de référence en fonction de la mesure effectuée par la balance (35).

9. Système (17) selon l'une des revendications 6 à 8,
dans lequel un nombre prédéterminé de portions partielles (63) est prévu pour les portions alimentaires (67), le dispositif de commande (43) étant conçu pour commander le dispositif d'empilage (11) après le dépôt du nombre prédéterminé de portions partielles (63) pour ajouter une autre portion partielle (63) lorsque le poids mesuré par la balance (35) du nombre prédéterminé de portions partielles (63) est inférieur à un poids de portion alimentaire de consigne prévu pour les portions alimentaires (67) ;
et/ou le système (17) comportant un dispositif de marquage et/ou de signalisation (93), le dispositif de commande (43) étant conçu pour commander le dispositif de marquage et/ou de signalisation (93) pour marquer la portion alimentaire (67) et/ou déclencher un signal perceptible par un utilisateur en cas d'écart entre le poids mesuré par la balance (35) du nombre prédéfini de portions partielles (63) et le poids de consigne des portions alimentaires ;
en particulier, le dispositif de commande (43) étant conçu de telle sorte que, lorsque le poids mesuré à l'aide de la balance (35) du nombre prédéfini de portions partielles (63) est inférieur à un poids de portion alimentaire de consigne prévu pour les portions alimentaires (67), en fonction d'une différence entre le poids mesuré par la balance (35) et le poids de consigne de la portion alimentaire, soit le dispositif d'empilage (11) pour ajouter une autre portion partielle (63), soit le dispositif de marquage et/ou de signalisation (93) pour marquer la portion alimentaire (67) et/ou déclencher le signal perceptible par un utilisateur ; et/ou
en particulier, une différence minimale à laquelle le dispositif de commande (43) commande le dispositif d'empilage (11) pour ajouter une autre portion partielle (63) pouvant être réglée via un dispositif de saisie (107), en particulier un écran tactile, du dispositif de commande (43).

10. Système (17) selon l'une des revendications 6 à 9,
dans lequel le dispositif d'empilage (11) comprend un dispositif de mesure (45) pour déterminer une hauteur (H) de portions partielles (63) déposées sur la section d'empilage (69) et dans lequel le système (17) comprend un dispositif de tri (95),
le dispositif de commande (43) étant conçu pour commander le dispositif de tri (95) afin de trier les portions partielles déposées (63) lorsque la hauteur déterminée (H) dépasse une hauteur maximale prédéfinie ou pouvant être prédéfinie et que le poids mesuré des portions partielles déposées (63) est inférieur au poids de consigne d'une portion alimentaire.

11. Système (17) selon l'une des revendications 6 à 10,
le système (17) comprenant au moins un premier dispositif d'empilage (11) et un deuxième dispositif d'empilage (49) ainsi qu'une première balance (35) pour déterminer le poids des portions partielles (63) déplacées vers le premier dispositif d'empilage (11) et/ou de la portion alimentaire (67) formée au niveau du premier dispositif d'empilage (11) et une deuxième balance (36) pour déterminer le poids des portions partielles (63) déplacées vers le deuxième dispositif d'empilage (49) et/ou de la portion alimentaire (67) formée au niveau du deuxième dispositif d'empilage (49),
le dispositif de transport (31) comportant un dispositif de distribution (65) pour distribuer de manière sélective les portions partielles (63) vers le premier dispositif d'empilage (11) ou vers le deuxième dispositif d'empilage (49),
le dispositif de commande (43) étant conçu pour commander le dispositif de distribution (65) en fonction des mesures de la première balance (35) et de la deuxième balance (36),
le dispositif de commande (43) étant notamment conçu pour commander le dispositif de distribution (65) et/ou le dispositif de découpe (21) de telle sorte que les différences entre le poids total respectif des portions partielles (63) acheminées vers le premier dispositif d'empilage (11) et vers le deuxième dispositif d'empilage (49) puissent être compensées.

12. Procédé pour faire fonctionner un système (17) destiné à traiter des produits alimentaires (19), en particulier des produits à base de viande, de la charcuterie, du fromage, du jambon et/ou du bacon, en particulier pour faire fonctionner un système (17) selon l'une des revendications 1 à 11,
dans lequel
- des produits alimentaires en forme de barres (19) sont amenés dans un plan de coupe (S) d'un dispositif de découpe (21) et des tranches (29) sont découpées du produit alimentaire (19) à l'aide d'un couteau (25) mobile dans le plan de coupe (S),
- des portions partielles (63) sont formées sur une section de portionnement (27) du dispositif de découpe (21), lesquelles comprennent une ou plusieurs tranches séparées (29),
- les portions partielles (63) sont transférées par un dispositif de convoyage (33) de la section de portionnement (27), en particulier une bande transporteuse (99), vers un dispositif de transport (31) et sont déplacées au moyen du dispositif de transport (31) vers un support de produit (51, 53) d'un dispositif d'empilage (11),
- les portions partielles (63) transportées les unes après les autres sur le support de produit (51, 53) sont déposées sur une section d'empilage (69) du dispositif d'empilage (11) et une portion alimentaire (67) comprenant plusieurs portions partielles (63) est formée, et
- le poids des portions partielles (63) et/ou de la portion alimentaire (67) est mesuré au niveau du dispositif de transport (31) et/ou du dispositif d'empilage (11).

13. Procédé selon la revendication 12,
dans lequel une épaisseur des tranches séparées (29) et/ou un nombre des tranches (29) d'une portion partielle (63) est ajusté en fonction du poids mesuré des portions partielles (63) et/ou de la portion alimentaire (67); et/ou
dans lequel un réglage est effectué, dans lequel le poids des portions partielles (63) et/ou de la portion alimentaire (67) est la grandeur réglée et l'épaisseur des tranches (29) et/ou le nombre de tranches (29) d'une portion partielle (63) est la grandeur de réglage ; et/ou
un nombre prédéterminé de portions partielles (63) étant prévu pour la portion alimentaire (67), une portion partielle supplémentaire (63) étant automatiquement ajoutée au nombre prédéterminé de portions partielles (63) déposées sur la section d'empilage (69) ou dans lequel la portion alimentaire (67) est marquée lorsque le poids mesuré du nombre prédéterminé de portions partielles (63) est inférieur au poids de consigne de la portion alimentaire ; et/ou
une hauteur (H) des portions partielles (63) déposées sur la section d'empilage (69) étant déterminée, et la portion alimentaire (67) formée par les portions partielles déposées (63) étant triée lorsque la hauteur déterminée (H) dépasse une hauteur maximale prédéfinie et que le poids mesuré de la portion alimentaire (67) est inférieur à un poids de consigne de la portion alimentaire.
